# EUROPEAN PATENT APPLICATION

(11) **EP 2 634 894 A1**
(43) Date of publication of application: **04.09.2013**
(21) Application number: 11836203.7
(22) Date of filing: 24.10.2011
(51) Int. Cl.: H02K 3/28

(54) **ROTATING ELECTRIC MACHINE**

(30) Priority: 27.10.2010 JP 2010241075
(71) Applicant: Hitachi Automotive Systems, Ltd., Hitachinaka-shi, Ibaraki 312-8503 (JP)
(72) Inventor: ISHIKAWA Toshio, Hitachinaka-shi Ibaraki 312-8503 (JP); HONMA Masahiko, Hitachinaka-shi Ibaraki 312-8503 (JP); IZUMI Mitsuaki, Hitachinaka-shi Ibaraki 312-8503 (JP); KIMURA Yasuhiko, Hitachinaka-shi Ibaraki 312-8503 (JP)
(74) Representative: MERH-IP Matias Erny Reichl Hoffmann
(86) International application number: PCT/JP2011/074416
(87) International publication number: WO 2012/057069

(57) **Abstract**

An object of the present invention is to provide a low-priced rotating electric machine, which generates low noise, having high output and high efficiency by decreasing and balancing the inductance of each phase even in a case where a stator, in which stator windings of mutually-different phases are arranged inside slots of a stator iron core, is used. According to the present invention, a stator winding (7) having a configuration in which the number of slots of each phase for each pole is two or more and configured to have a fractional pitch including six windings having mutually-different electrical angles is divided into at least two for each phase in the slot so as to balance the inductance, and the stator windings (7) of at least two phases having mutually-different electrical angles are connected in series. From this, the number of used rectifier devices such as diodes (201 and 202) is decreased, and the cost is lowered by decreasing the number of components and the number of assembly processes.

## Description

### Technical Field

The present invention relates to rotating electric machines such as a power generator and a motor.

### Background Art

In recent years, energy saving progresses on the vehicle side in accordance with environment regulations and as for rotating electric machines for vehicles, the rotating electric machines having high output and high efficiency are required to be provided at a low price, and particularly, a stator having remarkable advantages has been proposed.

Generally, a stator used in a rotating electric machine is configured by a stator iron core in which a plurality of slots are open on the inner circumferential face in the circumferential direction and a stator winding that is formed in the shape of waves by a continuous wire. The winding pitch of a toroid coil used for the stator winding is full pitch winding, and the stator winding is inserted into the slots over a plurality of teeth. The rotator is arranged such that claw portions of one pair of rotator iron cores each having claw-shaped magnetic poles face each other, and one claw-shaped magnetic pole is engaged with the other claw-shaped magnetic pole.

Here, there is a technology in which, by setting the winding pitch of the toroid coil of the stator winding to the fractional pitch winding and employing a winding form in which a plurality of toroid coils stretches from conventional wave winding, a resistance value decreases due to shortening the length of the coil, and a rotating electric machine having high output and high efficiency is supplied at a low price (see PTL 1).

In addition, by configuring two sets of three-phase windings having electrical angles of which the phases are shifted from each other by 30 degrees using a stator in which the number of slots of phases is two for each pole, a rotating electric machine having a low noise level owing to a decrease in the magnetic exciting force is realized.

### Citation List

### Patent Literature

PTL 1: Japanese OPI Publication No. 2009-247196

### Summary of Invention

### Technical Problem

According to PTL 1, in a case where a stator winding configured by a continuous wire is configured, coils having mutually-different shapes are arranged in the same slot, the coils having mutually-different shapes are arranged to be divided into an inner layer and an outer layer, and accordingly, the coils are arranged in a state in which each phase is deviated, whereby unbalance of inductance of each phase occurs in the three-phase winding.

When the inductance of each phase is unbalanced, power generation currents are different from one another, and the heating values of the stator winding and diodes are unbalanced, whereby the quality and the characteristics are degraded due to an increase in the temperature of the coils and the diodes, an increase in the magnetic sound due to an increase in the magnetic exciting force, and the like. In addition, in a delta connection, currents are consumed as copper loss of the stator winding in accordance with an increase in the circulation current circulating within the connection, and accordingly, the power generation efficiency is lowered.

In addition, since the stator has two sets of three-phase windings, two sets of rectifiers are necessary, and the number of rectification devices (diodes and switching elements) used in the rectifiers doubles, whereby the cost increases.

The present invention is contrived in consideration of the above-described points, and an object thereof is to provide a low-priced rotating electric machine, which generates low noise, having high output and high efficiency by decreasing and balancing the inductance of each phase even in a case where a stator, in which stator windings of mutually-different phases are arranged inside slots of a stator iron core, is used.

### Solution to Problem

In a rotating electric machine according to the present invention for solving above-described problem, a configuration is employed in which a stator winding wound in a plurality of slots of a stator iron core is divided into at least two for each phase inside the slots, and stator windings of at least two phases having mutually-different electrical angles are connected in series.

### Advantageous Effects of Invention

According to the present invention, even in a case where a stator, in which stator windings of mutually-different phases are arranged inside slots of a stator iron core are arranged, is used, the inductance of each phase is balanced, and high output and high efficiency can be realized, and, by connecting stator windings having mutually-different electrical angles in series, the number of rectification devices such as diodes and switching devices such as MOS-FETs, which are used, can decrease. Accordingly, owing to the decrease in the number of components and the number of assembly processes, the cost can be reduced, whereby a low-priced rotating electric machine can be provided. In addition, in the case of a power generator, a rectification device equivalent to the three-phase windings and voltage control, and, in the case of a motor, an inverter equivalent to the three-phase windings and a motor driving system can be used without any change, and only the rotating electric machine may be changed.

This specification incorporates the contents described in the specification and/or diagrams of Japanese Patent Application 2010-2010-241075 on which the priority of this application is based.

### Brief Description of Drawings

[FIG. 1] FIG. 1 is a cross-sectional view that illustrates the whole configuration of a rotating electric machine according to a first embodiment of the present invention.
[FIG. 2] FIG. 2 illustrates a perspective view and a circuit diagram of a U1-phase stator winding of a conventional stator that is wound by fractional pitch winding.
[FIG. 3] FIG. 3 is a layout drawing of stator windings of each phase viewed from the inner circumference side of a stator iron core of a conventional stator that is wound by fractional pitch winding.
[FIG. 4] FIG. 4 is a layout drawing of coils of each phase inside slots of a conventional stator that is wound by fractional pitch winding.
[FIG. 5] FIG. 5 is a perspective view of a stator of the rotating electric machine according to the first embodiment of the present invention.
[FIG. 6] FIG. 6 illustrates a perspective view and a circuit diagram of a U1-phase stator winding of the stator of the rotating electric machine according to the first embodiment of the present invention.
[FIG. 7A] FIG. 7A is a layout drawing of a stator winding A of each phase viewed from the inner circumference side of a stator iron core of the stator of the rotating electric machine according to the first embodiment of the present invention.
[FIG. 7B] FIG. 7B is a layout drawing of a stator winding B of each phase viewed from the inner circumference side of the stator iron core of the stator of the rotating electric machine according to the first embodiment of the present invention.
[FIG. 8] FIG. 8 is a layout drawing of coils of each phase inside slots of the stator of the rotating electric machine according to the first embodiment of the present invention.
[FIG. 9] FIG. 9 is a diagram of a hexagonal connection in the stator of the rotating electric machine according to the first embodiment of the present invention.
[FIG. 10] FIG. 10 is a diagram of a radial connection in the stator of the rotating electric machine according to the first embodiment of the present invention.
[FIG. 11] FIG. 11 illustrates a perspective view and a circuit diagram of a U1-phase stator winding of a stator of a rotating electric machine according to a second embodiment of the present invention.
[FIG. 12A] FIG. 12A is a layout drawing of a stator winding C of each phase viewed from the inner circumference side of a stator iron core of the stator of the rotating electric machine according to the second embodiment of the present invention.
[FIG. 12B] FIG. 12B is a layout drawing of a stator winding D of each phase viewed from the inner circumference side of the stator iron core of the stator of the rotating electric machine according to the second embodiment of the present invention.
[FIG. 13] FIG. 13 is a layout drawing of coils of each phase inside slots of the stator of the rotating electric machine according to the second embodiment of the present invention.
[FIG. 14] FIG. 14 is a diagram of a hexagonal connection in the stator of the rotating electric machine according to the second embodiment of the present invention.
[FIG. 15] FIG. 15 is a diagram of a radial connection in the stator of the rotating electric machine according to the second embodiment of the present invention.
[FIG. 16] FIG. 16 is a perspective view of a stator of the rotating electric machine according to a third embodiment of the present invention.
[FIG. 17] FIG. 17 illustrates a perspective view and a circuit diagram of a U-phase stator winding of a stator of the rotating electric machine according to the third embodiment of the present invention.
[FIG. 18] FIG. 18 is a layout drawing of a stator winding of each phase viewed from the inner circumference side of a stator iron core of the stator of the rotating electric machine according to the third embodiment of the present invention.
[FIG. 19] FIG. 19 is a layout drawing of coils of each phase inside slots of the stator of the rotating electric machine according to the third embodiment of the present invention.
[FIG. 20] FIG. 20 is a diagram of a hexagonal connection in the stator of the rotating electric machine according to the third embodiment of the present invention.
[FIG. 21] FIG. 21 is a diagram of a radial connection in the stator of the rotating electric machine according to the third embodiment of the present invention.
[FIG. 22] FIG. 22 illustrates a perspective view and a circuit diagram of a U-phase stator winding of a stator of a rotating electric machine according to a fourth embodiment of the present invention.
[FIG. 23] FIG. 23 is a layout drawing of a stator winding of each phase viewed from the inner circumference side of a stator iron core of the stator of the rotating electric machine according to the fourth embodiment of the present invention.
[FIG. 24] FIG. 24 is a layout drawing of coils of each phase inside slots of the stator of the rotating electric machine according to the fourth embodiment of the present invention.
[FIG. 25] FIG. 25 is a diagram of a hexagonal connection in the stator of the rotating electric machine according to the fourth embodiment of the present invention.
[FIG. 26] FIG. 26 is a diagram of a radial connection in the stator of the rotating electric machine according to the fourth embodiment of the present invention.
[FIG. 27] FIG. 27 illustrates a perspective view and a circuit diagram of a U-phase stator winding of a stator of a rotating electric machine according to a fifth embodiment of the present invention.
[FIG. 28] FIG. 28 is a layout drawing of a stator winding of each phase viewed from the inner circumference side of a stator iron core of the stator of the rotating electric machine according to the fifth embodiment of the present invention.
[FIG. 29] FIG. 29 is a layout drawing of coils of each phase inside slots of the stator of the rotating electric machine according to the fifth embodiment of the present invention.
[FIG. 30] FIG. 30 is a diagram of a hexagonal connection in the stator of the rotating electric machine according to the fifth embodiment of the present invention.
[FIG. 31] FIG. 31 is a diagram of a radial connection in the stator of the rotating electric machine according to the fifth embodiment of the present invention.
[FIG. 32] FIG. 32 illustrates a perspective view and a circuit diagram of a U-phase stator winding of a stator of a rotating electric machine according to a sixth embodiment of the present invention.
[FIG. 33] FIG. 33 is a layout drawing of a stator winding of each phase viewed from the inner circumference side of a stator iron core of the stator of the rotating electric machine according to the sixth embodiment of the present invention.
[FIG. 34] FIG. 34 is a layout drawing of coils of each phase inside slots of the stator of the rotating electric machine according to the sixth embodiment of the present invention.
[FIG. 35] FIG. 35 is a diagram of a hexagonal connection in the stator of the rotating electric machine according to the sixth embodiment of the present invention.
[FIG. 36] FIG. 36 is a diagram of a radial connection in the stator of the rotating electric machine according to the sixth embodiment of the present invention.
[FIG. 37] FIG. 37 illustrates a perspective view and a circuit diagram of a U-phase stator winding of a stator of a rotating electric machine according to a seventh embodiment of the present invention.
[FIG. 38] FIG. 38 is a layout drawing of a stator winding of each phase viewed from the inner circumference side of a stator iron core of the stator of the rotating electric machine according to the seventh embodiment of the present invention.
[FIG. 39] FIG. 39 is a layout drawing of coils of each phase inside slots of the stator of the rotating electric machine according to the seventh embodiment of the present invention.
[FIG. 40] FIG. 40 is a diagram of a triangular connection in the stator of the rotating electric machine according to the seventh embodiment of the present invention.
[FIG. 41] FIG. 41 is a diagram of a radial connection in the stator of the rotating electric machine according to the seventh embodiment of the present invention.
[FIG. 42] FIG. 42 illustrates a perspective view and a circuit diagram of a U-phase stator winding of a stator of a rotating electric machine according to an eighth embodiment of the present invention.
[FIG. 43] FIG. 43 is a layout drawing of a stator winding of each phase viewed from the inner circumference side of a stator iron core of the stator of the rotating electric machine according to the eighth embodiment of the present invention.
[FIG. 44] FIG. 44 is a layout drawing of coils of each phase inside slots of the stator of the rotating electric machine according to the eighth embodiment of the present invention.
[FIG. 45] FIG. 45 is a diagram of a triangular connection in the stator of the rotating electric machine according to the eighth embodiment of the present invention.
[FIG. 46] FIG. 46 is a diagram of a radial connection in the stator of the rotating electric machine according to the eighth embodiment of the present invention.
[FIG. 47] FIG. 47 is a diagram that illustrates a comparative example of a system using a rotating electric machine as a motor (a stator of a three-phase winding).
[FIG. 48] FIG. 48 is a diagram that illustrates a comparative example of a system using a rotating electric machine as a motor (a stator including two sets of three-phase windings).
[FIG. 49] FIG. 49 is a diagram that illustrates an example of a system using a rotating electric machine according to the present invention as a motor.
[FIG. 50] FIG. 50 is a diagram of a connection of a stator including two three-phase windings (Y connection) having the phases of electrical angles shifted by 30 degrees from each other.
[FIG. 51] FIG. 51 is a diagram of a connection of a stator including two three-phase windings (Δ connection) having the phases of electrical angles shifted by 30 degrees from each other.

### Description of Embodiments

### [First Embodiment]

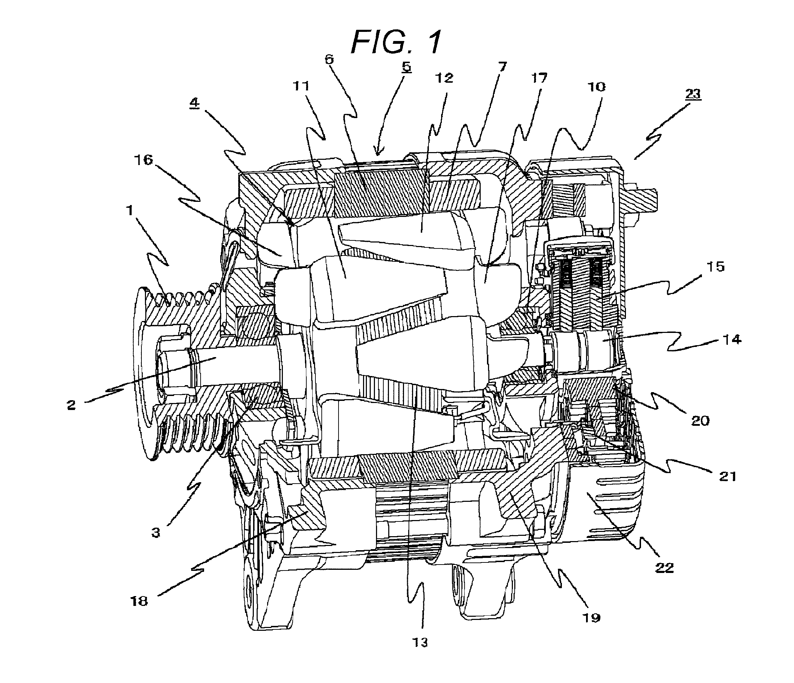

Hereinafter, the configuration of a rotating electric machine according to a first embodiment of the present invention will be described with reference to FIGS. 1 to 10.

First, the configuration of the whole rotating electric machine according to this embodiment will be described with reference to FIG. 1. Here, as the rotating electric machine, a vehicle AC power generator will be described as an example.

FIG. 1 is a cross-sectional view that illustrates the whole configuration of the rotating electric machine according to the first embodiment of the present invention.

The vehicle AC power generator 23 includes a rotator 4 and a stator 5. The rotator 4 includes a field wiring 13 in a center portion of a shaft 2, and, on both sides thereof, rotator iron cores each formed by a front-side claw-shaped magnetic pole 11 and a rear-side claw-shaped magnetic pole 12, which are molded using a magnetic material, are arranged to be interposed between both sides so as to cover the field winding 13. The front-side claw-shaped magnetic pole 11 and the rear-side claw-shaped magnetic pole 12 are arranged such that claw portions thereof face each other, and one claw-shaped magnetic pole is engaged with the other claw-shaped magnetic pole.

The rotator 4 is arranged to face the stator on the inner circumference side of the stator 5 through a slight gap. In the rotator 4, the shaft 2 passes through the inner ring of a front bearing 3 and a rear bearing 10 and is supported to be rotatable.

The stator 5 includes a stator iron core 6 and a stator winding 7. In the stator iron core 6, a plurality of steel sheets formed in a ring shape are stacked, the inner circumference side thereof is formed from protruded teeth portions, and slots are formed between the teeth. In each slot, the stator windings 7 of each phase is installed by being inserted into the slot across a plurality of teeth. Both ends of the stator 5 are held by a front bracket 18 and a rear bracket 19.

To one end portion of the shaft 2, a pulley 1 is installed. To the other end portion of the shaft 2, a slip ring 14 is installed and supplies power to the field wiring 13 by being brought into contact with a brush 15. In addition, on both end faces of the front-side claw-shaped magnetic pole 11 and the rear-side claw-shaped magnetic pole 12 of the rotator 4, a front fan 16 and a rear fan 17, which are cooling fans having a plurality of wings on the outer circumference side, are disposed and are configured to cause the air to flow in accordance with a centrifugal force according to the rotation such that the air is introduced from the outside, and the air cooled the inside is discharged to the outside.

In this example, the stator winding 7 is configured by windings of six phases having mutually-different electrical angles, and stator windings of two phases are connected in series. Lead wires extracted from the stator winding 7 are configured at three positions and are connected to a rectifier 20. The rectifier 20 is configured by a rectification device such as a diode and configures a full-wave rectifier circuit. For example, in the case of the diode, a cathode terminal 201 is connected to a diode connection terminal 21. In addition, an anode-side 202 terminal is electrically connected to a vehicle AC power generator main body. A rear cover 22 performs the role of a protection cover of the rectifier 20.

Next, a power generation operation will be described.

First, since rotation is delivered to the pulley 1 from a crank shaft through a belt in accordance with start-up of the engine, the rotator 4 is rotated through the shaft 2. Here, when a DC current is supplied to the field wiring 13 disposed in the rotator 4 from the brush 15 through the slip ring 14, a magnetic flux orbiting the inner and outer circumferences of the field winding 13 is generated, and accordingly, the N pole and the S pole are alternately formed in the circumferential direction in the front-side claw-shaped magnetic pole 11 and the rear-side claw-shaped magnetic pole 12 of the rotator 4. The magnetic flux according to the field winding 13 passes the stator iron core 6 from the N pole of the front-side claw-shaped magnet 11, orbits the circumference of the stator winding 7, and arrives at the S pole of the rear-side claw-shaped magnetic pole 12 of the rotator 4, whereby a magnetic circuit orbiting around the rotator 4 and the stator 5 is formed. As above, since the magnetic flux generated in the rotator is interlinked with the stator winding 7, AC induced voltages of the stator windings 7 of U1, V1, W1, U2, V2, and W2 phases are generated, and AC induced voltages of six phases are generated as a whole.

The AC voltages generated as above are full-wave rectified by the rectifier 20 configured by a rectifier device such as a diode, thereby being converted into a DC voltage. The rectified DC voltage is achieved by controlling a current supplied to an IC regulator (not illustrated in the figure) and the field winding 13 so as to have a constant voltage.

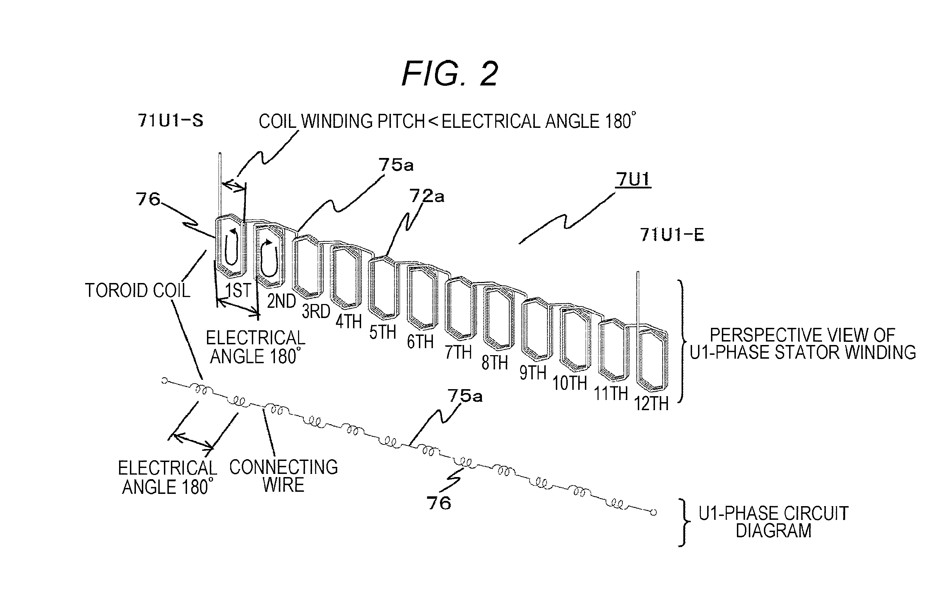

Next, the configuration of a conventional stator that is wound by fractional pitch winding is illustrated in FIGS. 2 to 4.

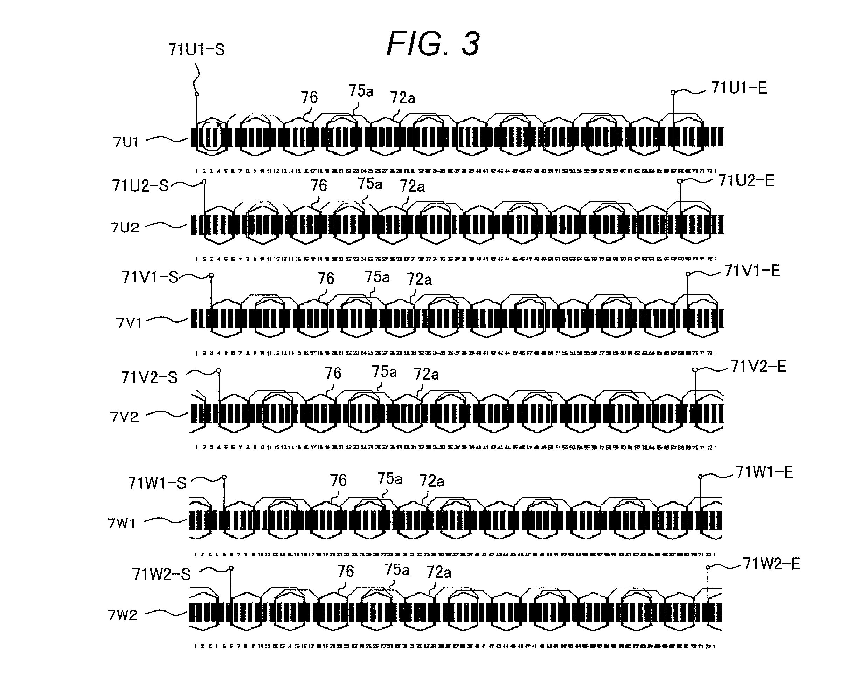

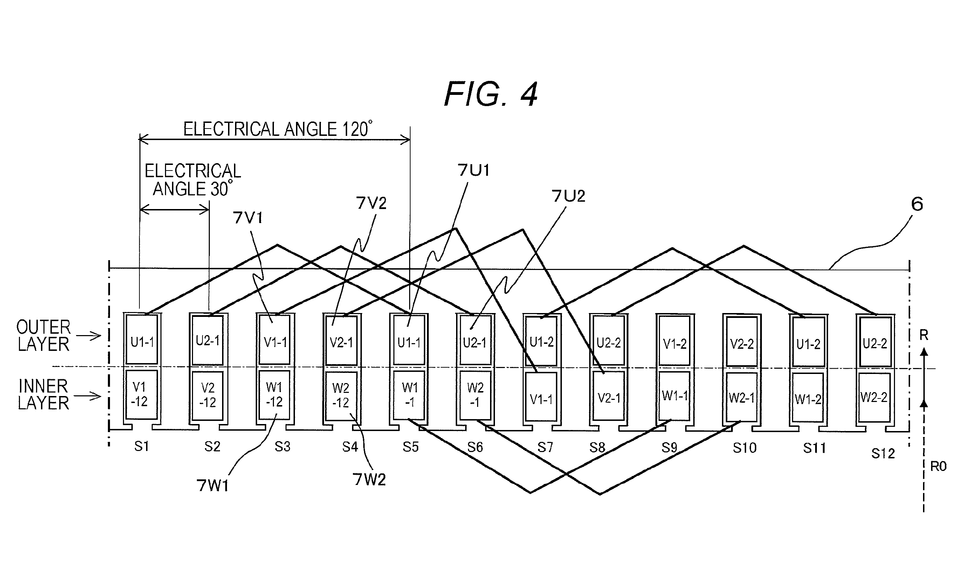

FIG. 2 illustrates a perspective view and a circuit diagram of a U1-phase stator winding of a conventional stator that is wound by fractional pitch winding. FIG. 3 is a layout drawing of stator windings of each phase viewed from the inner circumference side of a stator iron core of the conventional stator that is wound by fractional pitch winding. FIG. 4 is a layout drawing of coils of each phase inside slots of the conventional stator that is wound by fractional pitch winding.

Here, winding in which the winding pitch of a toroid coil used in the stator winding is less than an electrical angle of 180 degrees, and the toroid coil is inserted into each slot over a plurality of teeth is called fractional pitch winding. On the other hand, winding in which the winding pitch of a toroid coil used in the stator winding is an electrical angle of 180 degrees (the same interval as the pitch of the magnetic pole), and the toroid coil is inserted into each slot over a plurality of teeth is called full pitch winding.

As illustrated in FIG. 2, the stator winding 7 is configured in a form in which a plurality of coils that are shaped by being wound in a ring-shape as connecting wires are connected, and, in a case where there are two sets of three-phase windings in 12 poles, the number of toroid coils is 12, and the coils are connected using connecting wires and are continuously formed. The number of windings of the toroid coil, for example, is four turns (hereinafter, a turn is represented by T).

In addition, the number of slots of the stator iron core 6 is 72. At this time, the front-side claw-shaped magnetic pole 11 of the rotator illustrated in FIG. 1 includes six claw portions, and the rear-side claw-shaped magnetic pole 12 includes six claw portions. In other words, the rotator has 12 poles.

As illustrated in FIG. 2, in the stator winding 7U1 of the U1 phase, the arrangement pitch of toroid coils is an electrical angle of 180 degrees that is the same as the pitch of magnetic poles, and the winding pitch of the toroid coil is less than 180 degrees to be fractional pitch winding.

In the winding 7U1 of the U1 phase, the first toroid coil 76 is wound counterclockwise from a lead wire 71U-S toward a lead wire 71U-E, next, the second toroid coil is wound clockwise, and subsequently, similarly, winding is performed such that the winding directions are sequentially alternated. In the toroid coils 76 of the winding 7U1 of the U1 phase, coils adjacent to each other are connected on the coil end portion 72a side by a connecting wire 75a. Connecting wires 75a are disposed so as to intersect each other on the coil end portion 72a side of the toroid coils 76 located at positions of the even number order from the lead wire 71U-S.

In addition, the stator windings 7 of V1 to W2 phases are similarly configured.

FIG. 3 illustrates the arrangement of coils of each phase. Here, the stator windings 7 are configured by windings (two three-phase windings) of six phases having mutually-different electrical angles and is configured by U1, V1, W1, U2, V2, and W2 phases. The U1 and U2 phases are arranged to be adjacently shifted by one slot, and, similarly, the V1 and V2 phases and the W1 and W2 phases are arranged to be adjacently shifted by one slot. In this example, an electrical angle of one slot corresponds to 30 degrees.

Each stator winding 7, as illustrated in FIG. 3, is inserted into the inside of the slots of the stator iron core 6 in order of the winding 7U1 of the U1 phase, the winding 7U2 of the U2 phase, the winding 7V1 of the V1 phase, the winding 7V2 of the V2 phase, the winding 7W1 of the W1 phase, and the winding 7W2 of the W2 phase and, as illustrated in FIG. 4, that windings are sequentially arranged inside the slots.

The arrangement of the stator winding 7 wound by fractional pitch winding, as illustrated in FIG. 4, is divided into two in the radial direction of the slot, and has an arrangement of windings of two layers in which the slot opening portion side is the inner layer, and the outer circumferential side of the stator iron core 6 is the outer layer.

Here, in FIG. 4, for example two toroid coils U1-1 of the U1 phase to which the same reference numeral is assigned represent the coils molded in the ring shape illustrated in FIG. 2. The ring-shaped molded coil is formed by two line-shaped slot inserting portions and two coil end portions connecting both ends of the two slot inserting portions. The two toroid coils U1-1 of the U1 phase illustrated in FIG. 4 respectively illustrate a slot inserting portion of one coil molded in the ring shape. Both ends of the two slot inserting portions are connected using two coil end portions at portions protruding from both ends of the slot to both sides in the axial direction of the stator iron core 6.

The slot inserting portions of the first toroid coil U1-1 are inserted into the first slot S1 and the fifth slot S5 with three slots S2 to S4 being interposed therebetween. The second toroid coil U1-2 of the U1 phase is inserted into the seventh slot S7 acquired by vacating one slot that is the sixth slot S6 adjacent to the slot S5 into which the first toroid coil U1-1 of the U1 phase is inserted and the 11th slot S11 with three slots S8 to S10 being interposed therebetween. In addition, the first toroid coil U1-1 of the U1 phase and the second toroid coil U1-2 of the U1 phase are connected, as illustrated in FIG. 2, by using a connecting wire. In other words, in the toroid coil 7U1 of the U1 phase, the arrangement pitch of the toroid coil is arranged at an electrical angle of 180 degrees that is the same as the pitch of magnetic poles, and the winding pitch of the toroid coil is an electrical angle of 120 degrees so as to form fractional pitch winding.

In FIG. 4, although a portion corresponding to 12 slots (1/6 of the number of total slots, which is 72) is illustrated, the arrangement of the remaining 3rd to 12th toroid coils is similarly repeated.

All the stator windings of the U1 phase are inserted into the outer layer side of the slots.

Next, the stator windings 7U2 of the U2 phase will be described.

The slot inserting portions of the first toroid coil U2-1 are inserted into the second slot S2 and the sixth slot S6 with three slots S3 to S5 being interposed therebetween. The second toroid coil U2-2 of the U2 phase is inserted into the eighth slot S8 acquired by vacating one slot that is the seventh slot S7 adjacent to the slot S6 into which the first toroid coil U1-1 of the U1 phase is inserted and the 12th slot S12 with three slots S9 to S11 being interposed therebetween.

In addition, the first toroid coil U2-1 of the U2 phase and the second toroid coil U2-2 of the U2 phase are connected, as illustrated in FIG. 3, by using a connecting wire. In other words, in the toroid coil 7U2 of the U2 phase, the arrangement pitch of the toroid coil is arranged at an electrical angle of 180 degrees that is the same as the pitch of magnetic poles, and the winding pitch of the toroid coil is an electrical angle of 120 degrees so as to form fractional pitch winding.

In FIG. 4, although a portion corresponding to 12 slots (1/6 of the number of total slots, which is 72) is illustrated, the arrangement of the remaining 3rd to 12th toroid coils is similarly repeated.

All the stator windings of the U2 phase are inserted into the outer layer side of the slots.

Next, the stator windings 7V1 of the V1 phase will be described. The slot inserting portions of the first toroid coil V1-1 are inserted into the outer layer of the third slot S3 and the inner layer of the seventh slot S7 with three slots S4 to S6 being interposed therebetween. The second toroid coil V1-2 of the V1 phase is inserted into the outer layer of the ninth slot S9 and the inner layer of the 13th slot S13, which is not illustrated in the figure, with three slots S10 to S12 being interposed therebetween.

In addition, the first toroid coil V1-1 of the V1 phase and the second toroid coil V1-2 of the V1 phase are connected, as illustrated in FIG. 3, by using a connecting wire. In other words, in the toroid coil 7V1 of the V1 phase, the arrangement pitch of the toroid coil is arranged at an electrical angle of 180 degrees that is the same as the pitch of magnetic poles, and the winding pitch of the toroid coil is an electrical angle of 120 degrees so as to form fractional pitch winding.

In FIG. 4, although a portion corresponding to 12 slots (1/6 of the number of total slots, which is 72) is illustrated, the arrangement of the remaining 3rd to 12th toroid coils is similarly repeated.

Next, the stator windings 7V2 of the V2 phase will be described. The slot inserting portions of the first toroid coil V2-1 are inserted into the outer layer of the fourth slot S4 and the inner layer of the eighth sot S8 with three slots S5 to S7 being interposed therebetween. The second toroid coil V2-2 of the V2 phase is inserted into the outer layer of the 10th slot S10 and the inner layer of the 14th slot S14, which is not illustrated in the figure, with three slots S11 to S13 being interposed therebetween.

In addition, the first toroid coil V2-1 of the V2 phase and the second toroid coil V2-2 of the V2 phase are connected, as illustrated in FIG. 3, by using a connecting wire. In other words, in the toroid coil 7V2 of the V2 phase, the arrangement pitch of the toroid coil is arranged at an electrical angle of 180 degrees that is the same as the pitch of magnetic poles, and the winding pitch of the toroid coil is an electrical angle of 120 degrees so as to form fractional pitch winding.

In FIG. 4, although a portion corresponding to 12 slots (1/6 of the number of total slots, which is 72) is illustrated, the arrangement of the remaining 3rd to 12th toroid coils is similarly repeated.

Next, the stator windings 7W1 of the W1 phase will be described. The slot inserting portions of the first toroid coil W1-1 are inserted into the inner layers of the fifth slot S5 and the ninth slot S9 with three slots S6 to S8 being interposed therebetween. The second toroid coil W1-2 of the W1 phase is inserted into the inner layers of the 11th slot S11 and the 15th slot S15, which is not illustrated in the figure, with three slots S12 to S14 being interposed therebetween.

In addition, the first toroid coil W1-1 of the W1 phase and the second toroid coil W1-2 of the W1 phase are connected, as illustrated in FIG. 3, by using a connecting wire. In other words, in the toroid coil 7W1 of the W1 phase, the arrangement pitch of the toroid coil is arranged at an electrical angle of 180 degrees that is the same as the pitch of magnetic poles, and the winding pitch of the toroid coil is an electrical angle of 120 degrees so as to form fractional pitch winding.

In FIG. 4, although a portion corresponding to 12 slots (1/6 of the number of total slots, which is 72) is illustrated, the arrangement of the remaining 3rd to 12th toroid coils is similarly repeated.

All the stator windings of the W1 phase are inserted into the inner layer side of slots.

Next, the stator windings 7W2 of the W2 phase will be described. The slot inserting portions of the first toroid coil W2-1 are inserted into the inner layers of the sixth slot S6 and the tenth slot S10 with three slots S7 to S9 being interposed therebetween. The second toroid coil W2-2 of the W2 phase is inserted into the inner layers of the 12th slot S12 and the 16th slot S16, which is not illustrated in the figure, with three slots S13 to S15 being interposed therebetween.

In addition, the first toroid coil W2-1 of the W2 phase and the second toroid coil W2-2 of the W2 phase are connected, as illustrated in FIG. 3, by using a connecting wire. In other words, in the toroid coil 7W2 of the W2 phase, the arrangement pitch of the toroid coil is arranged at an electrical angle of 180 degrees that is the same as the pitch of magnetic poles, and the winding pitch of the toroid coil is an electrical angle of 120 degrees so as to form fractional pitch winding.

In FIG. 4, although a portion corresponding to 12 slots (1/6 of the number of total slots, which is 72) is illustrated, the arrangement of the remaining 3rd to 12th toroid coils is similarly repeated.

All the stator windings of the W2 phase are inserted into the inner layer side of slots.

According to the arrangement of the stator winding cores 7, the stator windings 7U1 of the U1 phase are arranged in the outer layer, the stator windings 7U2 of the U2 phase are arranged on the outer layer, the stator windings 7V1 of the V1 phase are arranged in the inner layer and the outer layer, the stator windings 7V2 of the V2 phase are arranged in the inner layer and the outer layer, the stator windings 7W1 of the W1 phase are arranged in the inner layer, and the stator windings 7W2 of the W2 phase are arranged in the inner layer, thereby being arranged non-uniformly in the stator iron core 6. The leakage inductance of the slot has proportionality in the radial direction of the slot, and, as illustrated in FIG. 4, the leakage inductance continuously increases from the opening portion of the slot toward the outer circumference side.

Here, for example, a distance from the center of the rotator to a center position of the inner layer coil, which is located inside the slot, in the radial direction is assumed to be R0, and the center position of the outer layer coil in the radial direction with the center position of the inner layer coil in the radial direction being used as a reference is assumed to be R0 + R. In the stator winding 7U1 of the U1 phase, both two toroid coils illustrated in the figure are inserted into the outer layer, and accordingly, a sum of distances in the radial direction is represented as 4R0 + 4R (= 2 x (2R0 + 2R)). In addition, in the stator winding 7U2 of the U2 phase, both two toroid coils illustrated in the figure are inserted into the outer layer, and accordingly, a sum of distances in the radial direction is represented as 4R0 + 4R (= 2 x (2R0 + 2R)).

The winding 7V1 of the V1 phase is inserted into the outer layer and the inner layer, and accordingly, a sum of distances in the radial direction can be represented as 4R0 + 2R(= 2 x (R0 + R + R0 + 0)). In addition, the winding 7V2 of the V2 phase is inserted into the outer layer and the inner layer, and accordingly, a sum of distances in the radial direction can be represented as 4R0 + 2R(= 2 x (R0 + R + R0 + 0)).

Furthermore, in the winding 7W1 of the W1 phase, both two toroid coils illustrated in the figure are inserted into the inner layer, and accordingly, a sum of distances in the radial direction can be represented as 4R0(= 2 x (2R0 + 0)).

In addition, in the winding 7W2 of the W2 phase, both two toroid coils illustrated in the figure are inserted into the inner layer, and accordingly, a sum of distances in the radial direction can be represented as 4R0(= 2 x (2R0 + 0)).

When the stator winding of the W1 phase is used as a reference, within the range of 1/6 of the number of all the slots illustrated in FIG. 4, the U1 phase is higher than the W1 phase by 4R, and the V1 phase is higher than the W1 phase by 2R. Accordingly, the stator winding 7W1 of the W1 phase that is arranged in the inner layer of slots has low inductance, the inductance of the stator winding 7U1 of the U1 phase that is arranged in the outer layer of the slots is high, and accordingly, an unbalanced state in which the inductance is different for each stator winding of each phase occurs.

In addition, when the stator winding of the W2 phase is used as a reference, within the range of 1/6 of the number of all the slots illustrated in FIG. 4, the U2 phase is higher than the W2 phase by 4R, and the V2 phase is higher than the W2 phase by 2R. Accordingly, the stator winding 7W2 of the W2 phase that is arranged in the inner layer of the slots has low inductance, the inductance of the stator winding 7U2 of the U2 phase that is arranged in the outer layer of the slots is high, and accordingly, an unbalanced state in which the inductance is different for each stator winding of each phase occurs.

When the inductance of each phase is unbalanced, power generation currents are different from one another, and the heating values of the stator windings and diodes are unbalanced, whereby the quality and the characteristics are degraded due to an increase in the temperature of the coils and the diodes, an increase in the magnetic sound due to an increase in the magnetic exciting force, and the like.

In addition, in a delta connection, currents are consumed as copper loss of the stator windings in accordance with an increase in the circulation current circulating within the connection, and accordingly, the power generation efficiency is lowered.

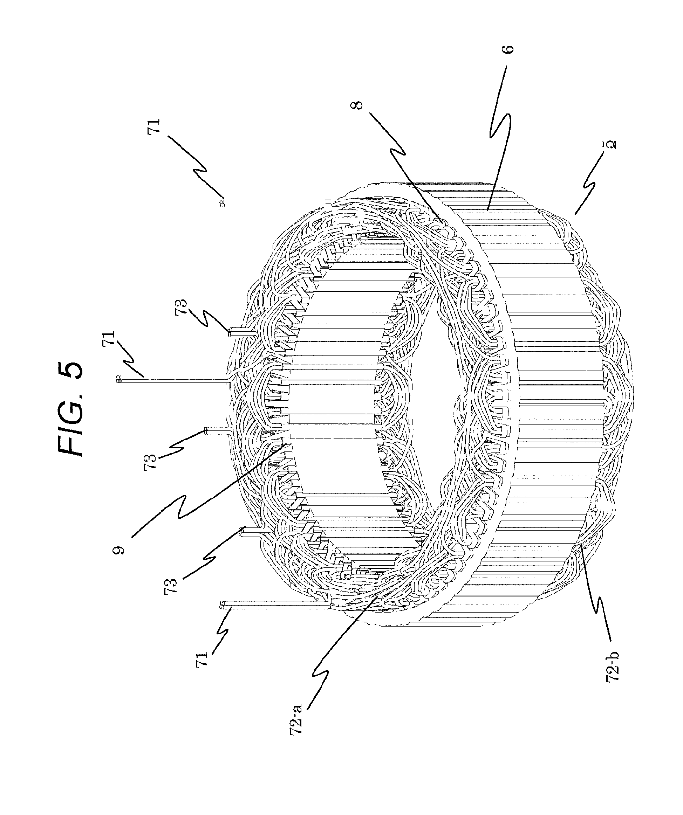

Next, the configuration of the stator of the rotating electric machine according to the first embodiment will be described with reference to FIGS. 5 to 10.

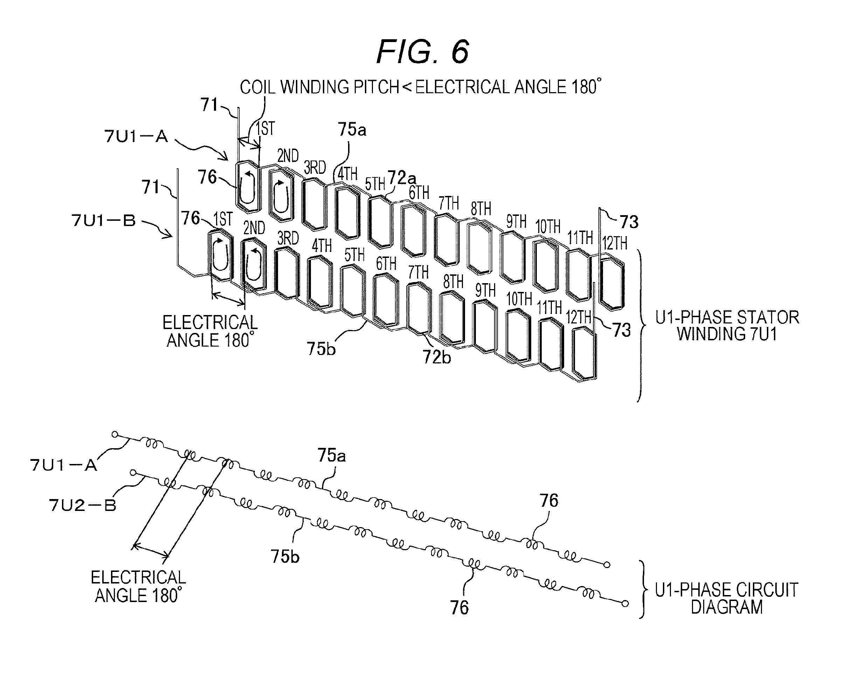

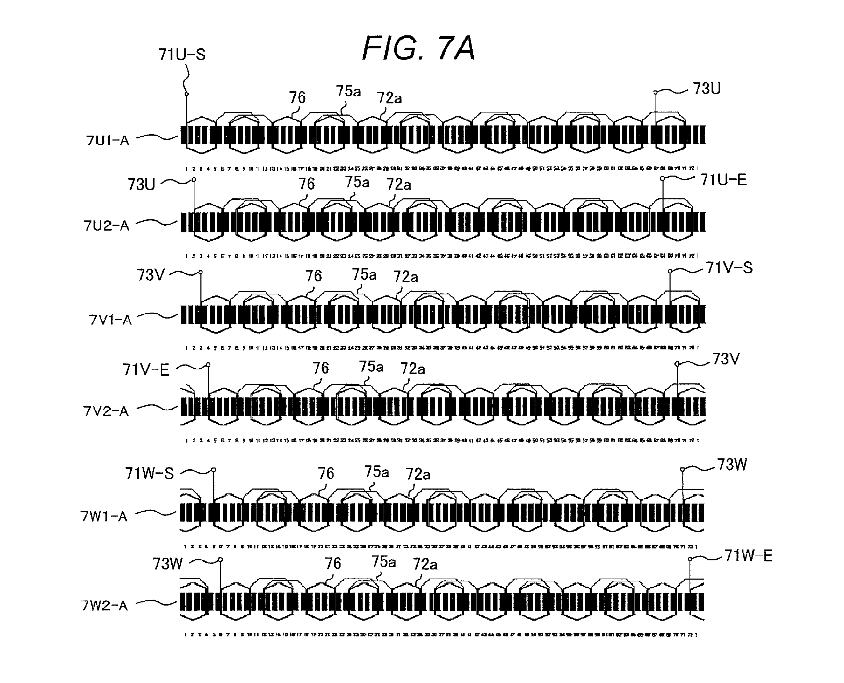

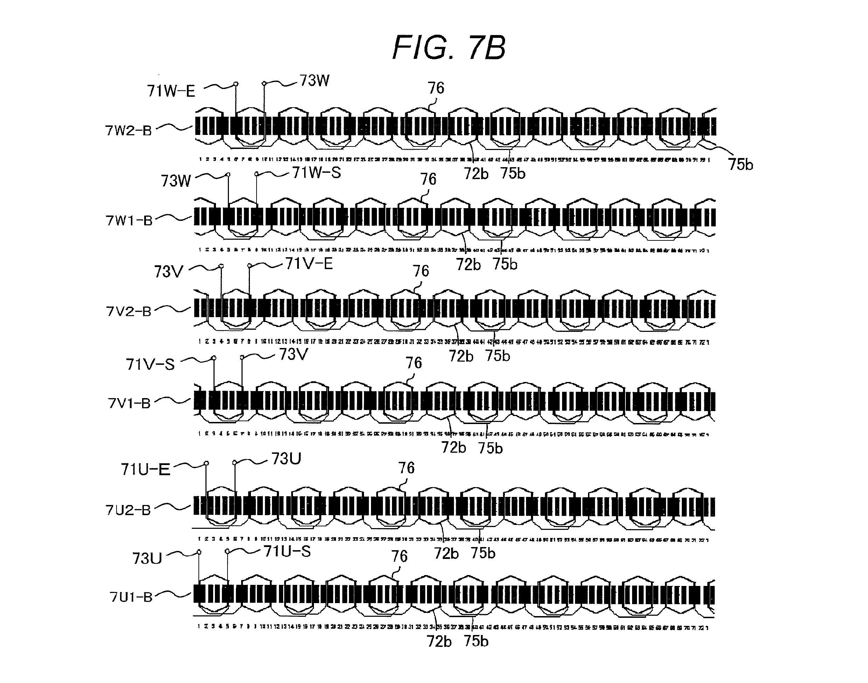

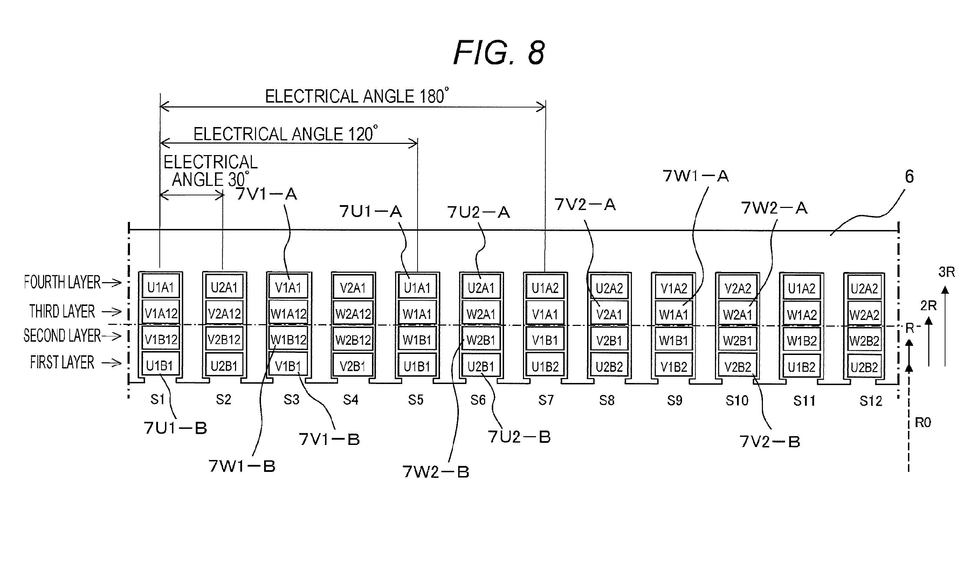

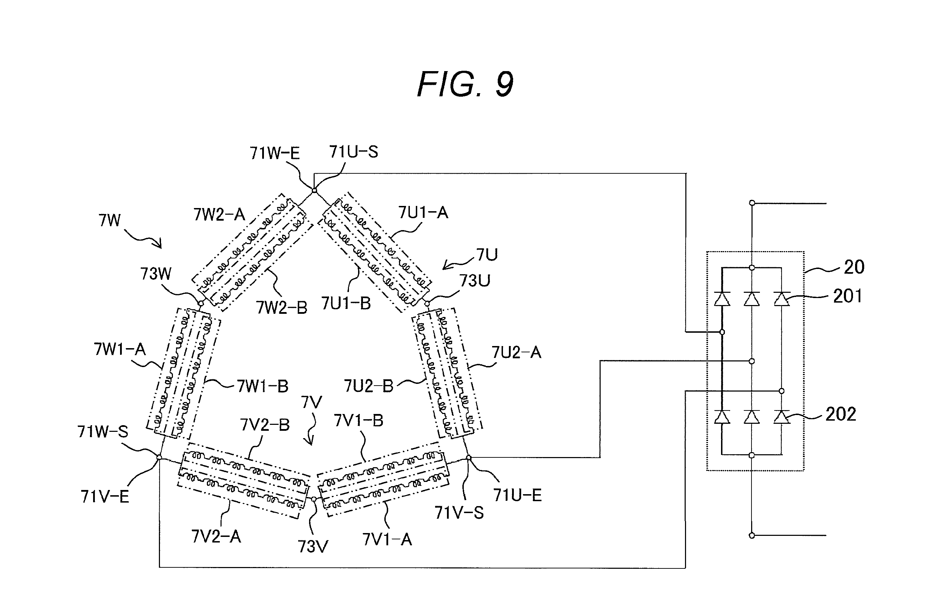

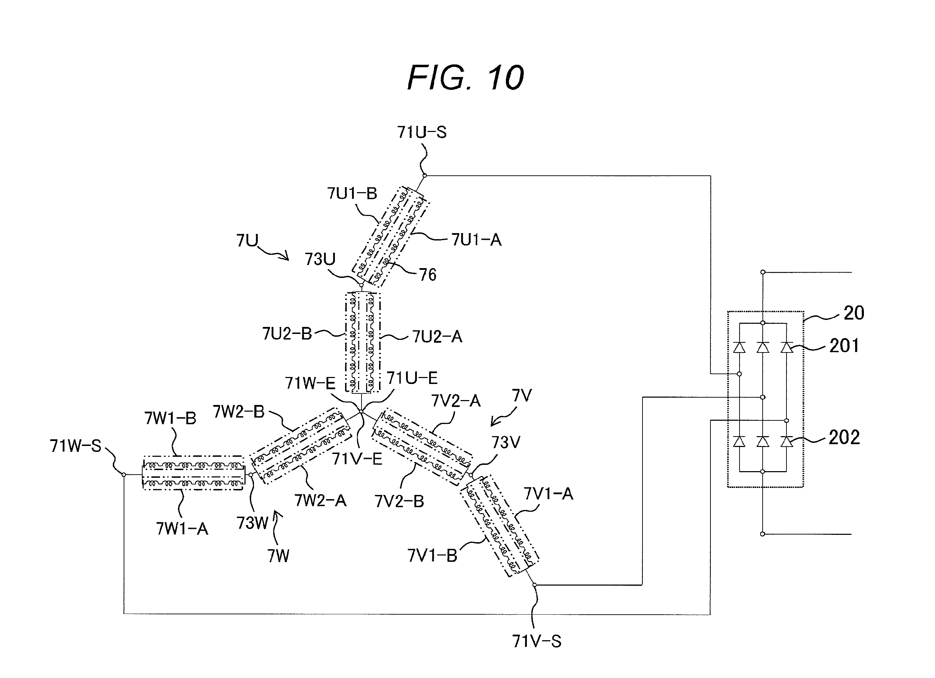

FIG. 5 is a perspective view of the stator of the rotating electric machine according to the first embodiment. FIG. 6 illustrates a perspective view and a circuit diagram of a U1-phase stator winding, which is wound by fractional pitch winding, of the stator of the rotating electric machine according to the first embodiment. FIG. 7A is a layout drawing of a stator winding A of each phase viewed from the inner circumference side of the stator iron core. FIG. 7B is a layout drawing of a stator winding B of each phase viewed from the inner circumference side of the stator iron core. FIG. 8 is a layout drawing of coils of each phase, which is wound by fractional pitch winding, inside slots of the stator of the rotating electric machine according to the first embodiment. FIG. 9 is a diagram of a hexagonal connection of stator windings of each phase of the rotating electric machine according to the first embodiment. FIG. 10 is a diagram of a radial connection of stator windings of each phase of the rotating electric machine according to the first embodiment.

As illustrated in FIG. 5, the stator 5 installs the stator windings 7 of each phase through the ring-shaped stator iron core 6 having a plurality of slots on the circumferential direction of the inner circumferential face and U-shaped insulating sheets 8 installed to the inner circumferential face of each slot and includes slot wedges 9 on the slot innermost circumference side so as to maintain the stator windings 7 inside slots. In this example, the number of slots is 72. At this time, a front-side claw-shaped magnetic pole 11 of the rotator illustrated in FIG. 1 includes six claw portions, and a rear-side claw-shaped magnetic pole 12 also includes six claw portions. In other words, the rotator has 12 poles.

Portions protruding from the slots of the stator ion core 6 to both sides in the axial direction of the stator iron core 6 are coil ends 72a and 72b stretching over two slots. In addition, from the stator winding 7, as illustrated in the figure, four lead wires 71 are extracted to the coil end 72a side at a total of three places and are connected to the rectifier 20 as three terminals 3. In addition, one set of four connection points 73 are extracted at three places and are electrically bonded through welding or soldering. The reason for this is that the stator windings of six phases U1 to W2 having mutually-different electrical angles are formed, as will be described below with reference to FIG. 6, by connecting the stator windings of the U1 phase and the U2 phase in series, connecting the stator windings of the V1 phase and the V2 phase in series, and connecting the stator windings of the W1 phase and the W2 phase in series.

As illustrate4d in FIG. 6, the U1-phase stator winding 7U1 is configured in a form in which a plurality of coils 76 that are shaped by being wound in a ring-shape as connecting wires are connected, and, in the case of winding corresponding to 12 poles and 6 phases in which the number of slots of phases for each pole is two as this example, the number of toroid coils 76 is 12, and the coils are connected using connecting wires 75 and are continuously formed. The number of windings of the toroid coil 76, for example, is 4T.

As illustrated in FIG. 6, the U1-phase stator winding 7U1 is formed by a U1-phase winding 7U1-A and a U1-phase winding 7U1-B (a first-phase first stator winding and a first-phase second stator winding). A connecting wire 75a of the U1-phase winding 7U1-A is arranged on one side of the stator iron core 6 in the axial direction, in other words, the coil end portion 72a side that is a side from which an upper lead wire 71 protrudes, and a connecting wire 75b of the U1-phase winding 7U1-B is arranged on the other side of the stator iron core 6 in the axial direction, in other words, the coil end portion 72b side that is a side opposite to the side from which a lower lead wire 71 protrudes. In other words, when the U1-phase winding 7U1-A and the U1-phase winding 7U1-B are mounted on the stator iron core 6, in coil end portions 72a and 72b on both sides of the stator iron core 6 in the axial direction, the connecting wires 75a and 75b of the U1-phase winding 7U1-A and the U1-phase winding 7U1-B are arranged to be distributed on both sides of the stator iron core 6 in the axial direction.

The U1-phase circuit diagram of the U1-phase winding 7U1-A and the U1-phase winding 7U1-B illustrated on the upper side in FIG. 6 is as illustrated on the lower side in FIG. 6. The arrangement pitch of toroid coils 76 of the U1-phase winding 7U1-A and the U1-phase winding 7U1-B is an electrical angle of 180 degrees that is the same as the pitch of magnetic poles, and the winding pitch of the toroid coil 76 is less than 180 degrees to be fractional pitch winding. The winding pitch of the toroid coil 76 illustrated in this example is a 4/6 pitch (an electrical angle of 120 degrees) corresponding to more than three slots.

In the U1-phase winding 7U1-A, the first toroid coil 76 is wound counterclockwise from the lead wire 71 toward the connection point 73, next, the second toroid coil is wound clockwise, and subsequently, similarly, winding is performed such that the winding directions are sequentially alternated. In the toroid coils 76 of the U1-phase winding 7U1-A, coils adjacent to each other are connected on the coil end portion 72a side by the connecting wire 75a. The connecting wires 75a are disposed so as to intersect each other on the coil end portion 72a sides of the toroid coils 76 located at positions of the even number order from the lead wire 71.

In the U2-phase winding 7U1-B, the first toroid coil 76 is wound clockwise from the lead wire 71 toward the connection point 73, next, the second toroid coil is wound counterclockwise, and subsequently, similarly, winding is performed such that the winding directions are sequentially alternated. In the toroid coils 76 of the U1-phase winding 7U1-B, coils adjacent to each other are connected on the coil end portion 72b side by the connecting wire 75b. The connecting wires 75b are disposed so as to intersect each other on the coil end portion 72a sides of the toroid coils 76 located at positions of the even number order from the lead wire 71.

The V1-phase stator winding, the W1-phase stator winding, the U2-phase stator winding, the V2-phase stator winding, and the W2-phase stator winding, similarly to the U1-phase stator winding 7U1, are divided into V1-phase windings 7V1-A and 7V1-B (a third-phase first stator winding and a third-phase second stator winding), W1-phase windings 7W1-A and 7W1-B (a fifth-phase first stator winding and a fifth-phase second stator winding), U2-phase windings 7U2-A and 7U2-B (a second-phase first stator winding and a second-phase second stator winding), V2-phase windings 7V2-A and 7V2-B (a fourth-phase first stator winding and a fourth-phase second stator winding), and W2-phase windings 7W2-A and 7W2-B (a sixth-phase first stator winding and a sixth-phase second stator winding).

FIGS. 7A and 7B are layout drawings of stator windings 7 of each phase viewed from the inner circumferential face of the stator iron core 6. FIG. 7A is a layout drawing of a winding A in which the connecting wire 75a is arranged on the coil end portion 72a side, and FIG. 7B is a layout drawing of a winding B in which the connecting wire 75b is arranged on the coil end portion 72b side.

While FIGS. 7A and 7B illustrate the arrangements of coils of each phase, here, the stator winding 7 is configured by windings of six phases having mutually-different electrical angles and is configured by the U1, V1, W1, U2, V2, and W2 phases. The U1 and U2 phases are arranged to be adjacently shifted by one slot, and, similarly, the V1 and V2 phases and the W1 and W2 phases are arranged to be adjacently shifted by one slot. In this example, an electrical angle of one slot corresponds to 30 degrees.

Each stator winding 7, as illustrated in FIG. 7A, is inserted into the inside of the slots in order of the U1-phase winding 7U1-A, the U2-phase winding 7U2-A, the V1-phase winding 7V1-A, the V2-phase winding 7V2-A, the W1-phase winding 7W1-A, and the W2-phase winding 7W2-A and, next, as illustrated in FIG. 7B, is inserted into the inside of the slots in order of the W2-phase winding 7W2-B, the W1-phase winding 7W1-B, the V2-phase winding 7V2-B, the V1-phase winding 7V1-B, the U2-phase winding 7U2-B, and the U1-phase winding 7U1-B, and, as illustrated in FIG. 8, the windings are sequentially arranged inside the slots.

As illustrated in FIG. 8, the arrangement of coils inside the slots of the stator winding 7 is an arrangement of four-layer windings divided into four in the radial direction. Here, when the innermost circumference side of the slot is a first layer, and the outermost circumference side is a fourth layer, the layers are configured such that the first layer and the fourth layer are in phase, and the second layer and the third layer are in phase, and, by connecting the phases in parallel, the inductance is combined, and the inductance of each phase is equalized, whereby the power generation currents of each phase are balanced.

As illustrated in FIG. 8, with a line between the second layer and the third layer used as a reference, the U1-phase winding 7U1-A, the U2-phase winding 7U2-A, the V1-phase winding 7V1-A, the V2-phase winding 7V2-A, the W1-phase winding 7W1-A, and the W2-phase winding 7W2-A, and the W1-phase winding 7W1-B, the W2-phase winding 7W2-B, the V1-phase winding 7V1-B, the V2-phase winding 7V2-B, the U1-phase winding 7U1-B, and the U2-phase winding 7U2-B are inserted to have line symmetry. In other words, while the U1-phase winding 7U1-A and the U2-phase winding 7U2-A are inserted into the fourth layer, the U1-phase winding 7U1-B and the U2-phase winding 7U2-B are inserted into the first layer. In addition, while the V1-phase winding 7V1-A and the V2-phase winding 7V2-A are inserted into the fourth layer and the third layer, the V1-phase winding 7V1-B and the V2-phase winding 7V2-B are inserted into the first layer and the second layer. Furthermore, while the W1-phase winding 7W1-A and the W2-phase winding 7W2-A are inserted into the third layer, the W1-phase winding 7W1-B and the W2-phase winding 7W2-B are inserted into the second layer.

Here, more specifically, the insertion order of the phase windings will be described with reference to FIG. 8.

In FIG. 8, for example, in the U1-phase winding 7U1-A, two coils to which the same reference numeral U1A1 is assigned represent coils molded in the ring shape. The ring-shaped molded coil is formed by two line-shaped slot inserting portions and two coil end portions connecting both ends of the two slot inserting portions. The two toroid coils U1A1 of the U1 phase illustrated in FIG. 8 respectively illustrate a slot inserting portion of one coil molded in the ring shape. Both ends of the two slot inserting portions are connected using two coil end portions at portions protruding from both ends of the slot. The U1-phase winding 7U1-A is inserted into the fourth layer of the slot. The slot inserting portions of the first toroid coil U1A1 of the U1-phase winding 7U1-A are inserted into the first slot S1 and the fifth slot S5 with three slots interposed therebetween. The second toroid coil U1A2 of the U1 phase is inserted into the seventh slot S7 being one slot skipped from the slot S5 into which the first toroid coil U1A1 of the U1 phase is inserted and the 11th slot S11 with three slots being interposed therebetween. In addition, the first toroid coil U1A1 of the U1 phase and the second toroid coil U1A2 of the U1 phase are connected by using a connecting wire. In other words, in the U1-phase winding 7U1-A, the arrangement pitch of toroid coils is an electrical angle of 180 degrees that is the same as the pitch of magnetic poles, and the winding pitch of the toroid coil is an electrical angle of 120 degrees to be fractional pitch winding. In FIG. 8, although a portion corresponding to 12 slots (1/6 of the number of total slots, which is 72) is illustrated, the arrangement of the remaining 3rd to 12th toroid coils is similarly repeated.

The U1-phase winding 7U1-A is inserted into the fourth layer side of slots.

Next, the U2-phase winding 7U2-A will be described. The U2-phase winding 7U2-A is inserted into the fourth layer of the slot. The slot inserting portions of the first toroid coil U2A1 of the U2-phase are inserted into the second slot S2 and the sixth slot S6 with three slots interposed therebetween. The second toroid coil U2A2 of the U2 phase is inserted into the eighth slot S8 being one slot skipped from the slot S6 into which the first toroid coil U2A1 of the U2 phase is inserted and the 12th slot S12 with three slots being interposed therebetween. In addition, the first toroid coil U2A1 of the U2 phase and the second toroid coil U2A2 of the U2 phase are connected by using a connecting wire. In other words, in the U2-phase winding 7U2-A, the arrangement pitch of toroid coils is an electrical angle of 180 degrees that is the same as the pitch of magnetic poles, and the winding pitch of the toroid coil is an electrical angle of 120 degrees to be fractional pitch winding. In FIG. 8, although a portion corresponding to 12 slots (1/6 of the number of total slots, which is 72) is illustrated, the arrangement of the remaining 3rd to 12th toroid coils is similarly repeated.

The U2-phase winding 7U2-A is inserted into the fourth layer side of slots.

Next, the V1-phase winding 7V1-A will be described. The slot inserting portions of the first toroid coil V1A1 of the V1-phase are inserted into the fourth layer of the third slot S3 and the third layer of the seventh slot S7 with three slots interposed therebetween. The second toroid coil V1A2 of the V1 phase is inserted into the fourth layer of the ninth slot S9 being one slot skipped from the slot S7 into which the first toroid coil V1A1 of the V1 phase is inserted and the third layer of the 13th slot (not illustrated in the figure) with three slots being interposed therebetween. In addition, the first toroid coil V1A1 of the V1 phase and the second toroid coil V1A2 of the V1 phase are connected by using a connecting wire. In other words, in the V1-phase winding 7V1-A, the arrangement pitch of toroid coils is an electrical angle of 180 degrees that is the same as the pitch of magnetic poles, and the winding pitch of the toroid coil is an electrical angle of 120 degrees to be fractional pitch winding.

In FIG. 8, although a portion corresponding to 12 slots (1/6 of the number of total slots, which is 72) is illustrated, the arrangement of the remaining 3rd to 12th toroid coils is similarly repeated.

The V1-phase winding 7V-A1 is inserted into the fourth layer side and the third layer side of slots.

Next, the V2-phase winding 7V2-A will be described. The slot inserting portions of the first toroid coil V2A1 of the V2-phase are inserted into the fourth layer of the fourth slot S4 and the third layer of the eighth slot S8 with three slots interposed therebetween. The second toroid coil V2A2 of the V2 phase is inserted into the fourth layer of the 10th slot S10 being one slot skipped from the slot S8 into which the first toroid coil V2A1 of the V2 phase is inserted and the third layer of the 14th slot (not illustrated in the figure) with three slots being interposed therebetween. In addition, the first toroid coil V2A1 of the V2 phase and the second toroid coil V2A2 of the V2 phase are connected by using a connecting wire. In other words, in the V2-phase winding 7V2-A, the arrangement pitch of toroid coils is an electrical angle of 180 degrees that is the same as the pitch of magnetic poles, and the winding pitch of the toroid coil is an electrical angle of 120 degrees to be fractional pitch winding.

In FIG. 8, although a portion corresponding to 12 slots (1/6 of the number of total slots, which is 72) is illustrated, the arrangement of the remaining 3rd to 12th toroid coils is similarly repeated.

The V2-phase winding 7V2-A is inserted into the fourth layer side and the third layer side of slots.

Next, the W1-phase winding 7W1-A will be described. The slot inserting portions of the first toroid coil W1A1 of the W1 phase are inserted into the third layers of the fifth slot S5 and the ninth slot S9 with three slots interposed therebetween. The second toroid coil W1A2 of the W1 phase is inserted into the 11th slot S11 being one slot skipped from the slot S9 into which the first toroid coil W1A1 of the W1 phase is inserted and the 15th slot (not illustrated in the figure) with three slots being interposed therebetween. In addition, the first toroid coil W1A1 of the W1 phase and the second toroid coil W1A2 of the W1 phase are connected by using a connecting wire. In other words, in the W1-phase winding 7W1-A, the arrangement pitch of toroid coils is an electrical angle of 180 degrees that is the same as the pitch of magnetic poles, and the winding pitch of the toroid coil is an electrical angle of 120 degrees to be fractional pitch winding.

In FIG. 8, although a portion corresponding to 12 slots (1/6 of the number of total slots, which is 72) is illustrated, the arrangement of the remaining 3rd to 12th toroid coils is similarly repeated.

The W1-phase winding 7W1-A is inserted into only the third layer side of slots.

Next, the W2-phase winding 7W2-A will be described. The slot inserting portions of the first toroid coil W2A1 of the W2 phase are inserted into the third layers of the sixth slot S6 and the 10th slot S10 with three slots interposed therebetween. The second toroid coil W2A2 of the W2 phase is inserted into the 12th slot S12 being one slot skipped from the slot S10 into which the first toroid coil W2A1 of the W2 phase is inserted and the 16th slot (not illustrated in the figure) with three slots being interposed therebetween. In addition, the first toroid coil W2A1 of the W2 phase and the second toroid coil W2A2 of the W2 phase are connected by using a connecting wire. In other words, in the W2-phase winding 7W2-A, the arrangement pitch of toroid coils is an electrical angle of 180 degrees that is the same as the pitch of magnetic poles, and the winding pitch of the toroid coil is an electrical angle of 120 degrees to be fractional pitch winding.

In FIG. 8, although a portion corresponding to 12 slots (1/6 of the number of total slots, which is 72) is illustrated, the arrangement of the remaining 3rd to 12th toroid coils is similarly repeated.

The W2-phase winding 7W2-A is inserted into only the third layer side of slots.

Next, the W2-phase winding 7W2-B will be described. The slot inserting portions of the first toroid coil W2B1 of the W2 phase are inserted into the second layers of the sixth slot S6 and the 10th slot S10 with three slots interposed therebetween. The second toroid coil W2B2 of the W2 phase is inserted into the 12th slot S12 being one slot skipped from the slot S10 into which the first toroid coil W2B1 of the W2 phase is inserted and the 16th slot (not illustrated in the figure) with three slots being interposed therebetween. In addition, the first toroid coil W2B1 of the W2 phase and the second toroid coil W2B2 of the W2 phase are connected by using a connecting wire. In other words, in the W2-phase winding 7W2-B, the arrangement pitch of toroid coils is an electrical angle of 180 degrees that is the same as the pitch of magnetic poles, and the winding pitch of the toroid coil is an electrical angle of 120 degrees to be fractional pitch winding.

In FIG. 8, although a portion corresponding to 12 slots (1/6 of the number of total slots, which is 72) is illustrated, the arrangement of the remaining 3rd to 12th toroid coils is similarly repeated.

The W2-phase winding 7W2-B is inserted into only the second layer side of slots.

Next, the W1-phase winding 7W1-B will be described. The slot inserting portions of the first toroid coil W1B1 of the W1 phase are inserted into the second layers of the fifth slot S5 and the ninth slot S9 with three slots interposed therebetween. The second toroid coil W1B2 of the W1 phase is inserted into the 11th slot S11 being one slot skipped from the slot S9 into which the first toroid coil W1B1 of the W1 phase is inserted and the 15th slot (not illustrated in the figure) with three slots being interposed therebetween. In addition, the first toroid coil W1B1 of the W1 phase and the second toroid coil W1B2 of the W1 phase are connected by using a connecting wire. In other words, in the W1-phase winding 7W1-B, the arrangement pitch of toroid coils is an electrical angle of 180 degrees that is the same as the pitch of magnetic poles, and the winding pitch of the toroid coil is an electrical angle of 120 degrees to be fractional pitch winding.

In FIG. 8, although a portion corresponding to 12 slots (1/6 of the number of total slots, which is 72) is illustrated, the arrangement of the remaining 3rd to 12th toroid coils is similarly repeated.

The W1-phase winding 7W1-B is inserted into only the second layer side of slots.

Next, the V2-phase winding 7V2-B will be described. The slot inserting portions of the first toroid coil V2B1 of the V2 phase are inserted into the first layer of the fourth slot S4 and the second layer of the eighth slot S8 with three slots interposed therebetween. The second toroid coil V2B2 of the V2 phase is inserted into the first layer of the 10th slot S10 being one slot skipped from the slot S8 into which the first toroid coil V2B1 of the V2 phase is inserted and the second layer of the 14th slot (not illustrated in the figure) with three slots being interposed therebetween. In addition, the first toroid coil V2B1 of the V2 phase and the second toroid coil V2B2 of the V2 phase are connected by using a connecting wire. In other words, in the V2-phase winding 7V2-B, the arrangement pitch of toroid coils is an electrical angle of 180 degrees that is the same as the pitch of magnetic poles, and the winding pitch of the toroid coil is an electrical angle of 120 degrees to be fractional pitch winding.

In FIG. 8, although a portion corresponding to 12 slots (1/6 of the number of total slots, which is 72) is illustrated, the arrangement of the remaining 3rd to 12th toroid coils is similarly repeated.

The V2-phase winding 7V2-B is inserted into only the second layer side and the first layer side of slots.

Next, the V1-phase winding 7V1-B will be described. The slot inserting portions of the first toroid coil V1B1 of the V1 phase are inserted into the first layer of the third slot S3 and the second layer of the seventh slot S7 with three slots interposed therebetween. The second toroid coil V1B2 of the V1 phase is inserted into the first layer of the ninth slot S9 and the second layer of the 13th slot (not illustrated in the figure) with three slots being interposed therebetween. In addition, the first toroid coil V1B1 of the V1 phase and the second toroid coil V1B2 of the V1 phase are connected by using a connecting wire. In other words, in the V1-phase winding 7V1-B, the arrangement pitch of toroid coils is an electrical angle of 180 degrees that is the same as the pitch of magnetic poles, and the winding pitch of the toroid coil is an electrical angle of 120 degrees to be fractional pitch winding.

Similarly, the 12th toroid coil V1B12 of the V1 phase is inserted into the second layer of the first slot S1. In FIG. 8, although a portion corresponding to 12 slots (1/6 of the number of total slots, which is 72) is illustrated, the arrangement of the remaining 3rd to 12th toroid coils is similarly repeated.

The V1-phase winding 7V1-B is inserted into only the second layer side and the first layer side of slots.

Next, the U2-phase winding 7U2-B will be described. The U2-phase winding 7U2-B is inserted into the first layer of slots. The slot inserting portions of the first toroid coil U2B1 of the U2 phase are inserted into the second slot S2 and the sixth slot S6 with three slots interposed therebetween. The second toroid coil U2B2 of the U2 phase is inserted into the eighth slot S8 being one slot skipped from the slot S6 into which the first toroid coil U2B1 of the U2 phase is inserted and the 12th slot S12 with three slots being interposed therebetween. In addition, the first toroid coil U2B1 of the U2 phase and the second toroid coil U2B2 of the U2 phase are connected by using a connecting wire. In other words, in the U2-phase winding 7U2-B, the arrangement pitch of toroid coils is an electrical angle of 180 degrees that is the same as the pitch of magnetic poles, and the winding pitch of the toroid coil is an electrical angle of 120 degrees to be fractional pitch winding. In FIG. 8, although a portion corresponding to 12 slots (1/6 of the number of total slots, which is 72) is illustrated, the arrangement of the remaining 3rd to 12th toroid coils is similarly repeated.

The U2-phase winding 7U2-B is inserted into only the first layer side of slots.

Next, the U1-phase winding 7U1-B will be described. The toroid coil 7U1B of the U1-phase is inserted into the first layer of slots. The slot inserting portions of the first toroid coil U1B1 of the U1 phase are inserted into the first slot S1 and the fifth slot S5 with three slots interposed therebetween. The second toroid coil U1B2 of the U1 phase is inserted into the seventh slot S7 being one slot skipped from the slot S5 into which the first toroid coil U1B1 of the U1 phase is inserted and the 11th slot S11 with three slots being interposed therebetween. In addition, the first toroid coil U1B1 of the U1 phase and the second toroid coil U1B2 of the U1 phase are connected by using a connecting wire. In other words, in the U1-phase winding 7U1-B, the arrangement pitch of toroid coils is an electrical angle of 180 degrees that is the same as the pitch of magnetic poles, and the winding pitch of the toroid coil is an electrical angle of 120 degrees to be fractional pitch winding. In FIG. 8, although a portion corresponding to 12 slots (1/6 of the number of total slots, which is 72) is illustrated, the arrangement of the remaining 3rd to 12th toroid coils is similarly repeated.

The U1-phase winding 7U1-B is inserted into only the first layer side of slots.

Here, for example, a distance from the center of the rotator to the center position of the first layer in the coil radial direction is assumed to be R0, and, with the center position of the first layer in the coil radial direction being used as a reference, the center positions of the second layer, the third layer, and the fourth layer in the coil radial direction are assumed to be R0+R, R0+2R, and R0+3R.

In the U1-phase stator winding 7U1, both two toroid coils of the U1-phase winding 7U1-A are inserted into the fourth layer within a range corresponding to 12 slots illustrated in FIG. 8, and accordingly, the position in the radial direction is represented as 4R0 + 12R (= 2 x (2·R0 + 2·3R)), and, two toroid coils of the U1-phase winding 7U1-B are inserted into the first layer within the range corresponding to 12 slots illustrated in FIG. 8, and accordingly, the position in the radial direction is represented as 4R0 (= 2·2R0). Accordingly, as a whole, the U1-phase stator winding 7U1 can be represented as 8R0+12R (= 4R0 + 12R + 4R0) by adding the U1-phase winding 7U1-A and the U1-phase winding 7U1-B.

In the U2-phase stator winding 7U2, both two toroid coils of the U2-phase winding 7U2-A are inserted into the fourth layer within the range corresponding to 12 slots illustrated in FIG. 8, and accordingly, the position in the radial direction is represented as 4R0+12R (= 2 x (2·R0 + 2·3R)), and, two toroid coils of the U2-phase winding 7U2-B are inserted into the first layer within the range corresponding to 12 slots illustrated in FIG. 8, and accordingly, the position in the radial direction is represented as 4R0 (= 2·2R0). Accordingly, as a whole, the U2-phase stator winding 7U2 can be represented as 8R0+12R (= 4R0 + 12R + 4R0) by adding the U2-phase winding 7U2-A and the U2-phase winding 7U2-B.

In the V1-phase stator winding 7V1, two toroid coils of the V1-phase winding 7V1-A are inserted into the fourth layer and the third layer within the range corresponding to 12 slots illustrated in FIG. 8, and accordingly, the position in the radial direction is represented as 4R0+10R (= 2 x (R0 + 3R + R0 + 2R)), and, two toroid coils of the V1-phase winding 7V1-B are inserted into the first layer and the second layer within the range corresponding to 12 slots illustrated in FIG. 8, and accordingly, the position in the radial direction is represented as 4R0+2R (= 2 x (R0 + R + R0)). Accordingly, as a whole, the V1-phase stator winding 7V1 can be represented as 8R0+12R (= 4R0 + 10R + 4R0 + 2R) by adding the V1-phase winding 7V1-A and the V1-phase winding 7V1-B.

In the V2-phase stator winding 7V2, two toroid coils of the V2-phase winding 7V2-A are inserted into the fourth layer and the third layer within the range corresponding to 12 slots illustrated in FIG. 8, and accordingly, the position in the radial direction is represented as 4R0+10R (= 2 x (R0 + 3R + R0 + 2R)), and, two toroid coils of the V2-phase winding 7V2-B are inserted into the first layer and the second layer within the range corresponding to 12 slots illustrated in FIG. 8, and accordingly, the position in the radial direction is represented as 4R0+2R (= 2 x (R0 + R + R0)). Accordingly, as a whole, the V2-phase stator winding 7V2 can be represented as 8R0+12R (= 4R0 + 10R + 4R0 + 2R) by adding the V2-phase winding 7V2-A and the V2-phase winding 7V2-B.

In the W1-phase stator winding 7W1, two toroid coils of the W1-phase winding 7W1-A are inserted into the third layer within the range corresponding to 12 slots illustrated in FIG. 8, and accordingly, the position in the radial direction is represented as 4R0+8R (= 2 x (2R0 + 22•R)), and, two toroid coils of the W1-phase winding 7W1-B are inserted into the second layer within the range corresponding to 12 slots illustrated in FIG. 8, and accordingly, the position in the radial direction is represented as 4R0+4R (= 2 x (2R0 + 2R)). Accordingly, as a whole, the W1-phase stator winding 7W1 can be represented as 8R0+12R (= 4R0 + 8R + 4R0 + 4R) by adding the W1-phase winding 7W1-A and the W1-phase winding 7W1-B.

In the W2-phase stator winding 7W2, two toroid coils of the W2-phase winding 7W2-A are inserted into the third layer within the range corresponding to 12 slots illustrated in FIG. 8, and accordingly, the position in the radial direction is represented as 4R0+8R (= 2 x (2R0 + 2•2R)), and, two toroid coils of the W2-phase winding 7W2-B are inserted into the second layer within the range corresponding to 12 slots illustrated in FIG. 8, and accordingly, the position in the radial direction is represented as 4R0+4R (= 2 x (2R0 + 2R)). Accordingly, as a whole, the W2-phase stator winding 7W2 can be represented as 8R0+12R (= 4R0 + 8R + 4R0 + 4R) by adding the W2-phase winding 7W2-A and the W2-phase winding 7W2-B.

As a result of adding the radial distances of coils of each phase arranged inside the slots within the range corresponding to 12 slots, the radial distances of the stator windings of the U1, V1, W1, U2, V2, and W2 phases are the same as 8R0+12R to have the same value.

As described above, the inductance of each one of the stator windings of the U1, V1, W1, U2, V2, and W2 phases arranged in the slots is the same, whereby the unbalance of the inductance for each stator winding of each phase does not occur.

As above, by balancing the inductance of each phase, power generation currents are the same for each phase, the heating values of the stator windings and diodes are balanced, and accordingly, an increase in the temperature of the coils and the diodes can be suppressed, and an increase in the magnetic sound can be reduced by suppressing an increase in the magnetic exciting force, whereby the quality and the characteristics can be improved.

Here, the relation of connections of each phase coil will be described with reference to FIGS. 9 and 10.

In connecting the stator windings 7 of each phase, as illustrated in FIG. 9, in the U1-phase stator winding 7U1, the U1-phase winding 7U1-A and the U1-phase winding 7U1-B are connected in parallel, and, in the U2-phase stator winding 7U2, the U2-phase winding 7U2-A and the U2-phase winding 7U2-B are connected in parallel. Then, the U1-phase stator winding 7U1 and the U2-phase stator winding 7U2 are connected in series by using a lead wire 73U.

Similarly, in the V1-phase stator winding 7V1, the V1-phase winding 7V1-A and the V1-phase winding 7V1-B are connected in parallel, and, in the V2-phase stator winding 7V2, the V2-phase winding 7V2-A and the V2-phase winding 7V2-B are connected in parallel. Then, the V1-phase stator winding 7V1 and the V2-phase stator winding 7V2 are connected in series by using a lead wire 73V.

Similarly, in the W1-phase stator winding 7W1, the W1-phase winding 7W1-A and the W1-phase winding 7W1-B are connected in parallel, and, in the W2-phase stator winding 7W2, the W2-phase winding 7W2-A and the W2-phase winding 7W2-B are connected in parallel. Then, the W1-phase stator winding 7W1 and the W2-phase stator winding 7W2 are connected in series by using a lead wire 73W.

Next, the lead wire 71U-S of the U1-phase stator winding 7U1 and the lead wire 71W-E of the W1-phase stator winding 7W1 are connected, and, similarly, the lead wires 71U-E and 71V-S are connected, and the lead wires 71V-E and 71W-S are connected. Then, as a hexagonal connection, three connection points (a connection point between the lead wires 71U-S and 71W-E, a connection point between the lead wires 71U-E and 71V-S, and a connection point between the lead wires 71V-E and 71W-S) are connected to the rectifier 20.

In addition, as illustrated in FIG. 10, in the U1-phase stator winding 7U1, the U1-phase winding 7U1-A and the U1-phase winding 7U1-B are connected in parallel, and, in the U2-phase stator winding 7U2, the U2-phase winding 7U2-A and the U2-phase winding 7U2-B are connected in parallel. Then, the U1-phase stator winding 7U1 and the U2-phase stator winding 7U2 are connected in series by using a lead wire 73U.

Similarly, in the V1-phase stator winding 7V1, the V1-phase winding 7V1-A and the V1-phase winding 7V1-B are connected in parallel, and, in the V2-phase stator winding 7V2, the V2-phase winding 7V2-A and the V2-phase winding 7V2-B are connected in parallel. Then, the V1-phase stator winding 7V1 and the V2-phase stator winding 7V2 are connected in series by using a lead wire 73V.

Similarly, in the W1-phase stator winding 7W1, the W1-phase winding 7W1-A and the W1-phase winding 7W1-B are connected in parallel, and, in the W2-phase stator winding 7W2, the W2-phase winding 7W2-A and the W2-phase winding 7W2-B are connected in parallel. Then, the W1-phase stator winding 7W1 and the W2-phase stator winding 7W2 are connected in series by using a lead wire 73W.

Next, the lead wire 71U-E of the U1-phase stator winding 7U1, the lead wire 71V-E of the V1-phase stator winding 7V1, and the lead wire 71W-E of the W2-phase stator winding 7W2 are connected as a neutral point, and the lead wires 71U-S, 71V-S, and 71W-S are connected to the rectifier 20. Here, the connection is an electrical connection and is performed by welding or soldering.

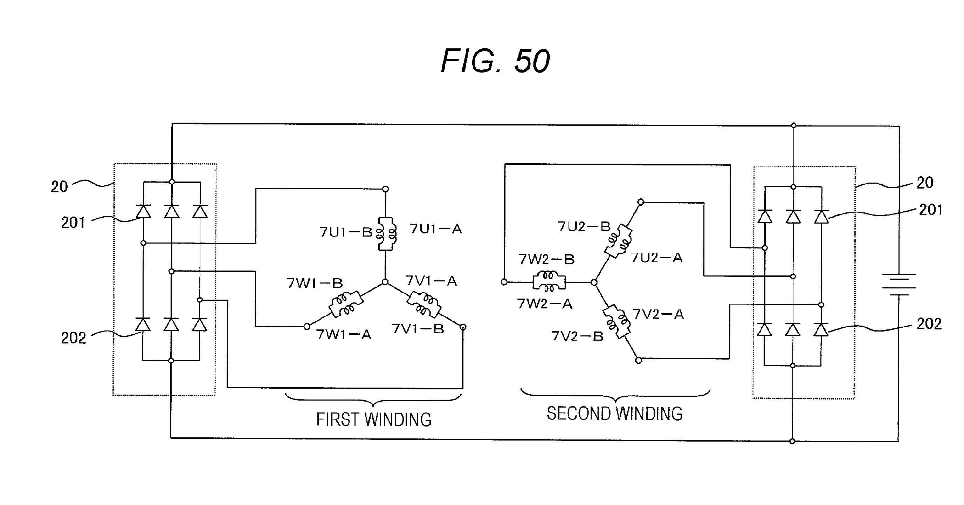

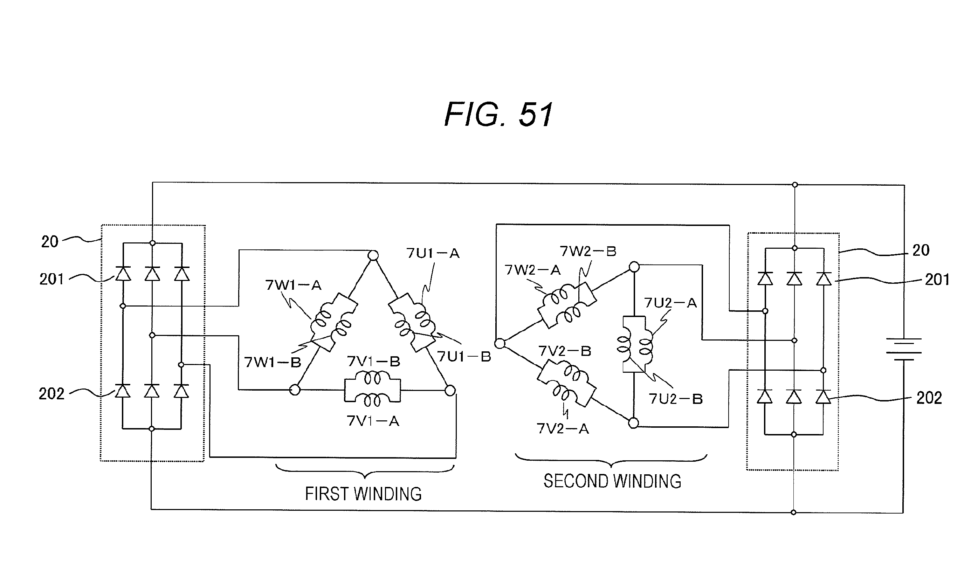

For example, as illustrated in FIGS. 50 and 51, in a stator having two three-phase windings having electrical angles of which the phases are shifted from each other by 30 degrees, in the case of a power generator, the number of rectifier devices (diodes) 201 and 202 and switching devices (MOS-FETs or the like) used in the rectifier 20 converting AC power into DC power doubles, and there is concern that the price becomes high, and the area occupied by the rectifier 20 is increased, whereby the installation place is limited so as to lower the degree of freedom in design.

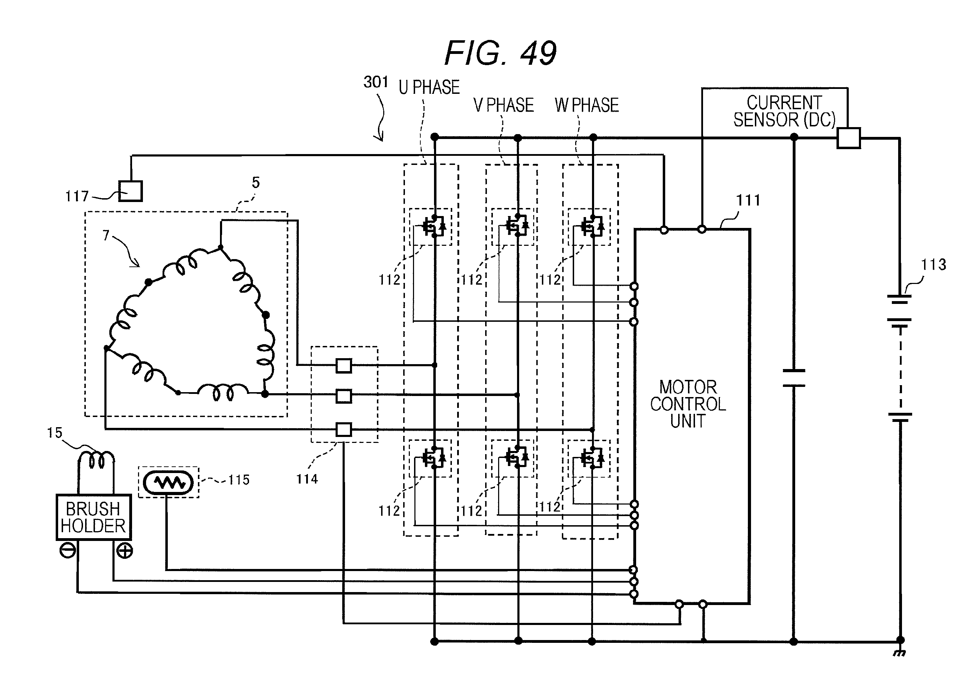

In contrast to this, according to this embodiment, as illustrated in FIGS. 9 and 10, since a configuration is employed in which the U1 phase and the U2 phase, the V1 phase and the V2 phase, and the W1 phase and the W2 phase respectively having mutually-different electrical angles are connected in series, the number of connections with the rectifier 20 can be decreased to be less than that of the configuration example illustrated in FIGS. 49 and 50, whereby the number of the diode devices 201 and 202 can be suppressed to be minimal. Accordingly, by decreasing the number of components and the number of assembly processes, the cost is reduced, whereby the vehicle AC power generator 23 can be provided at low price.

In addition, according to this embodiment, although windings of six phases are configured, control can be performed by using a rectifier device and voltage control that are equivalent to those of three-phase windings, and the vehicle AC power generator 23 that is a rotating electric machine having a low noise level can be realized by only changing the stator.

According to this embodiment, the leakage inductance is equivalent for each phase, and the inductance of each phase is equalized, whereby the power generation currents of each phase are balanced. Accordingly, the vehicle AC power generator 23 having high output and high efficiency can be acquired. In addition, by connecting phases having mutually-different electrical angles in series, a harmonic component can be decreased, and accordingly, a magnetic exciting force can be decreased to be less than that of an ordinary three-phase winding. Accordingly, the generation of a magnetic sound according to the magnetic exciting force can be suppressed, and therefore the vehicle AC power generator 23 having low noise can be realized, whereby the in-vehicle comfortableness can be improved.

In addition, in the first embodiment described above, while a case has been described as an example in which the stator windings 7 are equally divided into a winding A in which the connecting wire 75a of each phase is arranged on the coil end portion 72a side and a winding B in which the connecting wire 75b of each phase is arranged on the coil end portion 72b side, the configuration is not limited thereto, and, for example, the stator winding may be configured by only the winding A or the winding B, and, in such a case, the same advantages as those of this embodiment can be acquired.

Furthermore, the stator has been described in which the winding pitch of the stator winding is 4/6 (an electrical angle of 120 degrees), a configuration of the stator in which the winding pitch of the stator winding is 5/6 (an electrical angle of 150 degrees) may be employed, and, in such a case, the same advantages can be acquired.

### [Second Embodiment]

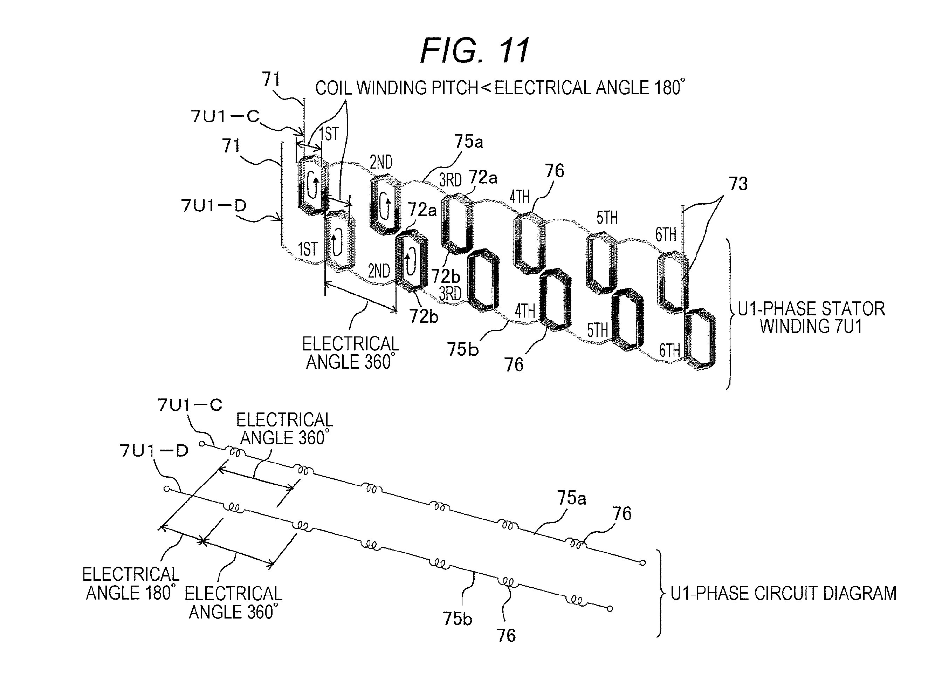

Next, the configuration of a rotating electric machine according to a second embodiment of the present invention will be described with reference to FIGS. 11 to 15. The whole configuration of the rotating electric machine according to this embodiment is similar to that illustrated in FIG. 1. In addition, the configuration of a stator of the rotating electric machine according to this embodiment is similar to that illustrated in FIG. 5.

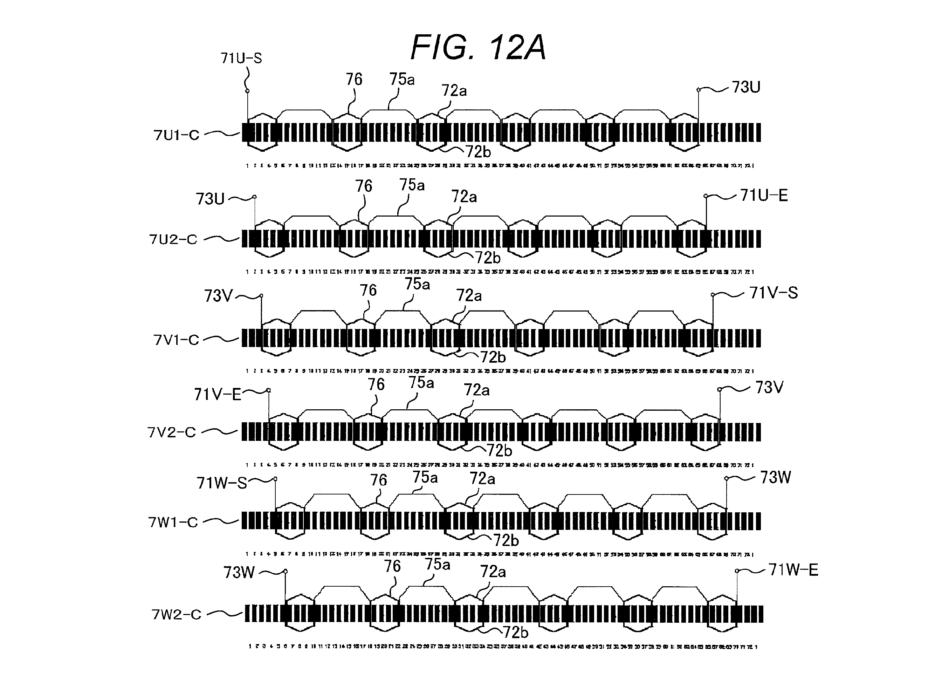

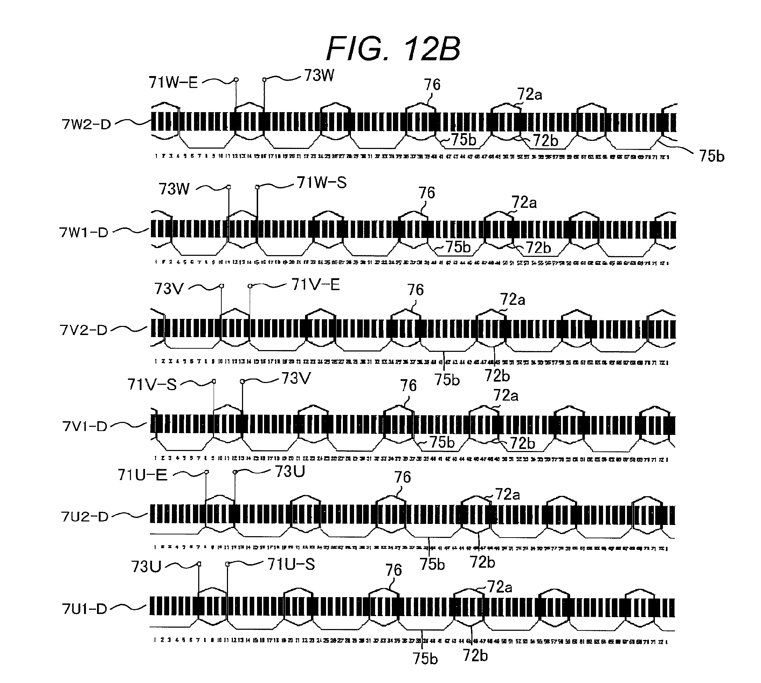

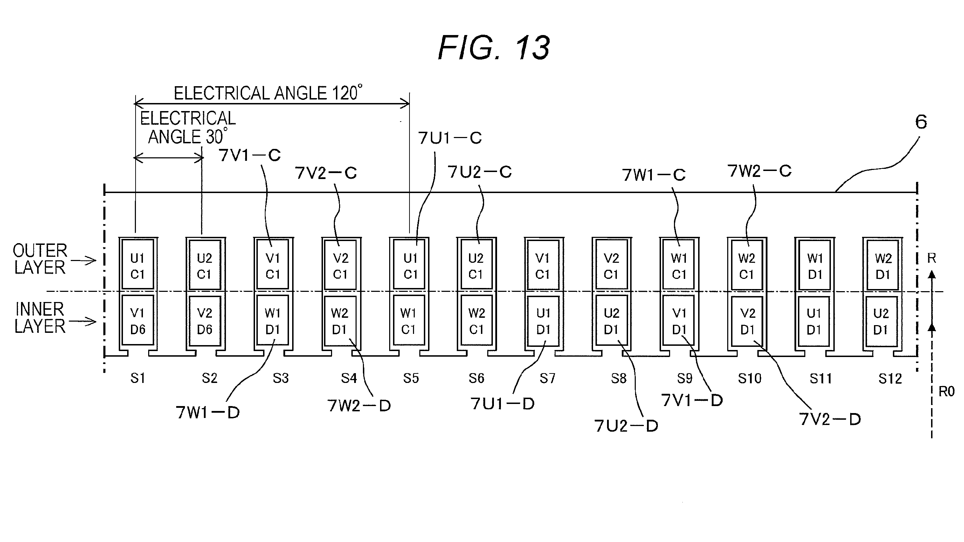

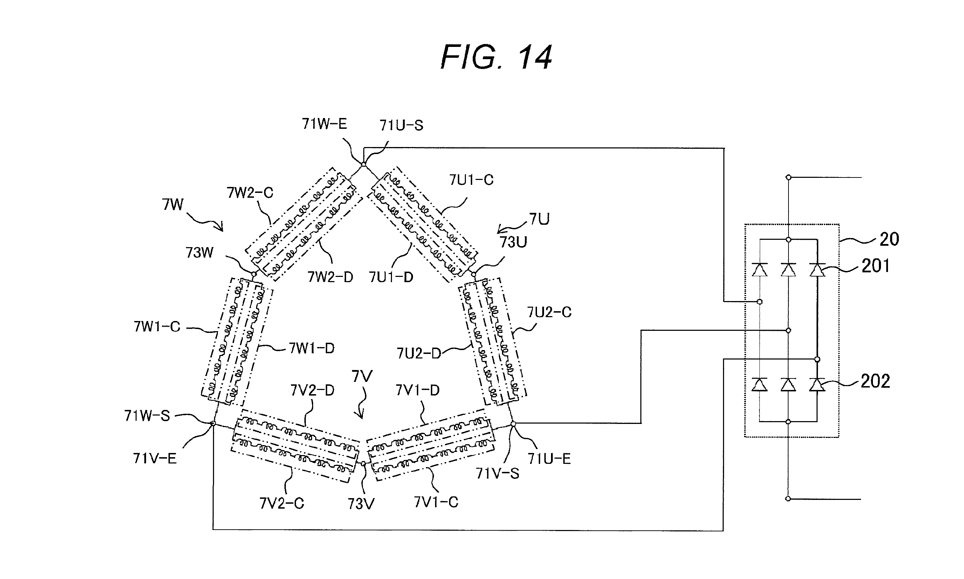

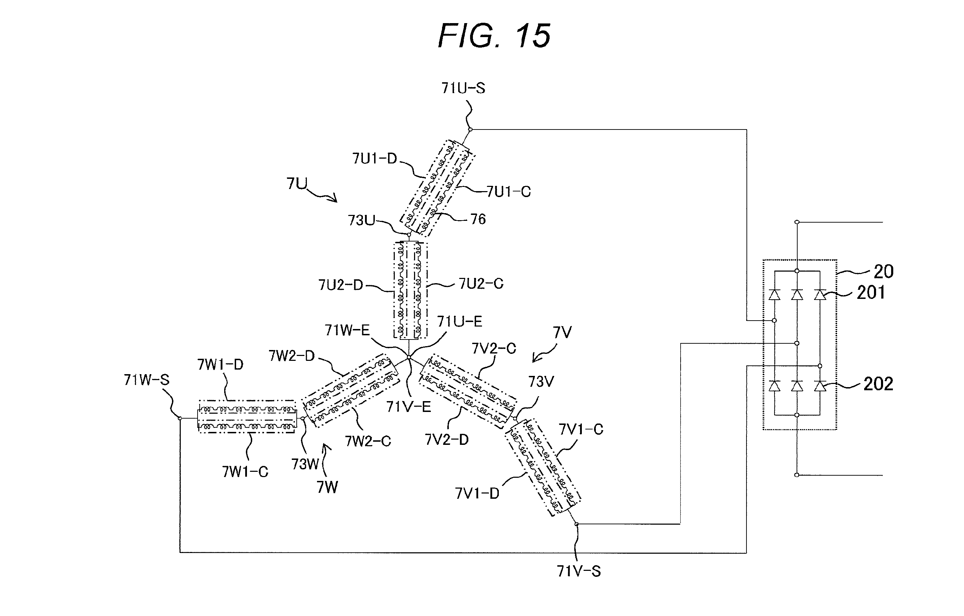

FIG. 11 illustrates a perspective view and a circuit diagram of a U1-phase stator winding. FIG. 12A is a layout drawing of a stator winding C of each phase viewed from the inner circumference side of a stator iron core in the stator. FIG. 12B is a layout drawing of a stator winding D of each phase viewed from the inner circumference side of the stator iron core in the stator. FIG. 13 is a layout drawing of coils of each phase of the stator winding inside slots. FIG. 14 is a diagram of a hexagonal connection of the stator windings of each phase. FIG. 15 is a diagram of a radial connection of the stator windings of each phase.

As illustrated in FIG. 11, the U1-phase stator winding 7U1 of the stator winding 7 is formed by a U-phase winding 7U1-C and a U1-phase winding 7U1-D. The U-phase winding 7U1-C and a U1-phase winding 7U1-D are configured in a form in which a plurality of molded coils 76 wound and molded in a ring shape are connected by using connecting wires 75a and 75b, and, in the case of 12 pole 6-phase winding as this example, the number of toroid coils 76 is six, and the toroid coils 76 are connected by using the connecting wire 75a or 75b and are continuously formed.

The connecting wire 75a of the U1-phase winding 7U1-C is arranged on the upper side illustrated in the figure, that is, the coil end portion 72a side, and the connecting wire 75b of the U1-phase winding 7U1-D is arranged on the lower side illustrated in the figure, in other words, the coil end portion 72b side. The circuit diagram of the first U1-phase winding 7U1-C and the second U1-phase winding 7U1-D illustrated on the upper side in FIG. 11 is as illustrated on the lower side in FIG. 11.

The arrangement pitch of the toroid coils 76 of the U1-phase winding 7U1-C and the U1-phase winding 7U1-D is an electrical angle of 360 degrees, which is twice the pitch of magnetic poles. The U1-phase winding 7U1-C and the U1-phase winding 7U1-D have electrical angles shifted by 180 degrees and are inserted into the slots, thereby forming the U1-phase stator winding 7U1.

In addition, the number of slots of the stator iron core is 72. At this time, the front-side claw-shaped magnetic pole 11 of the rotator illustrated in FIG. 1 includes six claw portions, and the rear-side claw-shaped magnetic pole 12 include six claw portions. In other words, the rotator has 12 poles.

As illustrated in FIG. 11, the arrangement pitch of toroid coils 76 of the U1-phase winding 7U1-C and the U1-phase winding 7U1-D is an electrical angle of 360 degrees that is two times of the pitch of magnetic poles, and the winding pitch of the toroid coil 76 is less than 180 degrees, which is less than the pitch of magnetic poles, to be fractional pitch winding. In the case of this example, the winding pitch of the toroid coil 76 is a 4/6 pitch (an electrical angle of 120 degrees) corresponding to more than three slots.

All the toroid coils 76 of the U1-phase winding 7U1-C are wound counterclockwise, and the coils that are adjacent to each other are connected by using the connecting wire 75a on the coil end portion 72a side. All the toroid coils 76 of the U2-phase winding 7U1-D are wound counterclockwise, and the coils that are adjacent to each other are connected by using the connecting wire 75b on the coil end portion 72b side.

The V1-phase stator winding 7V1, the W1-phase stator winding 7W1, the U2-phase stator winding 7U2, the V2-phase stator winding 7V2, and the W2-phase stator winding 7W2, similarly to the U1-phase stator winding 7U1, are respectively divided into V1-phase windings 7V1-C and 7V1-D, W1-phase windings 7W1-C and 7W1-D, U2-phase windings 7U2-C and 7U2-D, V2-phase windings 7V2-C and 7V2-D, and W2-phase windings 7W2-C and 7W2-D.

FIGS. 12A and 12B are layout drawings of stator windings 7 of each phase viewed from the inner circumferential face of the stator iron core 6. FIG. 12A is a layout drawing of a winding C in which the connecting wire 75a is arranged on lead wire 71 side, and FIG. 12B is a layout drawing of a winding D in which the connecting wire 75b is arranged on a side opposite to the lead wire 71 side.

While FIGS. 12A and 12B illustrate the arrangements of coils of each phase, here, the stator winding 7 is configured by windings of six phases of U1, V1, W1, U2, V2, and W2 phases having mutually-different electrical angles and is configured by. The U1 and U2 phases are arranged to be adjacently shifted by one slot, and, similarly, the V1 and V2 phases and the W1 and W2 phases are arranged to be adjacently shifted by one slot. In this example, an electrical angle of one slot corresponds to 30 degrees.

Each stator winding 7, as illustrated in FIG. 12A, is inserted into the inside of the slots in order of the U1-phase winding 7U1-C, the U2-phase winding 7U2-C, the V1-phase winding 7V1-C, the V2-phase winding 7V2-C, the W1-phase winding 7W1-C, and the W2-phase winding 7W2-C and, next, as illustrated in FIG. 12B, is inserted into the inside of the slots in order of the W2-phase winding 7W2-D, the W1-phase winding 7W1-D, the V2-phase winding 7V2-D, the V1-phase winding 7V2-D, the U2-phase winding 7U2-D, and the U1-phase winding 7U1-D, and, as illustrated in FIG. 13, the windings are sequentially arranged inside the slots.

The arrangement of coils inside the slots in the stator winding 7, as illustrated in FIG. 13, is an arrangement of two layer windings divided into two in the radial direction. For example, when the U1-phase stator winding 7U1 is focused, the U1-phase winding 7U1-C is arranged in the outer layer, and the U1-phase winding 7U1-D is arranged in the inner layer. As above, the stator windings of each phase are arranged to be distributed uniformly in the outer layer and the inner layer, and, by connecting the divided stator windings 7 of each phase in series, the inductance of each phase is equalized, whereby the power generation currents are balanced.

Here, for example, a distance from the center of the rotator to the center position of the inner layer in the coil radial direction is assumed to be R0, and, with the center position of the inner layer in the coil radial direction being used as a reference, the center position of the outer layer in the coil radial direction is assumed to be R0+R.

In the U1-phase stator winding 7U1, one toroid coil of the U1-phase winding 7U1-C is inserted into the outer layer within a range corresponding to 12 slots illustrated in FIG. 13, and accordingly, the position in the radial direction is represented as 2R0+2R, and, one toroid coil of the U1-phase winding 7U1-D is inserted into the inner layer within the range corresponding to 12 slots illustrated in FIG. 13, and accordingly, the position in the radial direction is represented as 2R0. Accordingly, as a whole, the U1-phase stator winding 7U1 can be represented as 4R0+2R (= 2R0 + 2R + 2R0) by adding the U1-phase winding 7U1-C and the U1-phase winding 7U1-D.

In the U2-phase stator winding 7U2, one toroid coil of the U2-phase winding 7U2-C is inserted into the outer layer within the range corresponding to 12 slots illustrated in FIG. 13, and accordingly, the position in the radial direction is represented as 2R0+2R, and, one toroid coil of the U2-phase winding 7U2-D is inserted into the inner layer within the range corresponding to 12 slots illustrated in FIG. 13, and accordingly, the position in the radial direction is represented as 2R0. Accordingly, as a whole, the U2-phase stator winding 7U2 can be represented as 4R0+2R (= 2R0 + 2R + 2R0) by adding the U2-phase winding 7U2-C and the U2-phase winding 7U2-D.

In the V1-phase stator winding 7V1, one toroid coil of the V1-phase winding 7V1-C is inserted into the outer layer and the inner layer within the range corresponding to 12 slots illustrated in FIG. 13, and accordingly, the position in the radial direction is represented as 2R0 + R (= R0 + R + R0), and, one toroid coil of the V1-phase winding 7V1-D is inserted into the outer layer and the inner layer within the range corresponding to 12 slots illustrated in FIG. 13, and accordingly, the position in the radial direction is represented as 2R0 + R (= R0 + R + R0). Accordingly, as a whole, the V1-phase stator winding 7V1 can be represented as 4R0 + 2R (= 2R0 + R + 2R0 + R) by adding the V1-phase winding 7V1-C and the V1-phase winding 7V1-D.

In the V2-phase stator winding 7V2, one toroid coil of the V2-phase winding 7V2-C is inserted into the outer layer and the inner layer within the range corresponding to 12 slots illustrated in FIG. 13, and accordingly, the position in the radial direction is represented as 2R0 + R (= R0 + R + R0), and, one toroid coil of the V2-phase winding 7V2-D is inserted into the outer layer and the inner layer within the range corresponding to 12 slots illustrated in FIG. 13, and accordingly, the position in the radial direction is represented as 2R0 + R (= R0 + R + R0). Accordingly, as a whole, the V2-phase stator winding 7V2 can be represented as 4R0 + 2R (= 2R0 + R + 2R0 + R) by adding the V2-phase winding 7V2-C and the V2-phase winding 7V2-D.

In the W1-phase stator winding 7W1, one toroid coil of the W1-phase winding 7W1-C is inserted into the outer layer within the range corresponding to 12 slots illustrated in FIG. 13, and accordingly, the position in the radial direction is represented as 2R0 + 2R, and, one toroid coil of the W1-phase winding 7W1-D is inserted into the inner layer within the range corresponding to 12 slots illustrated in FIG. 13, and accordingly, the position in the radial direction is represented as 2R0. Accordingly, as a whole, the W1-phase stator winding 7W1 can be represented as 4R0 + 2R (= 2R0 + 2R + 2R0) by adding the W1-phase winding 7W1-C and the W1-phase winding 7W1-D.

In the W2-phase stator winding 7W2, one toroid coil of the W2-phase winding 7W2-C is inserted into the outer layer within the range corresponding to 12 slots illustrated in FIG. 13, and accordingly, the position in the radial direction is represented as 2R0 + 2R, and, one toroid coil of the W2-phase winding 7W2-D is inserted into the inner layer within the range corresponding to 12 slots illustrated in FIG. 13, and accordingly, the position in the radial direction is represented as 2R0. Accordingly, as a whole, the W2-phase stator winding 7W2 can be represented as 4R0 + 2R (= 2R0 + 2R + 2R0) by adding the W2-phase winding 7W2-C and the W2-phase winding 7W2-D.

As a result of adding the radial distances of coils of each phase arranged inside the slots within the range corresponding to 12 slots, the radial distances of the stator windings of the U1, V1, W1, U2, V2, and W2 phases are the same as 4R0 + 2R to have the same value.

As described above, the inductance of each one of the stator windings of the U1, V1, W1, U2, V2, and W2 phases arranged in the slots is the same, whereby the unbalance of the inductance for each stator winding of each phase does not occur.

As above, by balancing the inductance of each phase, power generation currents are the same for each phase, the heating values of the stator windings and diodes are balanced, and accordingly, an increase in the temperature of the coils and the diodes can be suppressed, and an increase in the magnetic sound can be reduced by suppressing an increase in the magnetic exciting force, whereby the quality and the characteristics can be improved.

Here, the relation of connections of each phase coil will be described with reference to FIGS. 14 and 15.

In connecting the stator windings 7 of each phase, as illustrated in FIG. 14, in the U1-phase stator winding 7U1, the U1-phase winding 7U1-C and the U1-phase winding 7U1-D are connected in parallel, and, in the U2-phase stator winding 7U2, the U2-phase winding 7U2-C and the U2-phase winding 7U2-D are connected in parallel. Then, the U1-phase stator winding 7U1 and the U2-phase stator winding 7U2 are connected in series by using a lead wire 73U.

Similarly, in the V1-phase stator winding 7V1, the V1-phase winding 7V1-C and the V1-phase winding 7V1-D are connected in parallel, and, in the V2-phase stator winding 7V2, the V1-phase winding 7V2-C and the V1-phase winding 7V2-D are connected in parallel. Then, the V1-phase stator winding 7V1 and the V2-phase stator winding 7V2 are connected in series by using a lead wire 73V.

Similarly, in the W1-phase stator winding 7W1, the W1-phase winding 7W1-C and the W1-phase winding 7W1-D are connected in parallel, and, in the W2-phase stator winding 7W2, the W2-phase winding 7W2-D and the W2-phase winding 7W2-D are connected in parallel. Then, the W1-phase stator winding 7W1 and the W2-phase stator winding 7W2 are connected in series by using a lead wire 73W.

Next, the lead wire 71U-S of the U1-phase stator winding 7U1 and the lead wire 71W-E of the W1-phase stator winding 7W1 are connected, and, similarly, the lead wires 71U-E and 71V-S are connected, and the lead wires 71V-E and 71W-S are connected. Then, as a hexagonal connection, three connection points (a connection point between the lead wires 71U-S and 71W-E, a connection point between the lead wires 71U-E and 71V-S, and a connection point between the lead wires 71V-E and 71W-S) are connected to the rectifier 20.

In addition, as illustrated in FIG. 15, in the U1-phase stator winding 7U1, the U1-phase winding 7U1-C and the U1-phase winding 7U1-D are connected in parallel, and, in the U2-phase stator winding 7U2, the U2-phase winding 7U2-C and the U2-phase winding 7U2-D are connected in parallel. Then, the U1-phase stator winding 7U1 and the U2-phase stator winding 7U2 are connected in series by using a lead wire 73U.

Similarly, in the V1-phase stator winding 7V1, the V1-phase winding 7V1-C and the V1-phase winding 7V1-D are connected in parallel, and, in the V2-phase stator winding 7, the V2-phase winding 7V2-C and the V2-phase winding 7V2-D are connected in parallel. Then, the V1-phase stator winding 7V1 and the V2-phase stator winding 7V2 are connected in series by using a lead wire 73V.

Similarly, in the W1-phase stator winding 7W1, the W1-phase winding 7W1-C and the W1-phase winding 7W1-D are connected in parallel, and, in the W2-phase stator winding 7W2, the W2-phase winding 7W2-C and the W2-phase winding 7W2-D are connected in parallel. Then, the W1-phase stator winding 7W1 and the W2-phase stator winding 7W2 are connected in series by using a lead wire 73W.

Next, the lead wire 71U-E of the U1-phase stator winding 7U1, the lead wire 71V-E of the V1-phase stator winding 7V1, and the lead wire 71W-E of the W2-phase stator winding 7W2 are connected as a neutral point, and the lead wires 71U-S, 71V-S, and 71W-S are connected to the rectifier 20 so as to form a radial connection with the neutral point being used as a reference.

As described above, according to this embodiment, since a configuration is employed in which the U1 phase and the U2 phase, the V1 phase and the V2 phase, and the W1 phase and the W2 phase respectively having mutually-different electrical angles are connected in series, the number of connections with the rectifier 20 can be decreased to be less than that of the configuration example illustrated in FIGS. 50 and 51, whereby the number of the diode devices 201 and 202 can be suppressed to be minimal. Accordingly, by decreasing the number of components and the number of assembly processes, the cost is reduced, whereby the rotating electric machine can be provided at low price.

In addition, although windings of six phases are configured, control can be performed by using a rectifier device and voltage control in the case of a power generator and by using an inverter and a motor driving system in the case of a motor, which are equivalent to those of three-phase windings, and the rotating electric machine having a low noise level can be realized by only changing the rotating electric machine.

According to this embodiment, the leakage inductance is equivalent for each phase, and the inductance of each phase is equalized, whereby the power generation currents of each phase are balanced. Accordingly, a rotating electrical machine having high output and high efficiency can be acquired. In addition, by connecting phases having mutually-different electrical angles in series, a harmonic component can be decreased, and accordingly, a magnetic exciting force can be decreased to be less than that of an ordinary three-phase winding. Accordingly, the generation of a magnetic sound according to the magnetic exciting force can be suppressed, and therefore a rotating electric machine having low noise can be realized, whereby the in-vehicle comfortableness can be improved.

In addition, in the second embodiment described above, while a case has been described as an example in which the stator windings 7 are equally divided into a winding C in which the connecting wire 75a of each phase is arranged on the coil end portion 72a side and a winding D in which the connecting wire 75b of each phase is arranged on the coil end portion 72b side, the configuration is not limited thereto, and, for example, the stator winding may be configured by only the winding C or the winding D, and, in such a case, the same advantages as those of this embodiment can be acquired.

Furthermore, the stator has been described in which the winding pitch of the stator winding is 4/6 (an electrical angle of 120 degrees), a configuration of the stator in which the winding pitch of the stator winding is 5/6 (an electrical angle of 150 degrees) may be employed, and, in such a case, the same advantages can be acquired.

### [Third Embodiment]

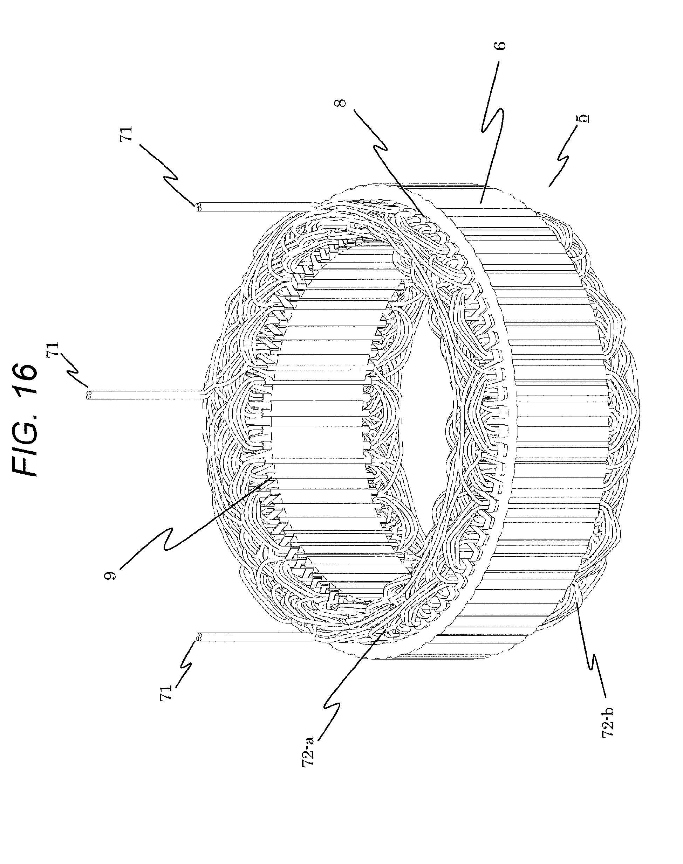

Next, the configuration of a rotating electric machine according to a third embodiment of the present invention will be described with reference to FIGS. 16 to 21. The whole configuration of the rotating electric machine according to this embodiment is similar to that illustrated in FIG. 1.

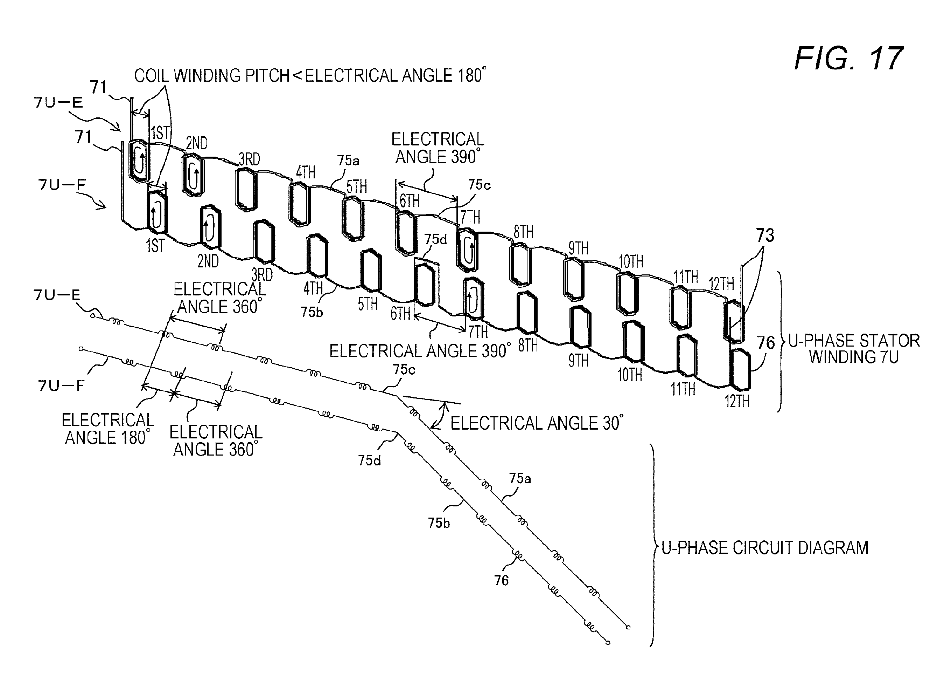

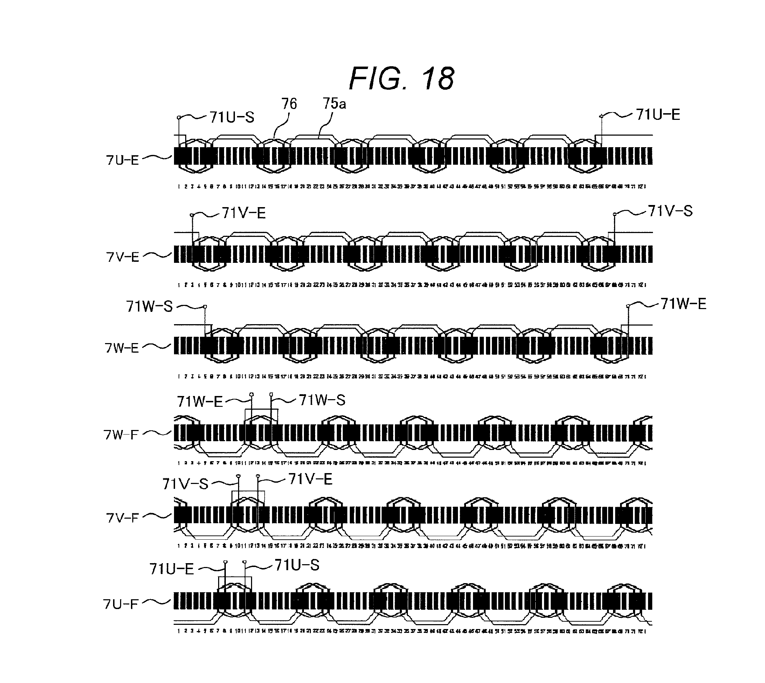

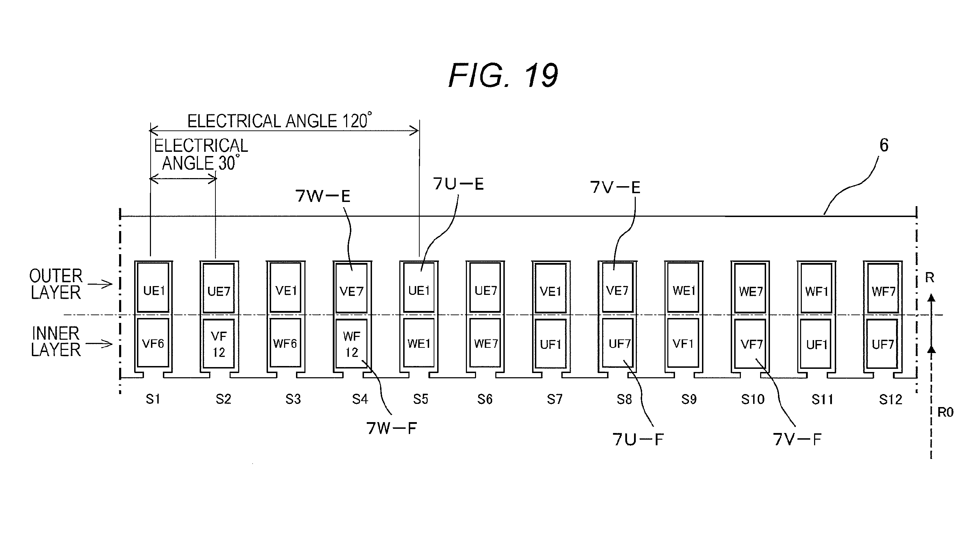

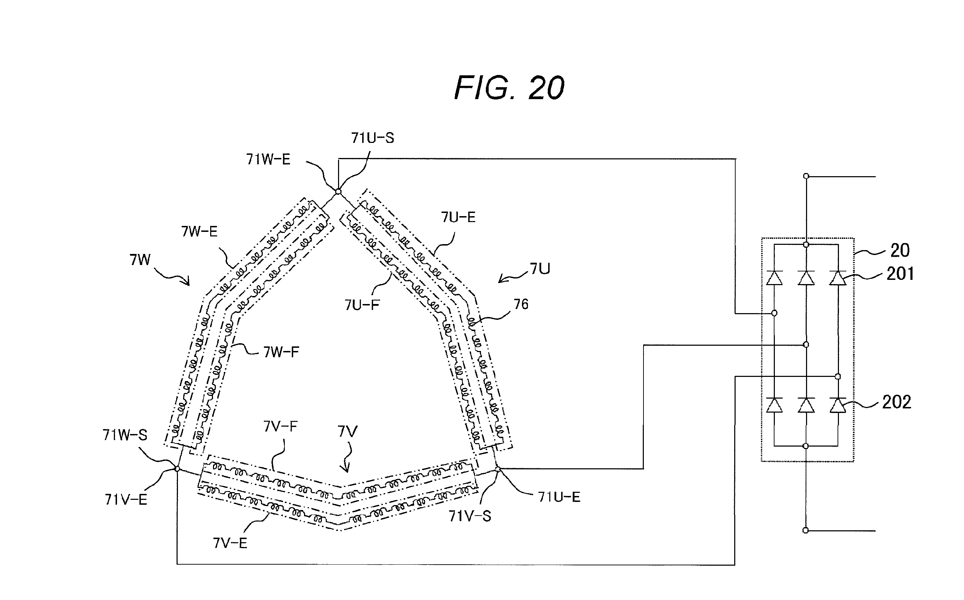

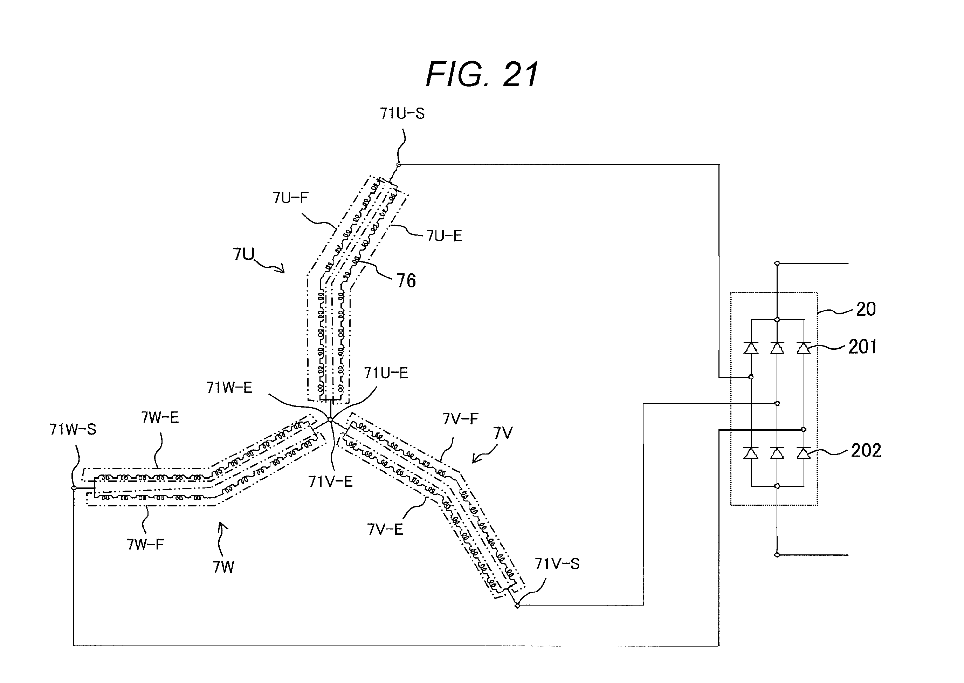

FIG. 16 is a perspective view of a stator. FIG. 17 illustrates a perspective view and a circuit diagram of a U-phase stator winding. FIG. 18 is a layout drawing of a stator winding of each phase viewed from the inner circumference side of a stator iron core in the stator. FIG. 19 is a layout drawing of coils of each phase inside slots of the stator winding. FIG. 20 is a diagram of a hexagonal connection of the stator windings of each phase. FIG. 21 is a diagram of a radial connection of the stator windings of each phase.

In the first embodiment and the second embodiment described above, after six stator windings 7 of mutually-different phases are installed to the stator iron core 6, the stator windings of two phases having mutually-different electrical angles are connected in series so as to form three sets of combined stator windings 7, and, in a connection, the lead wires 71 equivalent to three-phase windings are configured at three positions and are configured to be connected to the rectifier 20. In contrast to this, in this embodiment, stator windings of two phases having mutually-different electrical angles are configured to be continuous without being connected to each other.

As illustrated in FIG. 16, the stator 5 installs the stator windings 7 of each phase through the ring-shaped stator iron core 6 having a plurality of slots on the circumferential direction of the inner circumferential face and U-shaped insulating sheets 8 installed to the inner circumferential face of each slot and includes slot wedges 9 on the slot innermost circumference side so as to maintain the stator windings 7 inside slots. In this example, the number of slots is 72.

Portions protruding from the slots of the stator ion core 6 are coil ends 72a and 72b stretching over two slots. In addition, as illustrated in the figure, four lead wires 71 are extracted from three places and are connected to the rectifier 20.

The stator windings 7 are configured by stator windings of three phases U to W, and the stator winding of each phase is configured by stator windings of two types having mutually-different electrical angles. In this example, inside the stator windings of each phase, the stator windings 7 are continuously configured by toroid coils 76 having a phase difference of an electrical angle of 30 degrees.

As illustrated in FIG. 17, the U-phase stator winding 7U of the stator winding 7 is formed by a first U-phase winding 7U-E and a second U-phase winding 7U-F. Each one of the U-phase windings 7U-E and 7U-F is configured in a form in which a plurality of coils 76 wound and molded in a ring shape are connected by using connecting wires 75a and 75b, and, in the case of three-phase windings having 12 poles, as in this example, the number of toroid coils 76 is 12, and the toroid coils 76 are connected by using the connecting wires 75a or 75b so as to be continuously formed.

The U-phase winding 7U-E has a form of the stator winding in which the connecting wire 75a is arranged on the coil end portion 72a side, and each toroid coil 76 is formed to be wound counterclockwise. From the first toroid coil 76 to the sixth toroid coil 76 from the lead wire 71 side, the toroid coils 76 are arranged at an interval of an electrical angle of 360 degrees and are connected by using the connecting wire 75a, thereby forming a first toroid coil group.

In order to arrange a phase difference of an electrical angle of 30 degrees between the 6th and 7th toroid coils 76, the seventh toroid coil 76 is prepared in an arrangement in which an electrical angle of 390 degrees is shifted, and the 6th and 7th toroid coils 76 are connected by using the connecting wire 75c. The 7th to 12th toroid coils 76 are rearranged at an interval of an electrical angle of 360 degrees, and the toroid coils 76 are continuously connected by using the connecting wire 75a, thereby forming a second toroid coil group.

The U-phase winding 7U-F has a form of the stator winding 7 in which the connecting wire 75b is arranged on the coil end 72b side, and each toroid coil 76 is formed to be wound clockwise. Similarly to the U-phase winding 7U-E, from the first toroid coil 76 to the sixth toroid coil 76 from the lead wire 71 side, the toroid coils 76 are arranged at an interval of an electrical angle of 360 degrees and are connected by using the connecting wire 75b, thereby forming the first toroid coil group.

In order to arrange a phase difference of an electrical angle of 30 degrees between the 6th and 7th toroid coils 76, the seventh toroid coil 76 is prepared in an arrangement in which an electrical angle of 390 degrees is shifted, and the 6th and 7th toroid coils 76 are connected by using the connecting wire 75d. The 7th to 12th toroid coils 76 are arranged at an interval of an electrical angle of 360 degrees, and the toroid coils 76 are continuously connected by using the connecting wire 75b, thereby forming a second toroid coil group.

In addition, the number of slots of the stator iron core 6 is 72. At this time, the front-side claw-shaped magnetic pole 11 of the rotator illustrated in FIG. 1 includes six claw portions, and the rear-side claw-shaped magnetic pole 12 include six claw portions. In other words, the rotator has 12 poles.

The winding pitch of the toroid coils 76 of the U-phase windings 7U-E and 7U-F is less than an electrical angle of 180 degrees, which is less than the pitch of the magnetic poles, to be fractional pitch winding. The winding pitch of the toroid coil 76 illustrated in this example is a 4/6 pitch (an electrical angle of 120 degrees) corresponding to more than three slots.

The V-phase stator winding 7V and the W-phase stator winding 7W, similarly to the U-phase stator winding 7U, are divided into V-phase windings 7V-E and 7V-F and W-phase windings 7W-E and 7W-F.

FIG. 18 is a layout drawing of stator windings 7 of each phase viewed from the inner circumferential face of the stator iron core 6.

While FIG. 18 illustrates the coil arrangement of each phase, here, the stator winding 7 is configured by stator windings of three types of U, V, and W phases.

The stator windings 7 of each phase, as illustrated in FIG. 18, are inserted into the inside of the slots in order of the U-phase winding 7U-E, the V-phase winding 7V-E, and the W-phase winding 7W-E and, next, are inserted into the inside of the slots in order of the W-phase winding 7W-F, the V-phase winding 7V-F, and the U-phase winding 7U-F, and, as illustrated in FIG. 19, the stator windings are sequentially arranged in the inside of the slots.

The arrangement of coils inside the slots in the stator winding 7, as illustrated in FIG. 19, is an arrangement of two layer windings divided into two in the radial direction. For example, when the U-phase stator winding 7U is focused, the U-phase winding 7U-E is arranged in the outer layer, and the U-phase winding 7U-F is arranged in the inner layer. As above, the stator windings of each phase are arranged to be distributed uniformly in the outer layer and the inner layer, and, by connecting the divided stator windings 7 of each phase in series, the inductance of each phase is equalized, whereby the power generation currents are balanced.

Here, for example, a distance from the center of the rotator to the center position of the inner layer in the coil radial direction is assumed to be R0, and, with the center position of the inner layer in the coil radial direction being used as a reference, the center position of the outer layer in the coil radial direction is assumed to be R0 + R.

In the U-phase stator winding 7U, two toroid coils of the U-phase winding 7U-E are inserted into the outer layer within a range corresponding to 12 slots illustrated in FIG. 19, and accordingly, the position in the radial direction is represented as 4R0 + 4R, and, two toroid coils of the U-phase winding 7U-F are inserted into the inner layer within the range corresponding to 12 slots illustrated in FIG. 19, and accordingly, the position in the radial direction is represented as 4R0. Accordingly, as a whole, the U-phase stator winding 7U can be represented as 8R0 + 4R (= 4R0 + 4R + 4R0) by adding the U-phase winding 7U-E and the U-phase winding 7U-F.

In the V-phase stator winding 7V, two toroid coils of the V-phase winding 7V-E are inserted into the outer layer within the range corresponding to 12 slots illustrated in FIG. 19, and accordingly, the position in the radial direction is represented as 4R0 + 4R, and, two toroid coils of the V-phase winding 7V-F are inserted into the inner layer within the range corresponding to 12 slots illustrated in FIG. 19, and accordingly, the position in the radial direction is represented as 4R0. Accordingly, as a whole, the V-phase stator winding 7V can be represented as 8R0 + 4R (= 4R0 + 4R + 4R0) by adding the V-phase winding 7V-E and the V-phase winding 7V-F.

In the W-phase stator winding 7W, within the range corresponding to 12 slots illustrated in FIG. 19, one toroid coil of the W-phase winding 7W-E is inserted into the outer layer, one toroid coil thereof is inserted into the inner layer, and accordingly, the position in the radial direction is represented as 4R0 + 2R, and, within the range corresponding to 12 slots illustrated in FIG. 19, one toroid coil of the W-phase winding 7W-F is inserted into the outer layer, one toroid coil thereof is inserted into the inner layer, and accordingly, the position in the radial direction is represented as 4R0 + 2R. Accordingly, as a whole, the W-phase stator winding 7W can be represented as 8R0 + 4R (= 4R0 + 2R + 4R0 + 2R) by adding the W-phase winding 7W-E and the W-phase winding 7W-F.

As a result of adding the radial distances of coils of each phase arranged inside the slots within the range corresponding to 12 slots, the radial distances of the stator windings of the U, V, and W phases are the same as 8R0 + 4R to have the same value.

As described above, the inductance of each one of the stator windings of the U, V, and W phases arranged in the slots is the same, whereby the unbalance of the inductance for each stator winding of each phase does not occur.

As above, by balancing the inductance of each phase, power generation currents are the same for each phase, the heating values of the stator windings and diodes are balanced, and accordingly, an increase in the temperature of the coils and the diodes can be suppressed, and an increase in the magnetic sound can be reduced by suppressing an increase in the magnetic exciting force, whereby the quality and the characteristics can be improved.

Here, the relation of connections of each phase coil will be described with reference to FIGS. 20 and 21.

In connecting the stator windings 7 of each phase, as illustrated in FIG. 20, in the U-phase stator winding 7U, the U-phase winding 7U-E and the U-phase winding 7U-F are connected in parallel, and, in the V-phase stator winding 7V, the V-phase winding 7V-E and the V-phase winding 7V-F are connected in parallel, and, in the W-phase stator winding 7W, the W-phase winding 7W-E and the W-phase winding 7W-F are connected in parallel.

Next, the lead wire 71U-S of the U-phase stator winding 7U and the lead wire 71W-E of the W-phase stator winding are connected, similarly, the lead wires 71U-E and 71V-S are connected, and the lead wires 71V-E and 71W-S are connected. Then, as a hexagonal connection, three connection points (a connection point between the lead wires 71U-S and 71W-E, a connection point between the lead wires 71U-E and 71V-S, and a connection point between the lead wires 71V-E and 71W-S) are connected to the rectifier 20. The above-described connection is equivalent to a delta connection of three-phase windings in terms of the configuration and is a form of a stator winding in which a toroid coil 76 having a phase difference of an electrical angle of 30 degrees is present inside the stator windings of each phase.

In addition, as illustrated in FIG. 21, in the U-phase stator winding 7U, the U-phase windings 7U-E and 7U-F are connected in parallel, and, in the V-phase stator winding 7V, the V-phase windings 7V-E and 7V-F are connected in parallel, and, in the W-phase stator winding 7W, the W-phase windings 7W-E and 7W-F are connected in parallel.

Next, the lead wire 71U-E of the U-phase stator winding 7U, the lead wire 71V-E of the V-phase stator winding V7, and the lead wire 71W-E of the W-phase stator winding 7W are connected as a neutral point, and the lead wires 71U-S, 71V-S, and 71W-S are connected to the rectifier 20 so as to form a radial connection with the neutral point being used as a reference. The above-described connection is equivalent to a star connection of three-phase windings in terms of the configuration and is a form of the stator windings in which a toroid coil 76 having a phase difference of an electrical angle of 30 degrees is present inside the stator winding of each phase.

As described above, according to this embodiment, the leakage inductance is equivalent for each phase, and the inductance of each phase is equalized, whereby the power generation currents of each phase are balanced. Accordingly, a rotating electrical machine having high output and high efficiency can be acquired.

In addition, in the form in which the number of slots of phases for each pole is two, the stator windings are formed by continuously connecting toroid coils 76 of two types having a phase difference of an electrical angle of 30 degrees therebetween inside the stator windings of each phase, and accordingly, the configuration of the rectifier 20 can be achieved by a minimal number of six diodes that is equivalent to that of the three-phase windings. In addition, compared to the first and second embodiments described above, a connection is not made inside each phase, and accordingly, a configuration without welding can be achieved, whereby the productivity is high, and loss due to bonding can be reduced.

Furthermore, since a form of the stator winding in which two types of phases having a phase difference of an electrical angle of 30 degrees therebetween is included inside each phase is employed, a harmonic component can be reduced, and the magnetic exciting force can be lowered than that of an ordinary three-phase winding, whereby a low noise level is achieved. Accordingly, a rotating electric machine having high output and high efficiency can be acquired, and the productivity is superior, whereby a rotating electric machine having low noise can be realized at low cost.

In addition, in the third embodiment described above, while a case has been described as an example in which the stator windings 7 are equally divided into a winding E in which the connecting wire 75a of each phase is arranged on the coil end portion 72a side and a winding F in which the connecting wire 75b of each phase is arranged on the coil end portion 72b side, the configuration is not limited thereto, and, for example, the stator winding may be configured by only the winding E or the winding F, and, also in such a case, the same advantages as those of this embodiment can be acquired.

Furthermore, the stator has been described in which the winding pitch of the stator winding is 4/6 (an electrical angle of 120 degrees), a configuration of the stator in which the winding pitch of the stator winding is 5/6 (an electrical angle of 150 degrees) may be employed, and, in such a case, the same advantages can be acquired.

### [Fourth Embodiment]

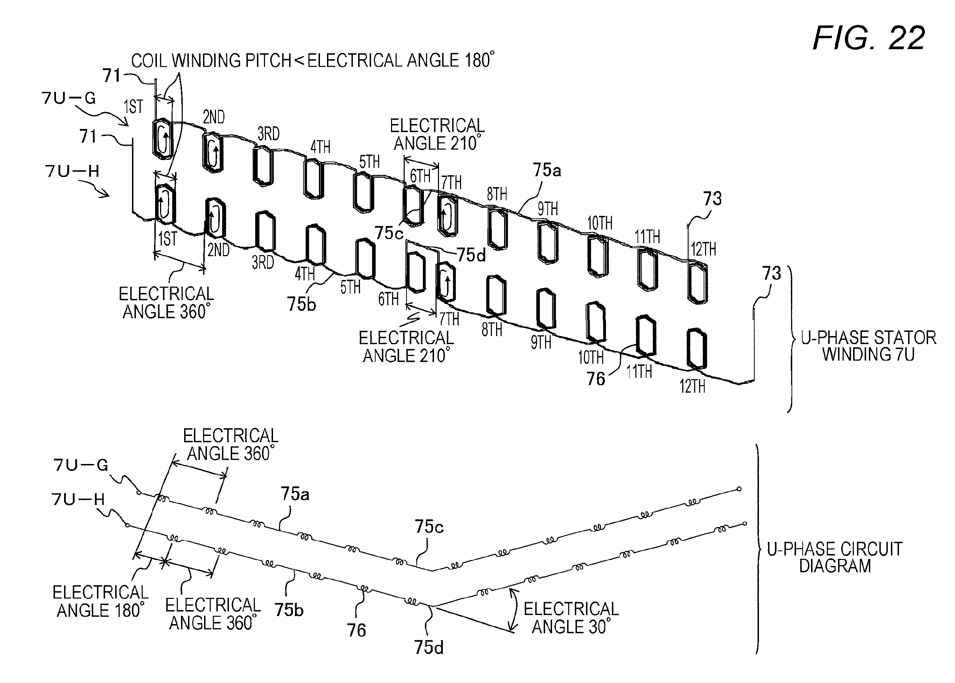

Next, the configuration of a rotating electric machine according to a fourth embodiment of the present invention will be described with reference to FIGS. 22 to 26. The whole configuration of the rotating electric machine according to this embodiment is similar to that illustrated in FIG. 1. In addition, the configuration of a stator of the rotating electric machine according to this embodiment is similar to that illustrated in FIG. 16.

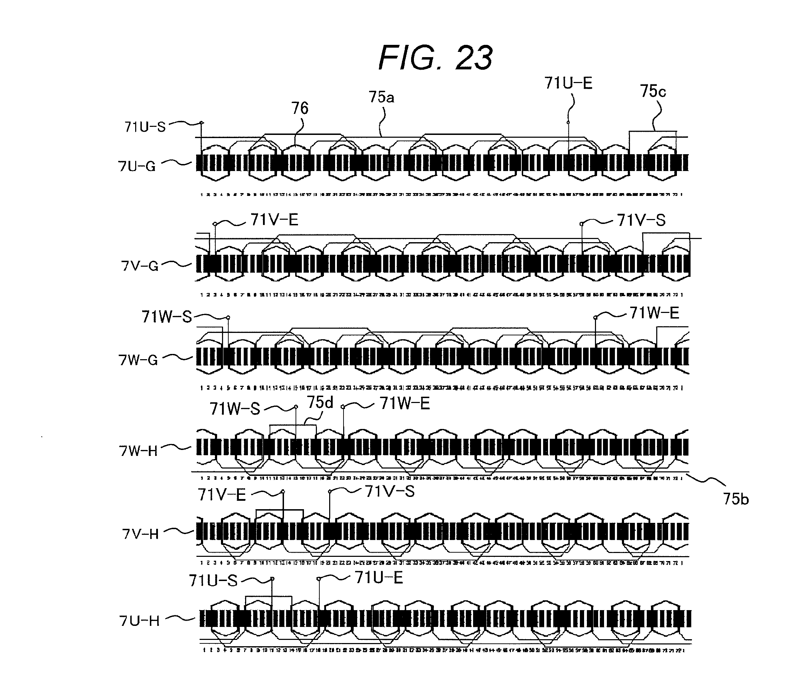

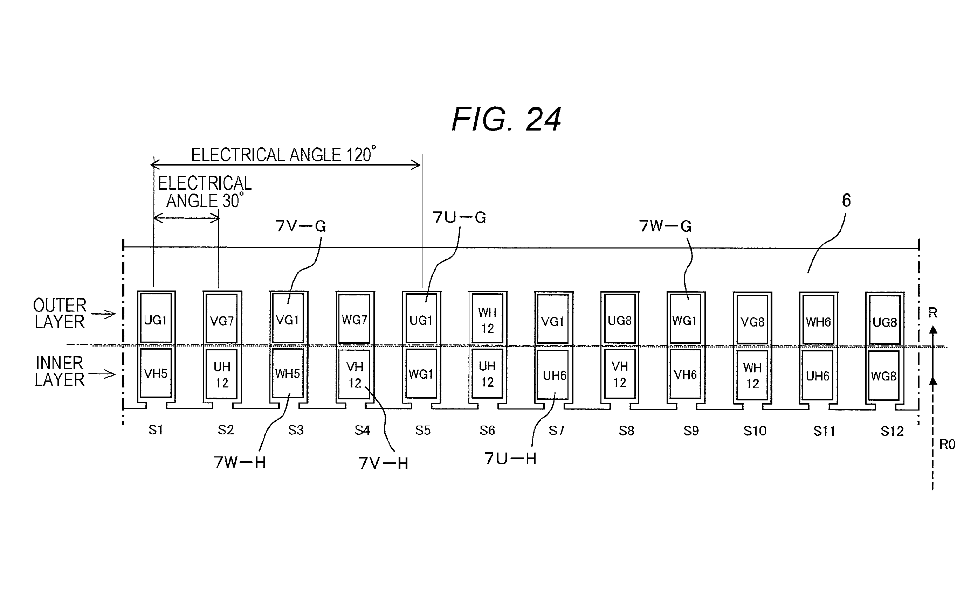

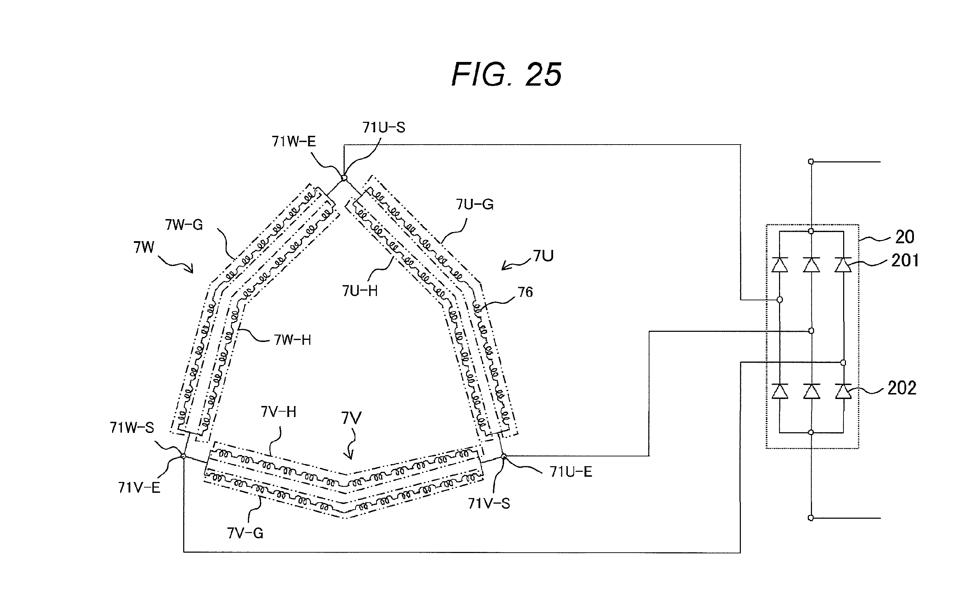

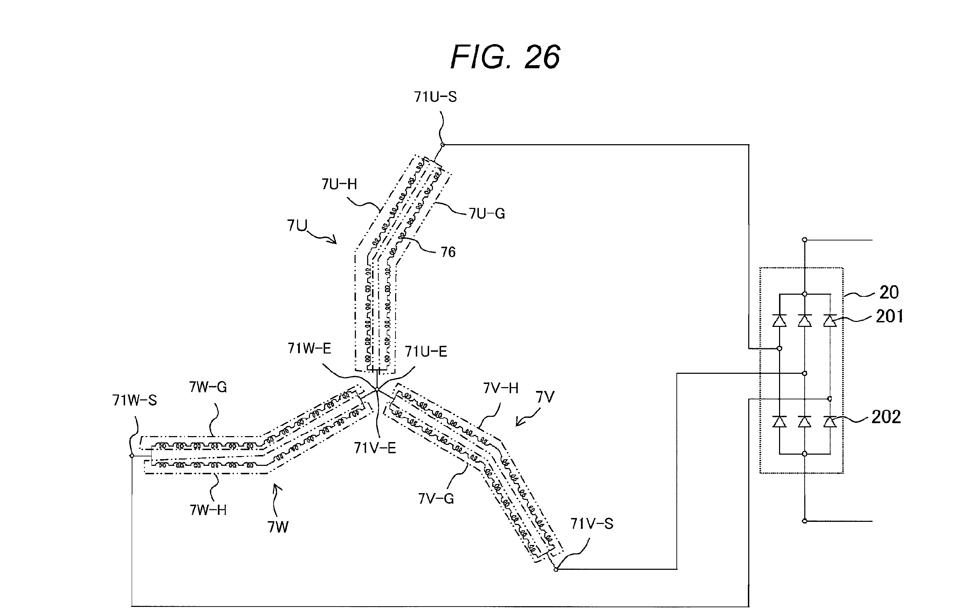

FIG. 22 illustrates a perspective view and a circuit diagram of a U-phase stator winding. FIG. 23 is a layout drawing of a stator winding of each phase viewed from the inner circumference side of a stator iron core in the stator. FIG. 24 is a layout drawing of coils of each phase inside slots of the stator winding. FIG. 25 is a diagram of a hexagonal connection of the stator windings of each phase. FIG. 26 is a diagram of a radial connection of the stator windings of each phase.

In this embodiment, the form of the stator windings 7 is changed from that of the third embodiment described above. In the above-described third embodiment, as illustrated in FIG. 18, while a form is configured in which, when the stator winding 7 is inserted into the slots, the toroid coils 76 overlap each other, in this embodiment, the arrangement of the toroid coils 76 is configured to be distributed so as not to overlap each other, and the insertion of the stator winding 7 into the slots is enhanced.

As illustrated in FIG. 22, the U-phase stator winding 7U is formed by a first U-phase winding 7U-G and a second U-phase winding 7U-H. The U-phase windings 7U-G and 7U-H are configured in a form in which a plurality of coils 76 wound and molded in a ring shape are connected by using connecting wires 75a and 75b, and, in the case of 12 pole 3-phase winding as this example, the number of toroid coils 76 is 12, and the toroid coils 76 are connected by using the connecting wire 75a or 75b and are continuously formed.

The connecting wire 75a of the U-phase winding 7U-G is arranged on the upper side illustrated in the figure, that is, the coil end portion 72a side, and the connecting wire 75b of the U-phase winding 7U-H is arranged on the lower side illustrated in the figure, in other words, the coil end portion 72b side. The circuit diagram of the U-phase winding 7U-G and the U-phase winding 7U-H illustrated on the upper side in FIG. 22 is as illustrated on the lower side in FIG. 22.

As illustrated in FIG. 22, the winding pitch of the toroid coil 76 of the U-phase stator winding 7U is less than 180 degrees, which is less than the pitch of magnetic poles, to be fractional pitch winding. The winding pitch of the toroid coil 76 of this example is a 4/6 pitch (an electrical angle of 120 degrees) corresponding to more than three slots.

The arrangement pitch of the toroid coils 76 of the U-phase winding 7U-G is an electrical angle of 360 degrees from the first to sixth toroid coils 76 from the lead wire 71 side. In order to arrange a phase difference of an electrical angle of 30 degrees between the 6th and 7th toroid coils 76, the seventh toroid coil 76 is prepared in an arrangement in which an electrical angle of 210 degrees is shifted, and the 7th to 12th toroid coils 76 are arranged at an interval of an electrical angle of 360 degrees.

The toroid coils 76 of the U-phase winding 7U-G are formed to be wound counterclockwise from the first to sixth toroid coils 76 from the lead wire 71 side, and the toroid coils are formed to be wound clockwise from the seventh to 12th toroid coils 76. Connecting wires 75a are disposed so as to intersect another adjacent connecting wire 75a on the coil end portion 72a side from the 7th to 12th toroid coils 76.

The arrangement pitch of the toroid coils 76 of the U-phase winding 7U-H is an electrical angle of 360 degrees from the first to sixth toroid coils 76 on the lead wire 71 side. In order to arrange a phase difference of an electrical angle of 30 degrees between the 6th and 7th toroid coils 76, the seventh toroid coil 76 is prepared in an arrangement in which an electrical angle of 210 degrees is shifted, and the 7th to 12th toroid coils 76 are arranged at an interval of an electrical angle of 360 degrees.

The toroid coils 76 of the U-phase winding 7U-H are formed to be wound clockwise from the first to sixth toroid coils 76 from the lead wire 71 side, and the toroid coils are formed to be wound counterclockwise from the seventh to 12th toroid coils 76. The sixth and seventh toroid coils 76 are connected by using a connecting wire 75d. Connecting wires 75b are disposed so as to intersect another adjacent connecting wire 75b on the coil end portion 72b side from the 7th to 12th toroid coils 76.

In addition, the number of slots of the stator iron core is 72. At this time, the front-side claw-shaped magnetic pole 11 of the rotator illustrated in FIG. 1 includes six claw portions, and the rear-side claw-shaped magnetic pole 12 include six claw portions. In other words, the rotator has 12 poles.

The V-phase stator winding 7V and the W-phase stator winding 7W, similarly to the U-phase stator winding 7U, are divided into V-phase windings 7V-G and 7V-H and the W-phase windings 7W-G and 7W-H.

FIG. 23 is a layout drawing of stator windings 7 of each phase viewed from the inner circumferential face of the stator iron core 6.

While FIG. 23 illustrates the coil arrangement of each phase, here, the stator winding 7 is configured by stator windings of three types of U, U, and V phases.

The stator windings 7 of each phase, as illustrated in FIG. 23, are inserted into the inside of the slots in order of the U-phase winding 7U-G, the V-phase winding 7V-G, and the W-phase winding 7W-G and, next, are inserted into the inside of the slots in order of the W-phase winding 7W-H, the V-phase winding 7V-H, and the U-phase winding 7U-H, and, as illustrated in FIG. 24, the stator windings are sequentially arranged in the inside of the slots.

The arrangement of coils inside the slots in the stator winding 7, as illustrated in FIG. 24, is an arrangement of two layer windings divided into two in the radial direction. For example, when the U-phase stator winding 7U is focused, the U-phase winding 7U-G is arranged in the outer layer, and the U-phase winding 7U-H is arranged in the inner layer. As above, the stator windings of each phase are arranged to be distributed uniformly in the outer layer and the inner layer, and, by connecting the divided stator windings 7 of each phase in series, the inductance of each phase is equalized, whereby the power generation currents are balanced.

Here, for example, a distance from the center of the rotator to the center position of the inner layer in the coil radial direction is assumed to be R0, and, with the center position of the inner layer in the coil radial direction being used as a reference, the center position of the outer layer in the coil radial direction is assumed to be R0 + R.

In the U-phase stator winding 7U, two toroid coils of the U-phase winding 7U-G are inserted into the outer layer within a range corresponding to 12 slots illustrated in FIG. 24, and accordingly, the position in the radial direction is represented as 4R0 + 4R, and, two toroid coils of the U-phase winding 7U-H are inserted into the inner layer within a range corresponding to 12 slots illustrated in FIG. 24, and accordingly, the position in the radial direction is represented as 4R0. Accordingly, as a whole, the U-phase stator winding 7U can be represented as 8R0 + 4R (= 4R0 + 4R + 4R0) by adding the U-phase winding 7U-G and the U-phase winding 7U-H.

In the V-phase stator winding 7V, two toroid coils of the V-phase winding 7V-G are inserted into the outer layer within the range corresponding to 12 slots illustrated in FIG. 24, and accordingly, the position in the radial direction is represented as 4R0 + 4R, and, two toroid coils of the V-phase winding 7V-H are inserted into the inner layer within the range corresponding to 12 slots illustrated in FIG. 24, and accordingly, the position in the radial direction is represented as 4R0. Accordingly, as a whole, the V-phase stator winding 7V can be represented as 8R0 + 4R (= 4R0 + 4R + 4R0) by adding the V-phase winding 7V-G and the V-phase winding 7V-H.

In the W-phase stator winding 7W, within the range corresponding to 12 slots illustrated in FIG. 24, one toroid coil of the W-phase winding 7W-G is inserted into the outer layer, one toroid coil thereof is inserted into the inner layer, and accordingly, the position in the radial direction is represented as 4R0 + 2R, and, within the range corresponding to 12 slots illustrated in FIG. 24, one toroid coil of the W-phase winding 7W-H is inserted into the outer layer, one toroid coil thereof is inserted into the inner layer, and accordingly, the position in the radial direction is represented as 4R0 + 2R.

Accordingly, as a whole, the W-phase stator winding 7W can be represented as 8R0 + 4R (= 4R0 + 2R + 4R0 + 2R) by adding the W-phase winding 7W-G and the W-phase winding 7W-H.

As a result of adding the radial distances of coils of each phase arranged inside the slots within the range corresponding to 12 slots, the radial distances of the stator windings of the U, V, and W phases are the same as 8R0 + 4R to have the same value.

As described above, the inductance of each one of the stator windings of the U, V, and W phases arranged in the slots is the same, whereby the unbalance of the inductance for each stator winding of each phase does not occur.

As above, by balancing the inductance of each phase, power generation currents are the same for each phase, the heating values of the stator windings and diodes are balanced, and accordingly, an increase in the temperature of the coils and the diodes can be suppressed, and an increase in the magnetic sound can be reduced by suppressing an increase in the magnetic exciting force, whereby the quality and the characteristics can be improved.

Here, the relation of connections of each phase coil will be described with reference to FIGS. 24 and 25.

In connecting the stator windings 7 of each phase, as illustrated in FIG. 25, in the U-phase stator winding 7U, the U-phase winding 7U-G and the U-phase winding 7U-H are connected in parallel, and, in the V-phase stator winding, the V-phase winding 7V-G and the V-phase winding 7V-H are connected in parallel, and, in the W-phase stator winding, the W-phase winding 7W-G and the W-phase winding 7W-H are connected in parallel.

Next, the lead wire 71U-S of the U-phase stator winding 7U and the lead wire 71W-E of the W-phase stator winding 7W are connected, similarly, the lead wires 71U-E and 71V-S are connected, and the lead wires 71V-E and 71W-S are connected. Then, as a hexagonal connection, three connection points are connected to the rectifier 20. The above-described connection is equivalent to a delta connection of three-phase windings in terms of the configuration and is a form of a stator winding in which a toroid coil 76 having a phase difference of an electrical angle of 30 degrees is present inside the stator windings of each phase.

In addition, as illustrated in FIG. 25, in the U-phase stator winding 7U, the U-phase windings 7U-G and 7U-H are connected in parallel, and, in the V-phase stator winding 7V, the V-phase windings 7V-G and 7V-H are connected in parallel, and, in the W-phase stator winding 7W, the W-phase windings 7W-G and 7W-H are connected in parallel.

Next, the lead wire 71U-E of the U-phase stator winding 7U, the lead wire 71V-E of the V-phase stator winding 7V, and the lead wire 71W-E of the W-phase stator winding 7W are connected as a neutral point, and the lead wires 71U-S, 71V-S, and 71W-S are connected to the rectifier 20 so as to form a radial connection with the neutral point being used as a reference. The above-described connection is equivalent to a star connection of three-phase windings in terms of the configuration and is a form of the stator windings in which a toroid coil 76 having a phase difference of an electrical angle of 30 degrees is present inside the stator winding of each phase.

As described above, according to this embodiment, the leakage inductance is equivalent for each phase, and the inductance of each phase is equalized, whereby the power generation currents of each phase are balanced.

In addition, in the form in which the number of slots of phases for each pole is two, the stator windings are formed by continuously connecting toroid coils 76 of two types having a phase difference of an electrical angle of 30 degrees therebetween inside each phase without any connection in the middle, and accordingly, the configuration of the rectifier 20 can be achieved by a minimal number of six diodes that is equivalent to that of the three-phase windings. In addition, compared to the first and second embodiments described above, a connection is not made inside each phase, and accordingly, a configuration without welding can be achieved, whereby the productivity is high, and loss due to bonding can be reduced.

Furthermore, in the above-described third embodiment, although there is an interference from the toroid coil 76 when a stator winding is inserted into the inside of a slot, in this embodiment, an arrangement is made in which the toroid coils 76 do not interfere, and accordingly, the insertion of the stator winding can be performed well, whereby the productivity is improved.

Furthermore, since a form of the stator winding in which two types of phases having a phase difference of an electrical angle of 30 degrees therebetween is included inside each phase is employed, a harmonic component can be reduced, and the magnetic exciting force can be lowered than that of an ordinary three-phase winding, whereby a low noise level is achieved. Accordingly, a rotating electric machine having high output and high efficiency can be acquired, and the productivity is superior, whereby a rotating electric machine having low noise can be realized at low cost.

In addition, in this embodiment, while a case has been described as an example in which the stator windings 7 are equally divided into a winding G in which the connecting wire 75a of each phase is arranged on the coil end portion 72a side and a winding H in which the connecting wire 75b of each phase is arranged on the coil end portion 72b side, the configuration is not limited thereto, and, for example, the stator winding may be configured by only the winding G or the winding H, and, also in such a case, the same advantages as those of this embodiment can be acquired.

Furthermore, the stator has been described in which the winding pitch of the stator winding is 4/6 (an electrical angle of 120 degrees), a configuration of the stator in which the winding pitch of the stator winding is 5/6 (an electrical angle of 150 degrees) may be employed, and, in such a case, the same advantages can be acquired.

### [Fifth Embodiment]

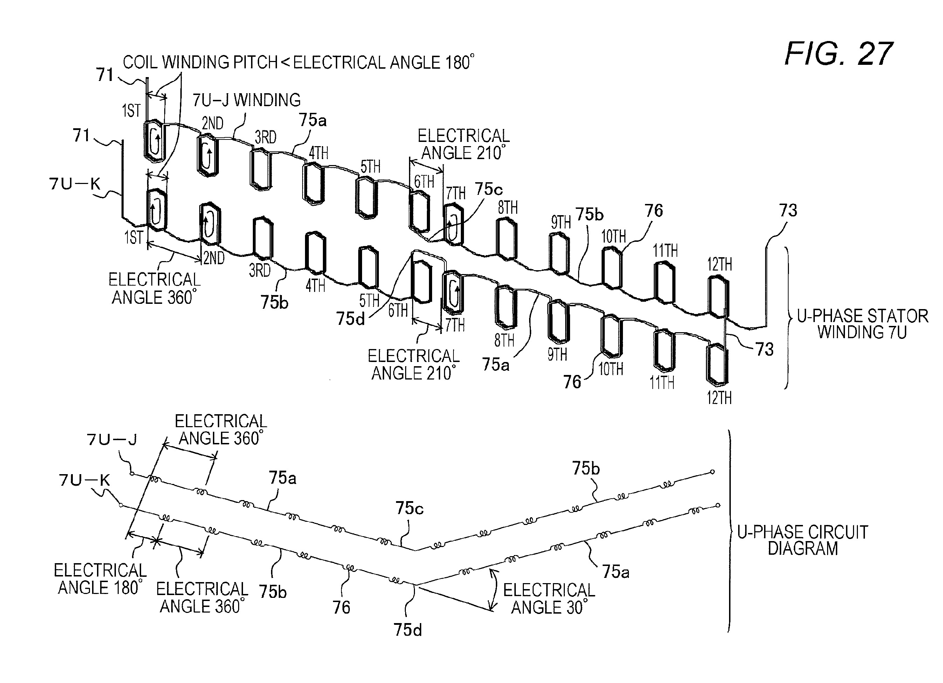

Next, the configuration of a rotating electric machine according to a fifth embodiment of the present invention will be described with reference to FIGS. 27 to 31. The whole configuration of the rotating electric machine according to this embodiment is similar to that illustrated in FIG. 1. In addition, the configuration of a stator of the rotating electric machine according to this embodiment is similar to that illustrated in FIG. 16.

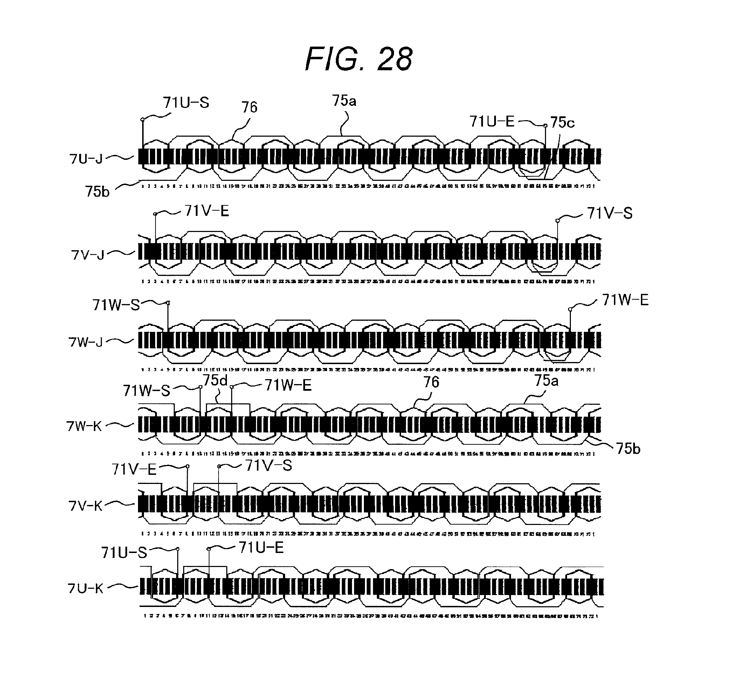

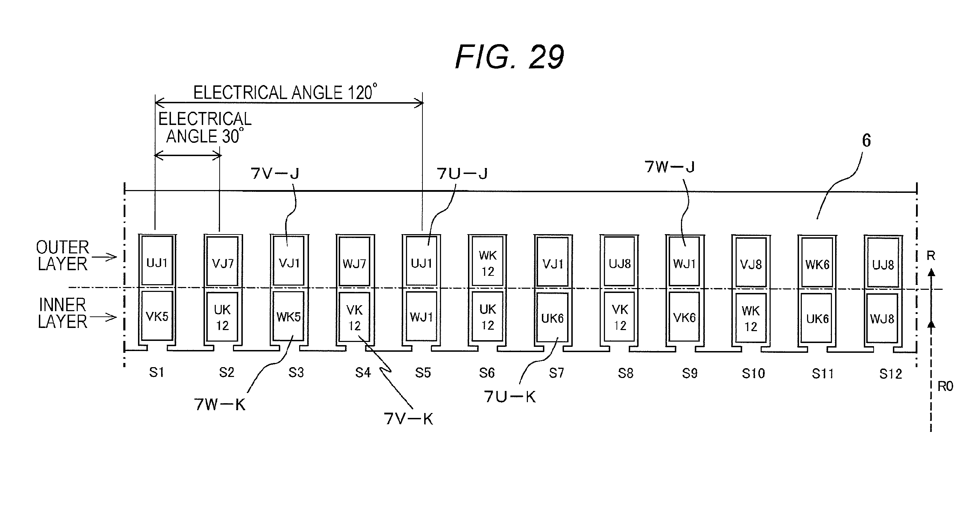

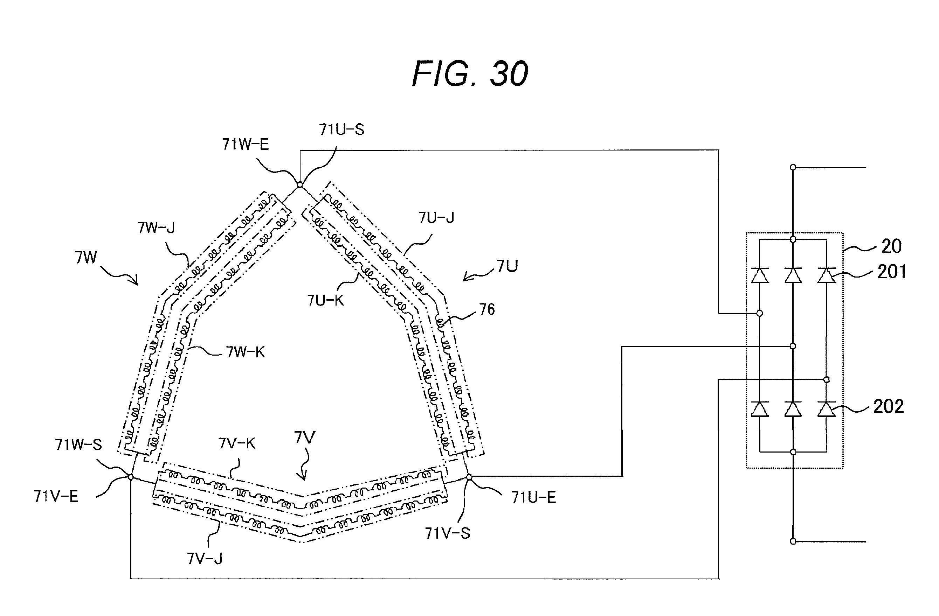

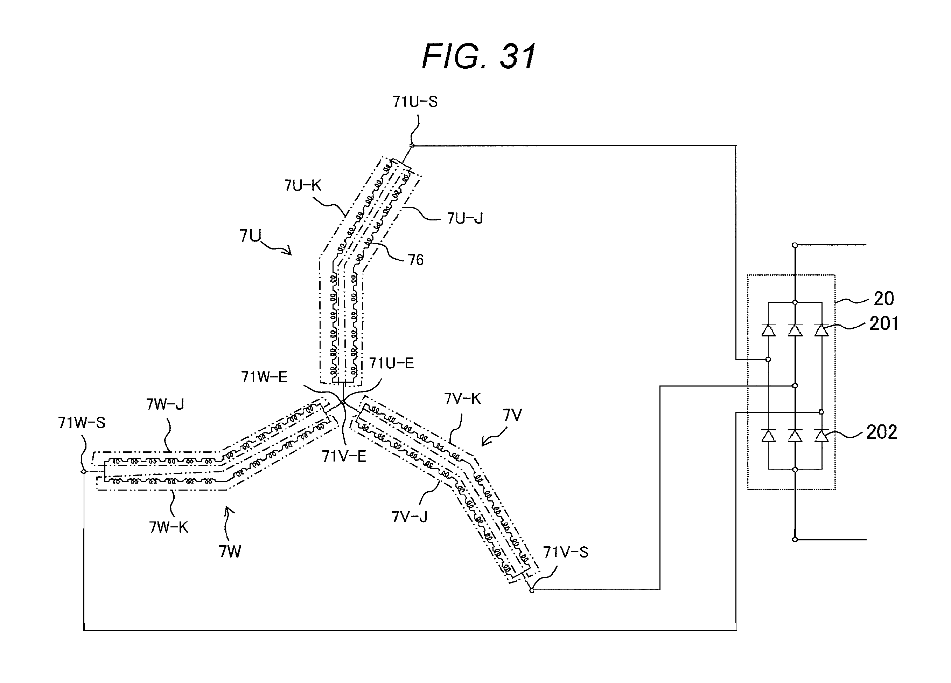

FIG. 27 illustrates a perspective view and a circuit diagram of a U-phase stator winding. FIG. 28 is a layout drawing of a stator winding of each phase viewed from the inner circumference side of a stator iron core in the stator. FIG. 29 is a layout drawing of coils of each phase inside slots of the stator winding. FIG. 30 is a diagram of a hexagonal connection of the stator windings of each phase. FIG. 31 is a diagram of a radial connection of the stator windings of each phase.

In this embodiment, the form of the stator windings is changed from that of the fourth embodiment described above, and it is avoided that the 7th to 12th connecting wires 75 of the stator winding intersect each other, unlike the fourth embodiment, and the entire length of the connecting wire 75 is decreased.

As illustrated in FIG. 27, the U-phase stator winding 7U is formed by a first U-phase winding 7U-J and a second U-phase winding 7U-K. The U-phase windings 7U-J and 7U-K are configured in a form in which a plurality of coils 76 wound and molded in a ring shape are connected by using connecting wires 75a and 75b, and, in the case of 12 pole 3-phase winding as this example, the number of toroid coils 76 is 12, and the toroid coils 76 are connected by using the connecting wire 75a or 75b and are continuously formed.

The U-phase winding 7U-J has a form of the stator winding 7 in which a connecting wire 75a joining the first to sixth toroid coils 76 from the lead wire 71 side is arranged on the coil end portion 72a side, and a connecting wire 75b joining the 7th to 12th toroid coils 76 is arranged on the coil end portion 72b side.

In the U-phase winding 7U-J, the toroid coils 76 are arranged at an interval of an electrical angle of 360 degrees from the first to sixth toroid coils 76 from the lead wire 71 side, and the toroid coils 76 are connected by using the connecting wires 75a on the coil end portion 72a side. In order to arrange a phase difference of an electrical angle of 30 degrees between the 6th and 7th toroid coils 76, the seventh toroid coil 76 is prepared in an arrangement in which an electrical angle of 210 degrees is shifted and is connected using a connecting wire 75c. The 7th to 12th toroid coils 76 are arranged at an interval of an electrical angle of 360 degrees, and the toroid coils 76 are connected by using the connecting wires 75b on the coil end portion 72b side.

The toroid coils 76 of the U-phase winding 7U-J are formed to be wound counterclockwise from the first to sixth toroid coils 76, and the toroid coils are formed to be wound clockwise from the 7th to 12th toroid coils 76.

The U-phase winding 7U-K has a form of the stator winding 7 in which the first to sixth toroid coils 76 from the lead wire 71 side are connected by using the connecting wires 75b on the coil end portion 72b side, and the 7th to 12th toroid coils 76 are connected by using the connecting wires 75a on the coil end portion 72a side.

In the U-phase winding 7U-K, the toroid coils 76 are arranged at an interval of an electrical angle of 360 degrees from the first to sixth toroid coils 76 from the lead wire 71 side, and the toroid coils 76 are connected by using the connecting wires 75b on the coil end portion 72b side. In order to arrange a phase difference of an electrical angle of 30 degrees between the 6th and 7th toroid coils 76, the seventh toroid coil 76 is prepared in an arrangement in which an electrical angle of 210 degrees is shifted and is connected using a connecting wire 75d. The 7th to 12th toroid coils 76 are arranged at an interval of an electrical angle of 360 degrees, and the toroid coils 76 are connected by using the connecting wires 75a on the coil end portion 72a side.

The toroid coils 76 of the U-phase winding 7U-K are formed to be wound clockwise from the first to sixth toroid coils 76, and the toroid coils are formed to be wound counterclockwise from the 7th to 12th toroid coils 76.

In addition, the number of slots of the stator iron core is 72. At this time, the front-side claw-shaped magnetic pole 11 of the rotator illustrated in FIG. 1 includes six claw portions, and the rear-side claw-shaped magnetic pole 12 also includes six claw portions. In other words, the rotator has 12 poles.

As illustrated in FIG. 27, the winding pitch of the toroid coil 76 of the U-phase stator winding 7U is less than an electrical angle of 180 degrees, which is less than the pitch of magnetic poles, to be fractional pitch winding. The winding pitch of the toroid coil 76 illustrated in this example is a 4/6 pitch (an electrical angle of 120 degrees) corresponding to more than three slots. The V-phase stator winding 7V and the W-phase stator winding 7W, similarly to the U-phase stator winding 7U, are divided into V-phase windings 7V-J and 7V-K and W-phase windings 7W-J and 7W-K.

FIG. 28 is a layout drawing of stator windings 7 of each phase viewed from the inner circumferential face of the stator iron core 6.

While FIG. 28 illustrates the coil arrangement of each phase, here, the stator winding 7 is configured by stator windings of three types of U, U, and V phases.

The stator windings 7 of each phase, as illustrated in FIG. 28, are inserted into the inside of the slots in order of the U-phase winding 7U-J, the V-phase winding 7V-J, and the W-phase winding 7W-J and, next, are inserted into the inside of the slots in order of the W-phase winding 7W-K, the V-phase winding 7V-K, and the U-phase winding 7U-K, and, as illustrated in FIG. 29, the stator windings are sequentially inserted into the inside of the slots.

The arrangement of coils inside the slots in the stator winding 7, as illustrated in FIG. 29, is an arrangement of two layer windings divided into two in the radial direction. For example, when the U-phase stator winding 7U is focused, the U-phase winding 7U-J is arranged in the outer layer, and the U-phase winding 7U-K is arranged in the inner layer. As above, the stator windings of each phase are arranged to be distributed uniformly in the outer layer and the inner layer, and, by connecting the divided stator windings 7 of each phase in series, the inductance of each phase is equalized, whereby the power generation currents are balanced.

Here, for example, a distance from the center of the rotator to the center position of the inner layer in the coil radial direction is assumed to be R0, and, with the center position of the inner layer in the coil radial direction being used as a reference, the center position of the outer layer in the coil radial direction is assumed to be R0 + R.

In the U-phase stator winding 7U, two toroid coils of the U-phase winding 7U-J are inserted into the outer layer within a range corresponding to 12 slots illustrated in FIG. 29, and accordingly, the position in the radial direction is represented as 4R0 + 4R, and, two toroid coils of the U-phase winding 7U-K are inserted into the inner layer within the range corresponding to 12 slots illustrated in FIG. 29, and accordingly, the position in the radial direction is represented as 4R0. Accordingly, as a whole, the U-phase stator winding 7U can be represented as 8R0 + 4R (= 4R0 + 4R + 4R0) by adding the U-phase winding 7U-J and the U-phase winding 7U-K.

In the V-phase stator winding 7V, two toroid coils of the V-phase winding 7V-J are inserted into the outer layer within the range corresponding to 12 slots illustrated in FIG. 29, and accordingly, the position in the radial direction is represented as 4R0 + 4R, and, two toroid coils of the V-phase winding 7V-K are inserted into the inner layer within the range corresponding to 12 slots illustrated in FIG. 29, and accordingly, the position in the radial direction is represented as 4R0. Accordingly, as a whole, the V-phase stator winding 7V can be represented as 8R0 + 4R (= 4R0 + 4R + 4R0) by adding the V-phase winding 7V-J and the V-phase winding 7V-K.

In the W-phase stator winding 7W, within the range corresponding to 12 slots illustrated in FIG. 29, one toroid coil of the W-phase winding 7W-J is inserted into the outer layer, one toroid coil thereof is inserted into the inner layer, and accordingly, the position in the radial direction is represented as 4R0 + 2R. Within the range corresponding to 12 slots illustrated in FIG. 29, one toroid coil of the W-phase winding 7W-K is inserted into the outer layer, one toroid coil thereof is inserted into the inner layer, and accordingly, the position in the radial direction is represented as 4R0 + 2R.

Accordingly, as a whole, the W-phase stator winding 7W can be represented as 8R0 + 4R (= 4R0 + 2R + 4R0 +2R) by adding the W-phase winding 7W-J and the W-phase winding 7W-K.

As a result of adding the radial distances of coils of each phase arranged inside the slots within the range corresponding to 12 slots, the radial distances of the stator windings of the U, V, and W phases are the same as 8R0 + 4R to have the same value.

As described above, the inductance of each one of the stator windings of the U, V, and W phases arranged in the slots is the same.

Here, the relation of connections of each phase coil will be described with reference to FIGS. 30 and 31.

In connecting the stator windings 7 of each phase, as illustrated in FIG. 30, in the U-phase stator winding 7U, the U-phase winding 7U-J and the U-phase winding 7U-K are connected in parallel, and, in the V-phase stator winding 7V, the V-phase winding 7V-J and the V-phase winding 7V-K are connected in parallel, and, in the V-phase stator winding 7V, the W-phase winding 7W-J and the W-phase winding 7W-K are connected in parallel.

Next, the lead wire 71U-S of the U-phase stator winding 7U and the lead wire 71W-E of the W-phase stator winding 7W are connected, similarly, the lead wires 71U-E and 71V-S are connected, and the lead wires 71V-E and 71W-S are connected. Then, as a hexagonal connection, three connection points are connected to the rectifier 20. The above-described connection is equivalent to a delta connection of three-phase windings in terms of the configuration and is a form of a stator winding in which a toroid coil 76 having a phase difference of an electrical angle of 30 degrees is present inside the stator windings of each phase.

In addition, as illustrated in FIG. 31, in the U-phase stator winding 7U, the U-phase windings 7U-J and 7U-K are connected in parallel, and, in the V-phase stator winding 7V, the V-phase windings 7V-J and 7V-K are connected in parallel, and, in the V-phase stator winding 7V, the W-phase windings 7W-J and 7W-K are connected in parallel.

Next, the lead wire 71U-E of the U-phase stator winding 7U, the lead wire 71V-E of the V-phase stator winding 7V, and the lead wire 71W-E of the W-phase stator winding 7W are connected as a neutral point, and the lead wires 71U-S, 71V-S, and 71W-S are connected to the rectifier 20 so as to form a radial connection with the neutral point being used as a reference. The above-described connection is equivalent to a star connection of three-phase windings in terms of the configuration and is a form of the stator windings in which a toroid coil 76 having a phase difference of an electrical angle of 30 degrees is present inside the stator winding of each phase.

As described above, according to this embodiment, the leakage inductance is equivalent for each phase, and the inductance of each phase is equalized, whereby the power generation currents of each phase are balanced.

In addition, in the form in which the number of slots of phases for each pole is two, the stator windings are formed by continuously connecting the toroid coils 76 of two types having a phase difference of an electrical angle of 30 degrees therebetween inside each phase without any connection in the middle, and accordingly, the configuration of the rectifier can be achieved by a minimal number of six diodes that is equivalent to that of the three-phase windings. In addition, compared to the first and second embodiments described above, a connection is not made inside each phase, and accordingly, a configuration without welding can be achieved, whereby the productivity is high, and loss due to bonding can be reduced.

Furthermore, in the above-described third embodiment, although there is an interference from the toroid coil 76 when a stator winding is inserted into the inside of a slot, in this embodiment, an arrangement is made in which the toroid coils 76 do not interfere, and accordingly, the insertion of the stator winding can be performed well, whereby the productivity is improved.

In addition, in the above-described fourth embodiment, by eliminating crosses (intersections) between the 7th to 12th toroid coils 76 and the connecting wires 75a and 75b and shortening the whole length of the connecting wires 75, the coil resistance value can decrease, whereby high efficiency of the rotating electric machine can be achieved.

Furthermore, since a form of the stator winding in which two types of phases having a phase difference of an electrical angle of 30 degrees therebetween is included inside each phase is employed, a harmonic component can be reduced, and the magnetic exciting force can be lowered than that of an ordinary three-phase winding, whereby a low noise level is achieved. Accordingly, a rotating electric machine having high output and high efficiency can be acquired, and the productivity is superior, whereby a rotating electric machine having low noise can be realized at low cost.

In addition, in this embodiment, while a case has been described as an example in which stator windings is equally divided into the winding J in which the connecting wire 75a joining the 1st to 6th toroid coils 76 is arranged on the coil end portion 72a side, and the connecting wire 75b joining the 7th to 12th toroid coils 76 is arranged on the coil end portion 72b side and the winding K in which the connecting wire 75b joining the 1st to 6th toroid coils 76 is arranged on the coil end portion 72b side, and the connecting wire 75a joining the 7th to 12th toroid coils 76 is arranged on the coil end portion 72a side, the embodiment is not limited thereto, and, for example, even in a case where all the connecting wires 75 are configured by only the winding J, or all the connecting wires 75 are configured by only the winding K, the same advantages can be acquired.

Furthermore, the stator has been described in which the winding pitch of the stator winding is 4/6 (an electrical angle of 120 degrees), a configuration of the stator in which the winding pitch of the stator winding is 5/6 (an electrical angle of 150 degrees) may be employed, and, in such a case, the same advantages can be acquired.

### [Sixth Embodiment]

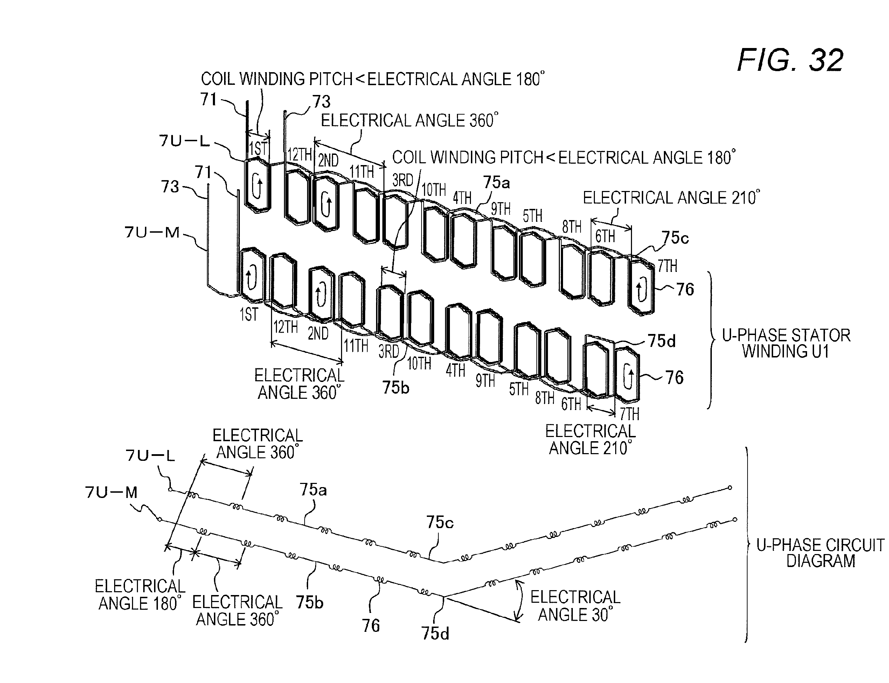

Next, the configuration of a rotating electric machine according to a sixth embodiment of the present invention will be described with reference to FIGS. 32 to 36. The whole configuration of the rotating electric machine according to this embodiment is similar to that illustrated in FIG. 1. In addition, the configuration of a stator of the rotating electric machine according to this embodiment is similar to that illustrated in FIG. 16.

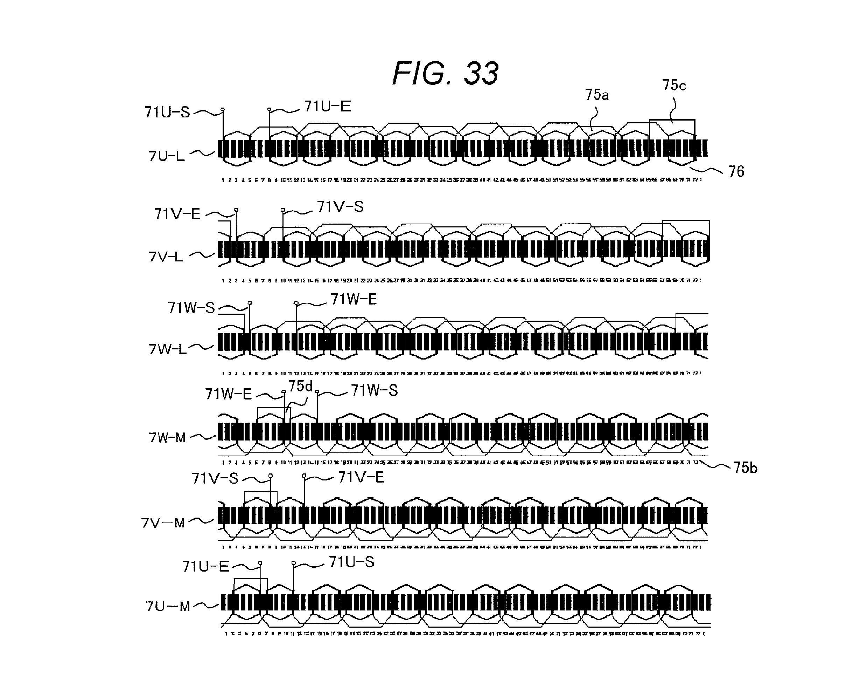

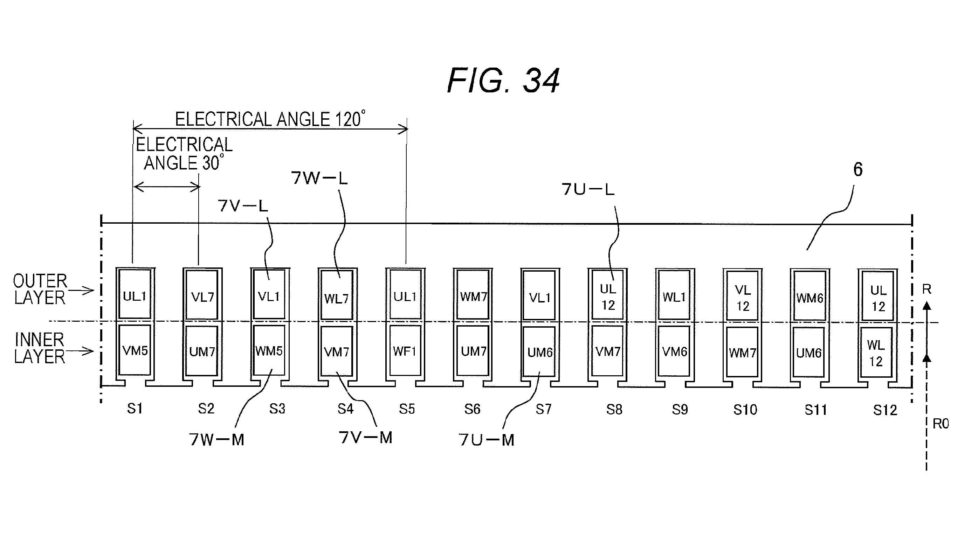

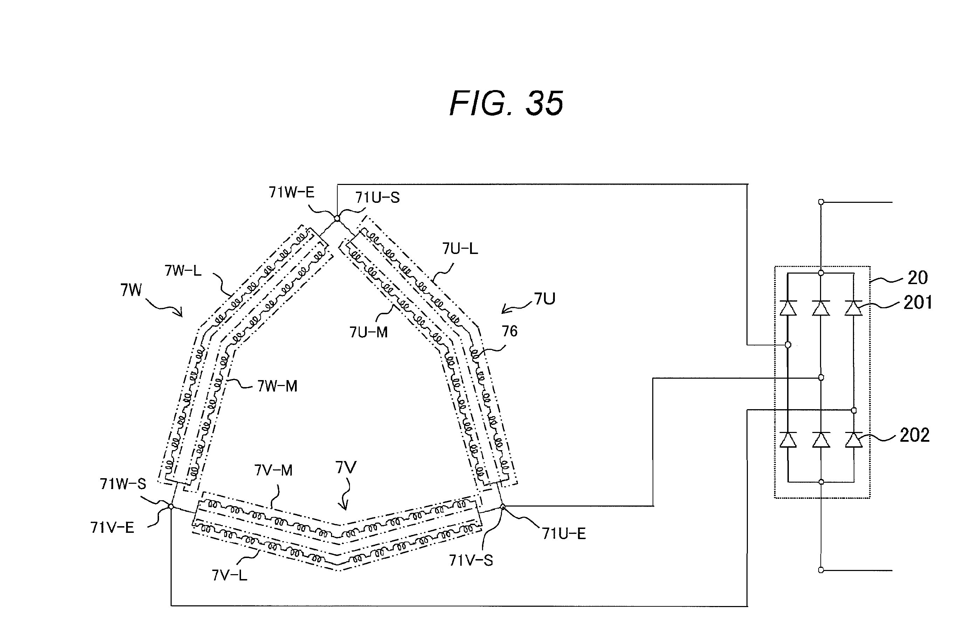

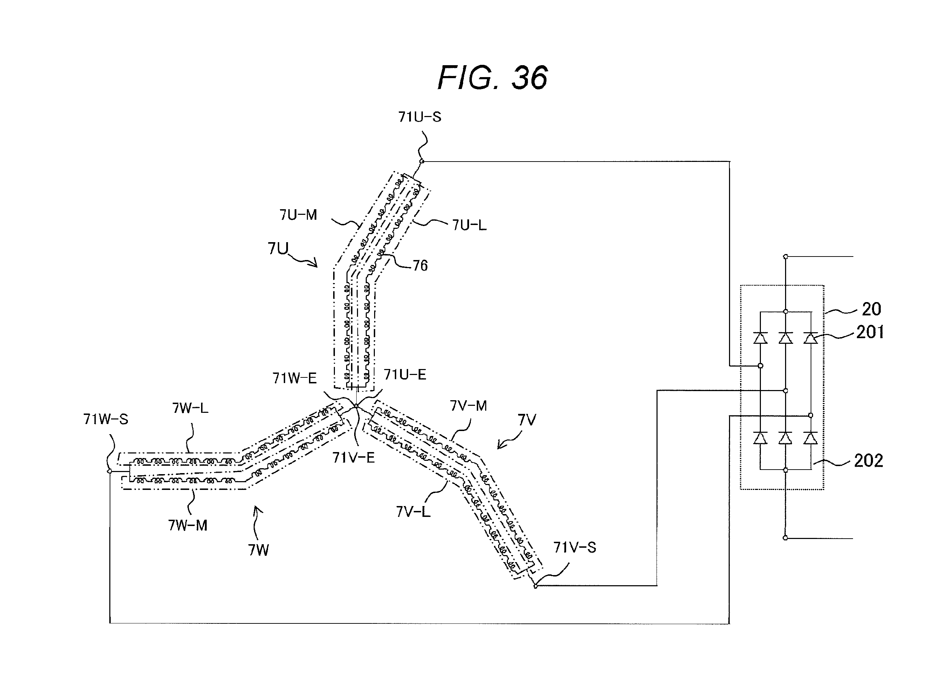

FIG. 32 illustrates a perspective view and a circuit diagram of a U-phase stator winding. FIG. 33 is a layout drawing of a stator winding of each phase viewed from the inner circumference side of a stator iron core in the stator. FIG. 34 is a layout drawing of coils of each phase inside slots of the stator winding. FIG. 35 is a diagram of a hexagonal connection of the stator windings of each phase. FIG. 36 is a diagram of a radial connection of the stator windings of each phase.

In this embodiment, the form of the stator winding is changed from that of the third to fifth embodiments, and, in order to increase the space of facilities of a winding machine using a length of two laps, after the 1st to 6th toroid coils 76 from a lead wire 71 side of the stator winding are arranged, the arrangement is reversed at the 7th toroid coil toward the lead wire 71 side, whereby a decreased space of winding facilities is achieved.

As illustrated in FIG. 32, the U-phase stator winding 7U is formed by a first U-phase winding 7U-L and a second U-phase winding 7U-M. The U-phase windings 7U-L and 7U-M are configured in a form in which a plurality of toroid coils 76 wound and molded in a ring shape are connected by using the connecting wires 75a and 75b, and, in the case of 12 pole 3-phase winding as this example, the number of toroid coils 76 is 12, and the toroid coils 76 are connected by using the connecting wire 75a or 75b and are continuously formed.

The connecting wire 75a of the U-phase winding 7U-L is arranged on the upper side illustrated in the figure, that is, the coil end portion 72a side, and the connecting wire 75b of the U-phase winding 7U-M is arranged on the lower side illustrated in the figure, in other words, the coil end portion 72b side. The circuit diagram of the U-phase winding 7U-L and the U-phase winding 7U-M illustrated on the upper side in FIG. 32 is as illustrated on the lower side in FIG. 32.

Regarding the arrangement pitch of the toroid coils 76 of the U-phase winding 7U-L, the toroid coils 76 are arranged at an interval of an electrical angle of 360 degrees from the first to sixth toroid coils 76 from the lead wire 71 side, and the toroid coils 76 are connected using a connecting wire 75a disposed on the coil end portion 72a side.

Then, the toroid coil is folded back at the 7th toroid coil 76 from the 6th toroid coil 76 to the lead wire 71 side, and, in order to arrange a phase difference of an electrical angle of 30 degrees, the 7th toroid coil 76 is prepared in an arrangement shifted by an electrical angle of 210 degrees and is connected using a connecting wire 75c.

The 7th toroid coil 76 to the 12th toroid coil 76 are sequentially arranged at an interval of an electrical angle of 360 degrees toward the lead wire 71 side, and the toroid coils 76 are connected by using a connecting wire 75a disposed on the coil end portion 72a side.

The toroid coils 76 of the U-phase winding 7U-L are formed to be wound counterclockwise from the first to sixth toroid coils 76, and the toroid coils are formed to be wound clockwise from the 7th to 12th toroid coils 76. The connecting wire 75a that connects the 1st to 6th toroid coils 76 and the connecting wire 75a that connects the 7th to 12th toroid coils 76 intersect each other on the coil end portion 72a side.

Regarding the arrangement pitch of the toroid coils 76 of the U-phase winding 7U-M, the toroid coils 76 are arranged at an interval of an electrical angle of 360 degrees for the 1st to 6th toroid coils 76 from the lead wire 71 side, and the toroid coils 76 are connected by using the connecting wire 75b disposed on the coil end portion 72b side.

Then, the toroid coil is folded back at the 7th toroid coil 76 from the 6th toroid coil 76 to the lead wire 71 side, and, in order to arrange a phase difference of an electrical angle of 30 degrees, the 7th toroid coil 76 is prepared in an arrangement shifted by an electrical angle of 210 degrees and is connected using a connecting wire 75d.

The 7th toroid coil 76 to the 12th toroid coil 76 are sequentially arranged at an interval of an electrical angle of 360 degrees toward the lead wire 71 side, and the toroid coils 76 are connected by using a connecting wire 75b disposed on the coil end portion 72b side.

The toroid coils 76 of the U-phase winding 7U-M are formed to be wound clockwise from the first to sixth toroid coils 76, and the toroid coils are formed to be wound counterclockwise from the 7th to 12th toroid coils 76. The connecting wire 75b that connects the 1st to 6th toroid coils 76 and the connecting wire 75b that connects the 7th to 12th toroid coils 76 intersect each other on the coil end portion 72b side.

In addition, the number of slots of the stator iron core is 72. At this time, the front-side claw-shaped magnetic pole 11 of the rotator illustrated in FIG. 1 includes six claw portions, and the rear-side claw-shaped magnetic pole 12 also includes six claw portions. In other words, the rotator has 12 poles.

As illustrated in FIG. 32, the winding pitch of toroid coils 76 is less than an electrical angle of 180 degrees, which is less than the pitch of magnetic poles, to be fractional pitch winding. In the case of this example, the winding pitch of the toroid coil 76 is a 4/6 pitch (an electrical angle of 120 degrees) corresponding to more than three slots. The V-phase stator winding 7V and the W-phase stator winding 7W, similarly to the U-phase stator winding 7U, are divided into V-phase windings 7V-L and 7V-M and W-phase windings 7W-L and 7W-M.

FIG. 33 is a layout drawing of stator windings 7 of each phase viewed from the inner circumferential face of the stator iron core 6.

While FIG. 33 illustrates the coil arrangement of each phase, here, the stator winding 7 is configured by stator windings of three types of U, U, and V phases.

The stator windings 7 of each phase, as illustrated in FIG. 33, are inserted into the inside of the slots in order of the U-phase winding 7U-L, the V-phase winding 7V-L, and the W-phase winding 7W-L and, next, are inserted into the inside of the slots in order of the W-phase winding 7W-M, the V-phase winding 7V-M, and the U-phase winding 7U-M, and, as illustrated in FIG. 34, the stator windings are sequentially inserted into the inside of the slots.

The arrangement of coils inside the slots in the stator winding 7, as illustrated in FIG. 34, is an arrangement of two layer windings divided into two in the radial direction. For example, when the U-phase stator winding 7U is focused, the U-phase winding 7U-L is arranged in the outer layer, and the U-phase winding 7U-M is arranged in the inner layer. As above, the stator windings of each phase are arranged to be distributed uniformly in the outer layer and the inner layer, and, by connecting the divided stator windings 7 of each phase in series, the inductance of each phase is equalized, whereby the power generation currents are balanced.

Here, for example, a distance from the center of the rotator to the center position of the inner layer in the coil radial direction is assumed to be R0, and, with the center position of the inner layer in the coil radial direction being used as a reference, the center position of the outer layer in the coil radial direction is assumed to be R0 + R.

In the U-phase stator winding 7U, two toroid coils of the U-phase winding 7U-L are inserted into the outer layer within a range corresponding to 12 slots illustrated in FIG. 34, and accordingly, the position in the radial direction is represented as 4R0 + 4R, and, two toroid coils of the U-phase winding 7U-M are inserted into the inner layer within the range corresponding to 12 slots illustrated in FIG. 34, and accordingly, the position in the radial direction is represented as 4R0. Accordingly, as a whole, the U-phase stator winding 7U can be represented as 8R0 + 4R (= 4R0 + 4R + 4R0) by adding the U-phase winding 7U-L and the U-phase winding 7U-M.

In the V-phase stator winding 7V, two toroid coils of the V-phase winding 7V-L are inserted into the outer layer within the range corresponding to 12 slots illustrated in FIG. 34, and accordingly, the position in the radial direction is represented as 4R0 + 4R, and, two toroid coils of the V-phase winding 7V-M are inserted into the inner layer within the range corresponding to 12 slots illustrated in FIG. 34, and accordingly, the position in the radial direction is represented as 4R0. Accordingly, as a whole, the V-phase stator winding 7V can be represented as 8R0 + 4R (= 4R0 + 4R + 4R0) by adding the V-phase winding 7V-L and the V-phase winding 7V-M.

In the W-phase stator winding 7W, within the range corresponding to 12 slots illustrated in FIG. 34, one toroid coil of the W-phase winding 7W-L is inserted into the outer layer, one toroid coil thereof is inserted into the inner layer, and accordingly, the position in the radial direction is represented as 4R0 + 2R, and, within the range corresponding to 12 slots illustrated in FIG. 34, one toroid coil of the W-phase winding 7W-M is inserted into the outer layer, one toroid coil thereof is inserted into the inner layer, and accordingly, the position in the radial direction is represented as 4R0 + 2R.

Accordingly, as a whole, the W-phase stator winding 7W can be represented as 8R0 + 4R (= 4R0 + 2R + 4R0 + 2R) by adding the W-phase winding 7W-L and the W-phase winding 7W-M.

As a result of adding the radial distances of coils of each phase arranged inside the slots within the range corresponding to 12 slots, the radial distances of the stator windings of the U, V, and W phases are the same as 8R0 + 4R to have the same value.

As described above, the inductance of each one of the stator windings of the U, V, and W phases arranged in the slots is the same.

Here, the relation of connections of each phase coil will be described with reference to FIGS. 35 and 36.

In connecting the stator windings 7 of each phase, as illustrated in FIG. 35, in the U-phase stator winding 7U, the U-phase winding 7U-L and the U-phase winding 7U-M are connected in parallel, and, in the V-phase stator winding 7V, the U-phase winding 7V-L and the U-phase winding 7V-M are connected in parallel, and, in the W-phase stator winding 7W, the U-phase winding 7W-L and the U-phase winding 7W-M are connected in parallel.

Next, the lead wire 71U-S of the U-phase stator winding 7U and the lead wire 71W-E of the W-phase stator winding 7W are connected, similarly, the lead wires 71U-E and 71V-S are connected, and the lead wires 71V-E and 71W-S are connected. Then, as a hexagonal connection, three connection points are connected to the rectifier 20. The above-described connection is equivalent to a delta connection of three-phase windings in terms of the configuration and is a form of a stator winding in which a toroid coil 76 having a phase difference of an electrical angle of 30 degrees is present inside the stator windings of each phase.

In addition, as illustrated in FIG. 35, in the U-phase stator winding 7U, the U-phase windings 7U-L and 7U-M are connected in parallel, and, in the V-phase stator winding 7V, the V-phase windings 7V-L and 7V-M are connected in parallel, and, in the W-phase stator winding 7W, the W-phase windings 7W-L and 7W-M are connected in parallel.

Next, the lead wire 71U-E of the U-phase stator winding 7U, the lead wire 71V-E of the V-phase stator winding 7V, and the lead wire 71W-E of the W-phase stator winding 7W are connected as a neutral point, and the lead wires 71U-S, 71V-S, and 71W-S are connected to the rectifier 20 so as to form a radial connection with the neutral point being used as a reference. The above-described connection is equivalent to a star connection of three-phase windings in terms of the configuration and is a form of the stator windings in which a toroid coil 76 having a phase difference of an electrical angle of 30 degrees is present inside the stator winding of each phase.

As described above, according to this embodiment, the leakage inductance is equivalent for each phase, and the inductance of each phase is equalized, whereby the power generation currents of each phase are balanced.

In addition, in the form in which the number of slots of phases for each pole is two, the stator windings are formed by continuously connecting the toroid coils 76 of two types having a phase shift of an electrical angle of 30 degrees therebetween inside the stator winding of each phase without any connection in the middle, and accordingly, the configuration of the rectifier 20 can be achieved by a minimal number of six diodes that is equivalent to that of the three-phase windings. In addition, compared to the first and second embodiments described above, a connection is not made inside each phase, and accordingly, a configuration without welding can be achieved, whereby the productivity is high, and loss due to bonding can be reduced.

Furthermore, in the above-described third embodiment, although there is an interference from the toroid coil 76 when a stator winding is inserted into the inside of a slot, in this embodiment, an arrangement is made in which the toroid coils 76 do not interfere, and accordingly, the insertion of the stator winding can be performed well, whereby the productivity is improved.

In addition, the length of the stator winding 7 is a half of that of the third to fifth embodiments described above, whereby the space of facilities of the winding machine is small.

Furthermore, since a form of the stator winding in which two types of phases having a phase difference of an electrical angle of 30 degrees therebetween is included inside each phase is employed, a harmonic component can be reduced, and the magnetic exciting force can be lowered than that of an ordinary three-phase winding, whereby a low noise level is achieved. Accordingly, a rotating electric machine having high output and high efficiency can be acquired, and the productivity is superior, whereby a rotating electric machine having low noise can be realized at low cost.

In addition, in this embodiment, while a case has been described as an example in which the stator windings 7 are equally divided into a winding L in which the connecting wire 75a of each phase is arranged on the coil end portion 72a side and a winding M in which the connecting wire 75b of each phase is arranged on the coil end portion 72b side, the configuration is not limited thereto, and, for example, the stator winding may be configured by only the winding L or the winding M, and, also in such a case, the same advantages as those of this embodiment can be acquired.

Furthermore, the stator has been described in which the winding pitch of the stator winding is 4/6 (an electrical angle of 120 degrees), a configuration of the stator in which the winding pitch of the stator winding is 5/6 (an electrical angle of 150 degrees) may be employed, and, in such a case, the same advantages can be acquired.

### [Seventh Embodiment]

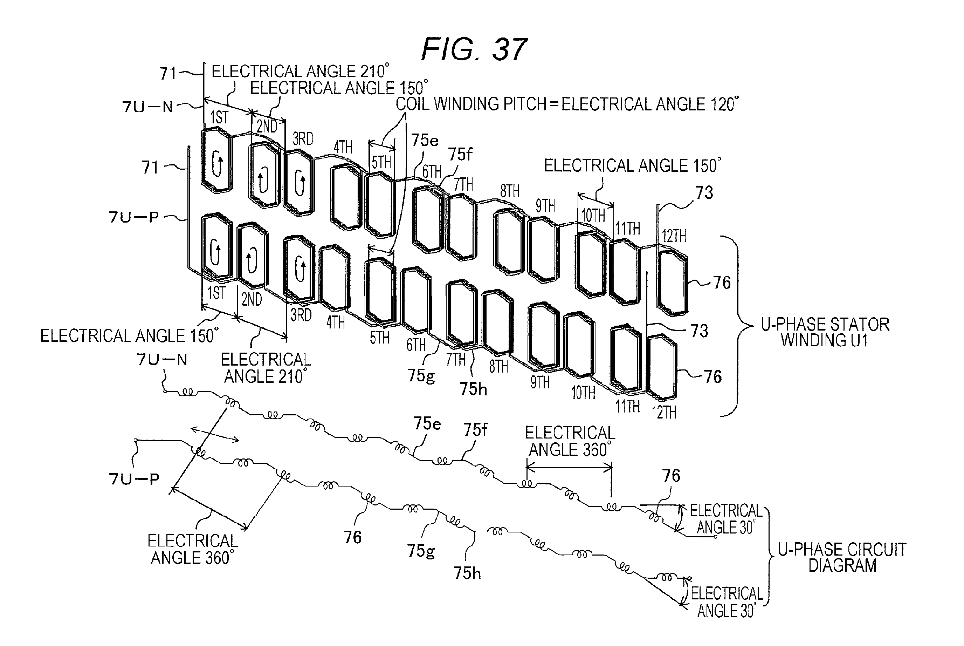

Next, the configuration of a rotating electric machine according to a seventh embodiment of the present invention will be described with reference to FIGS. 37 to 41. The whole configuration of the rotating electric machine according to this embodiment is similar to that illustrated in FIG. 1. In addition, the configuration of a stator of the rotating electric machine according to this embodiment is similar to that illustrated in FIG. 16.

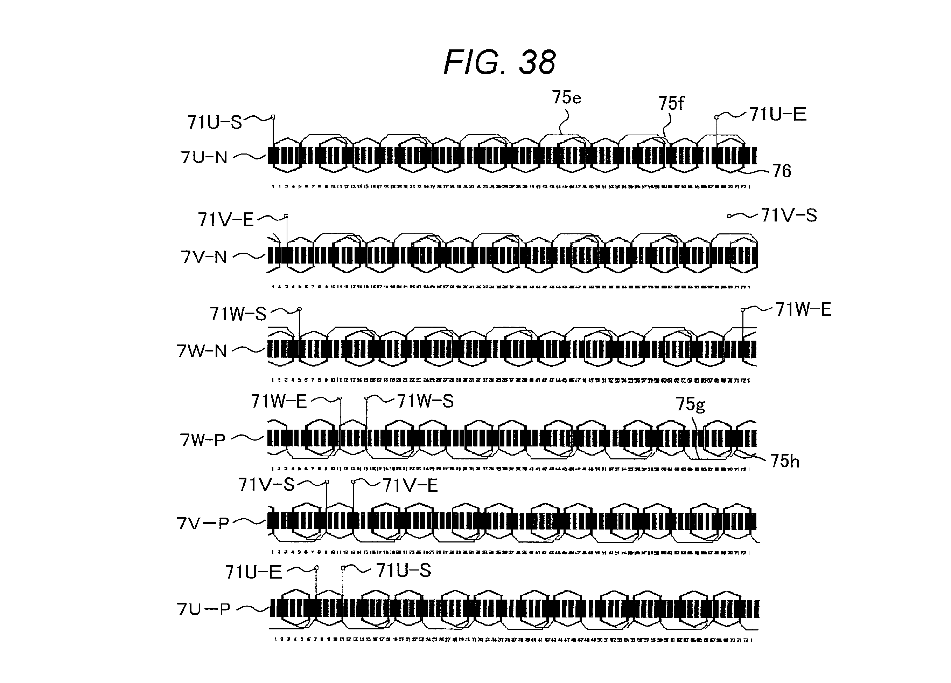

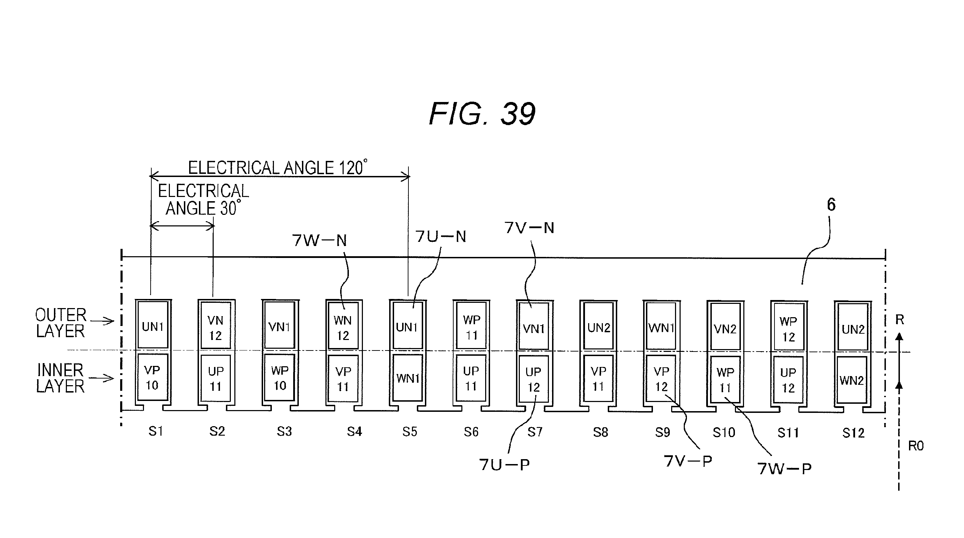

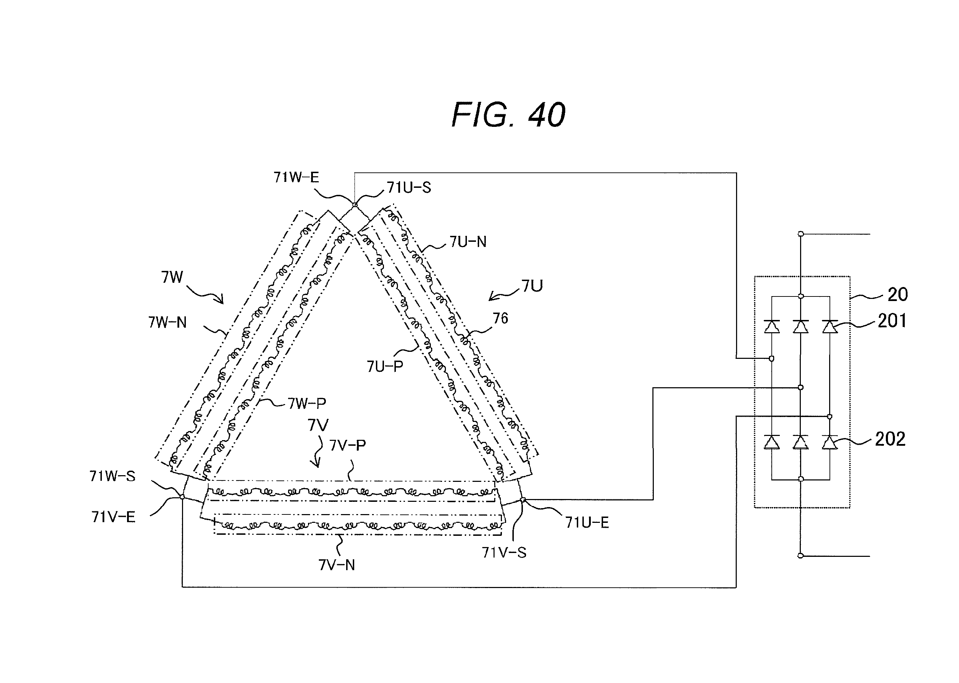

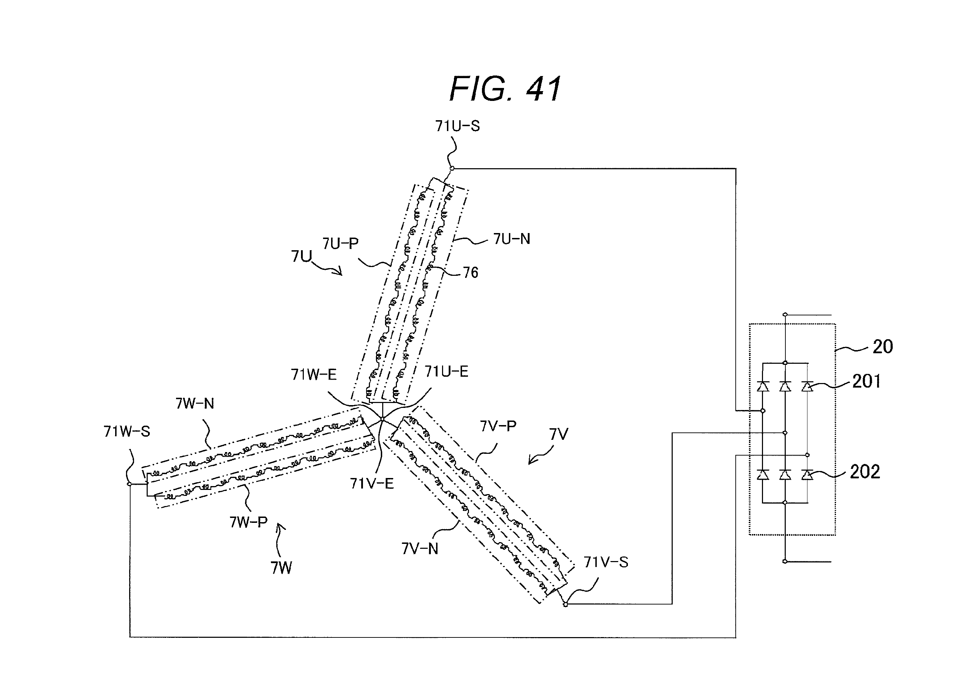

FIG. 37 illustrates a perspective view and a circuit diagram of a U-phase stator winding. FIG. 38 is a layout drawing of a stator winding of each phase viewed from the inner circumference side of a stator iron core in the stator. FIG. 39 is a layout drawing of coils of each phase inside slots of the stator winding. FIG. 40 is a diagram of a triangular connection of the stator windings of each phase. FIG. 41 is a diagram of a radial connection of the stator windings of each phase.

In this embodiment, the form of the stator windings is changed from that of the third to sixth embodiments described above, and, by shortening the length of the connecting wire 75 of the stator winding, the coil resistance value is decreased.

As illustrated in FIG. 37, the U-phase stator winding 7U is formed by a first U-phase winding 7U-N and a second U-phase winding 7U-P. The U-phase winding is configured in a form in which a plurality of toroid coils 76 of two types wound and molded in a ring shape are connected alternately by using the connecting wires 75e to 75h, and, in the case of 12 pole 3-phase winding, as in this embodiment, the number of toroid coils 76 is 12, and the toroid coils 76 are continuously formed.

In the U-phase winding 7U-N, the first and second toroid coils 76 from the lead wire side 71 side are arranged so as to shift the phase by an electrical angle of 210 degrees and are connected using a connecting wire 75e disposed on the coil end portion 72a. In addition, the second and third toroid coils 76 are arranged so as to shift the phase by an electrical angle of 150 degrees and are connected by using a connecting wire 75f disposed on the coil end portion 72a side. These processes are alternately repeated up to the 12th toroid coil, and the toroid coils 76 are alternately arranged while arranging a phase of 30 degrees therebetween.

In the U1-phase winding 7U1-N, the first toroid coil 76 is wound counterclockwise from the lead wire 71 toward the connection point 73, next, the second toroid coil is wound clockwise, and subsequently, similarly, winding is performed such that the winding directions are sequentially alternated. The connecting wire 75e and the connecting wire 75f are formed so as to intersect each other on the coil end portion 72a sides of the toroid coils 76 located at positions of the even number order from the lead wire 71.

In the U-phase winding 7U-P, the first and second toroid coils 76 from the lead wire 71 side are arranged so as to shift the phase by an electrical angle of 150 degrees and are connected using a connecting wire 75g disposed on the coil end portion 72b side. In addition, the second and third toroid coils 76 are arranged so as to shift the phase by an electrical angle of 210 degrees and are connected by using a connecting wire 75h disposed on the coil end portion 72b side. These processes are alternately repeated up to the 12th toroid coil, and the toroid coils 76 are alternately arranged while arranging a phase of 30 degrees therebetween.

In the U1-phase winding 7U1-P, the first toroid coil 76 is wound counterclockwise from the lead wire 71 toward the connection point 73, next, the second toroid coil is wound clockwise, and subsequently, similarly, winding is performed such that the winding directions are sequentially alternated. The connecting wire 75g and the connecting wire 75h are formed so as to intersect each other on the coil end portion 72b sides of the toroid coils 76 located at positions of the odd number order from the lead wire 71.

In addition, the number of slots of the stator iron core 6 is 72. At this time, the front-side claw-shaped magnetic pole 11 of the rotator illustrated in FIG. 1 includes six claw portions, and the rear-side claw-shaped magnetic pole 12 also includes six claw portions. In other words, the rotator has 12 poles.

As illustrated in FIG. 37, the winding pitch of toroid coils 76 is less than an electrical angle of 180 degrees, which is less than the pitch of magnetic poles, to be fractional pitch winding. In the case of this embodiment, the winding pitch of the toroid coil 76 is a 4/6 pitch (an electrical angle of 120 degrees) corresponding to more than three slots.

The V-phase stator winding 7V and the W-phase stator winding 7W, similarly to the U-phase stator winding 7U, are divided into V-phase windings 7V-N and 7V-P and W-phase windings 7W-N and 7W-P.

FIG. 38 is a layout drawing of stator windings 7 of each phase viewed from the inner circumferential face of the stator iron core 6.

While FIG. 38 illustrates the coil arrangement of each phase, here, the stator winding 7 is configured by stator windings of three types of U, U, and V phases.

The stator windings 7 of each phase, as illustrated in FIG. 38, are inserted into the inside of the slots in order of the U-phase winding 7U-N, the V-phase winding 7V-N, and the W-phase winding 7W-N and, next, are inserted into the inside of the slots in order of the W-phase winding 7W-P, the V-phase winding 7V-P, and the U-phase winding 7U-P, and, as illustrated in FIG. 39, the stator windings are sequentially inserted into the inside of the slots.

The arrangement of coils inside the slots in the stator winding 7, as illustrated in FIG. 39, is an arrangement of two layer windings divided into two in the radial direction. For example, when the U-phase stator winding 7U is focused, the U-phase winding 7U-N is arranged in the outer layer, and the U-phase winding 7U-P is arranged in the inner layer. As above, the stator windings of each phase are arranged to be distributed uniformly in the outer layer and the inner layer, and, by connecting the divided stator windings 7 of each phase in series, the inductance of each phase is equalized, whereby the power generation currents are balanced.

Here, for example, a distance from the center of the rotator to the center position of the inner layer in the coil radial direction is assumed to be R0, and, with the center position of the inner layer in the coil radial direction being used as a reference, the center position of the outer layer in the coil radial direction is assumed to be R0 + R.

In the U-phase stator winding 7U, two toroid coils of the U-phase winding 7U-N are inserted into the outer layer within a range corresponding to 12 slots illustrated in FIG. 39, and accordingly, the position in the radial direction is represented as 4R0 + 4R, and, two toroid coils of the U-phase winding 7U-P are inserted into the inner layer within the range corresponding to 12 slots illustrated in FIG. 39, and accordingly, the position in the radial direction is represented as 4R0. Accordingly, as a whole, the U-phase stator winding 7U can be represented as 8R0 + 4R (= 4R0 + 4R + 4R0) by adding the U-phase winding 7U-N and the U-phase winding 7U-P.

In the V-phase stator winding 7V, two toroid coils of the V-phase winding 7V-N are inserted into the outer layer within the range corresponding to 12 slots illustrated in FIG. 39, and accordingly, the position in the radial direction is represented as 4R0 + 4R, and, two toroid coils of the V-phase winding 7V-P are inserted into the inner layer within the range corresponding to 12 slots illustrated in FIG. 39, and accordingly, the position in the radial direction is represented as 4R0. Accordingly, as a whole, the V-phase stator winding 7V can be represented as 8R0 + 4R (= 4R0 + 4R + 4R0) by adding the V-phase winding 7V-N and the V-phase winding 7V-P.

In the W-phase stator winding 7W, within the range corresponding to 12 slots illustrated in FIG. 39, one toroid coil of the W-phase winding 7W-N is inserted into the outer layer, one toroid coil thereof is inserted into the inner layer, and accordingly, the position in the radial direction is represented as 4R0 + 2R, and, within the range corresponding to 12 slots illustrated in FIG. 39, one toroid coil of the W-phase winding 7W-P is inserted into the outer layer, one toroid coil thereof is inserted into the inner layer, and accordingly, the position in the radial direction is represented as 4R0 + 2R.

Accordingly, as a whole, the W-phase stator winding 7W can be represented as 8R0 + 4R (= 4R0 + 2R + 4R0 + 2R) by adding the W-phase winding 7W-N and the W-phase winding 7W-P.

As a result of adding the radial distances of coils of each phase arranged inside the slots within the range corresponding to 12 slots, the radial distances of the stator windings of the U, V, and W phases are the same as 8R0 + 4R to have the same value.

As described above, the inductance of each one of the stator windings of the U, V, and W phases arranged in the slots is the same, whereby the unbalance of the inductance for each stator winding of each phase does not occur.

As above, by balancing the inductance of each phase, power generation currents are the same for each phase, the heating values of the stator windings and diodes are balanced, and accordingly, an increase in the temperature of the coils and the diodes can be suppressed, and an increase in the magnetic sound can be reduced by suppressing an increase in the magnetic exciting force, whereby the quality and the characteristics can be improved.

Here, the relation of connections of each phase coil will be described with reference to FIGS. 40 and 41.

In connecting the stator windings 7 of each phase, as illustrated in FIG. 40, in the U-phase stator winding 7U, the U-phase winding 7U-N and the U-phase winding 7U-P are connected in parallel, and, in the V-phase stator winding 7V, the V-phase winding 7V-N and the V-phase winding 7V-P are connected in parallel, and, in the W-phase stator winding 7W, the W-phase winding 7W-N and the W-phase winding 7W-P are connected in parallel.

Next, the lead wire 71U-S of the U-phase stator winding 7U and the lead wire 71W-E of the W-phase stator winding 7W are connected, similarly, the lead wires 71U-E and 71V-S are connected, and the lead wires 71V-E and 71W-S are connected. Then, as a triangular connection, three connection points (a connection point between the lead wires 71U-S and 71W-E, a connection point between the lead wires 71U-E and 71V-S, and a connection point between the lead wires 71V-E and 71W-S) are connected to the rectifier 20. The above-described connection is equivalent to a delta connection of three-phase windings in terms of the configuration and is a form of a stator winding in which a toroid coil 76 having a phase difference of an electrical angle of 30 degrees is present inside the stator windings of each phase.

In addition, as illustrated in FIG. 40, in the U-phase stator winding 7U, the U-phase windings 7U-N and 7U-P are connected in parallel, and, in the V-phase stator winding 7V, the V-phase windings 7V-N and 7V-P are connected in parallel. In addition, in the W-phase stator winding 7W, the W-phase windings 7W-N and 7W-P are connected in parallel.

Next, the lead wire 71U-E of the U-phase stator winding 7U, the lead wire 71V-E of the V-phase stator winding 7V, and the lead wire 71W-E of the W-phase stator winding 7W are connected as a neutral point, and the lead wires 71U-S, 71V-S, and 71W-S are connected to the rectifier 20 so as to form a radial connection with the neutral point being used as a reference. The above-described connection is equivalent to a star connection of three-phase windings in terms of the configuration and is a form of the stator windings in which a toroid coil 76 having a phase difference of an electrical angle of 30 degrees is present inside the stator winding of each phase.

As described above, according to this embodiment, the leakage inductance is equivalent for each phase, and the inductance of each phase is equalized, whereby the power generation currents of each phase are balanced. Accordingly, a rotating electrical machine having high output and high efficiency can be acquired.

In addition, in the form in which the number of slots of each phase for each pole is two, the stator windings are formed by continuously connecting toroid coils 76 of two types having a phase difference of an electrical angle of 30 degrees therebetween inside the stator windings of each phase, and accordingly, the configuration of the rectifier 20 can be achieved by a minimal number of six diodes that is equivalent to that of the three-phase windings. In addition, compared to the first and second embodiments, a connection is not made inside each phase, and accordingly, a configuration without welding can be achieved, whereby the productivity is high, and loss due to bonding can be reduced.

Furthermore, in the third embodiment, although there is an interference from the toroid coil 76 when a stator winding is inserted into the inside of a slot, in this embodiment, an arrangement is made in which the toroid coils 76 do not interfere, and accordingly, the insertion of the stator winding can be performed well, whereby the productivity can be improved.

In addition, the length of the stator winding 7 is a half of that of the third to fifth embodiments described above, whereby the space of facilities of the winding machine is small. Furthermore, since the length of the lead wires 75f and 75h can be shortened to be less than that of the sixth embodiment, the coil resistance value is decreased, whereby high efficiency can be achieved.

Furthermore, since a form of the stator winding in which two types of phases having a phase difference of an electrical angle of 30 degrees therebetween is included inside each phase is employed, a harmonic component can be reduced, and the magnetic exciting force can be lowered than that of an ordinary three-phase winding, whereby a low noise level is achieved. Accordingly, a rotating electric machine having high output and high efficiency can be acquired, and the productivity is superior, whereby a rotating electric machine having low noise can be realized at low cost.

In addition, in this embodiment, while a case has been described as an example in which the stator windings 7 are equally divided into a winding N in which the connecting wires 75e and 75f of each phase are arranged on the coil end portion 72a side and a winding P in which the connecting wires 75g and 75h of each phase are arranged on the coil end portion 72b side, the configuration is not limited thereto, and, for example, all the stator windings may be configured by only the windings N or the windings P, and, also in such a case, the same advantages as those of this embodiment can be acquired.

### [Eighth Embodiment]

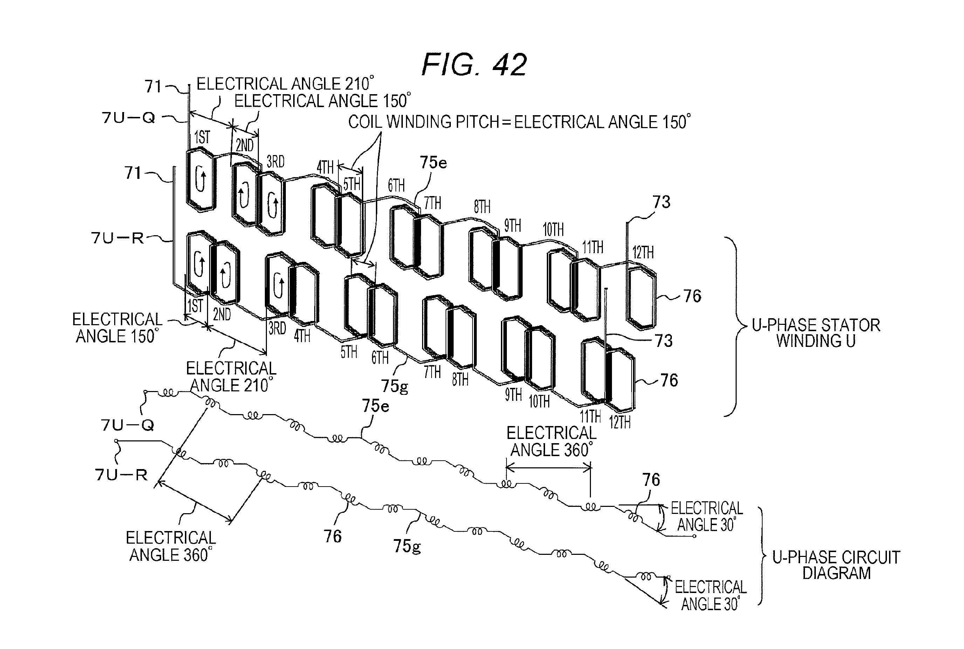

Next, the configuration of a rotating electric machine according to an eighth embodiment of the present invention will be described with reference to FIGS. 42 to 46. The whole configuration of the rotating electric machine according to this embodiment is similar to that illustrated in FIG. 1. In addition, the configuration of a stator of the rotating electric machine according to this embodiment is similar to that illustrated in FIG. 16.

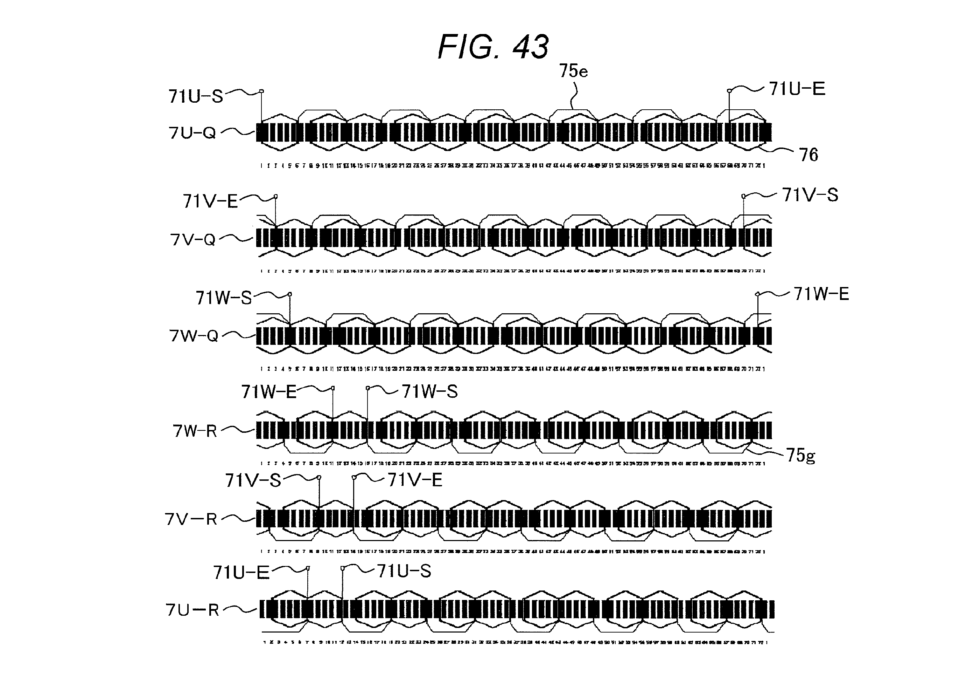

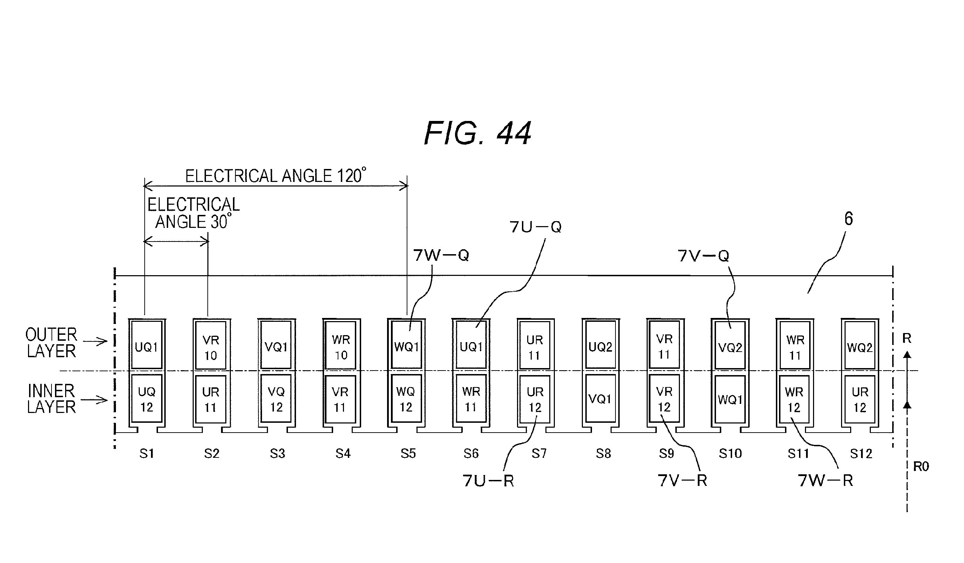

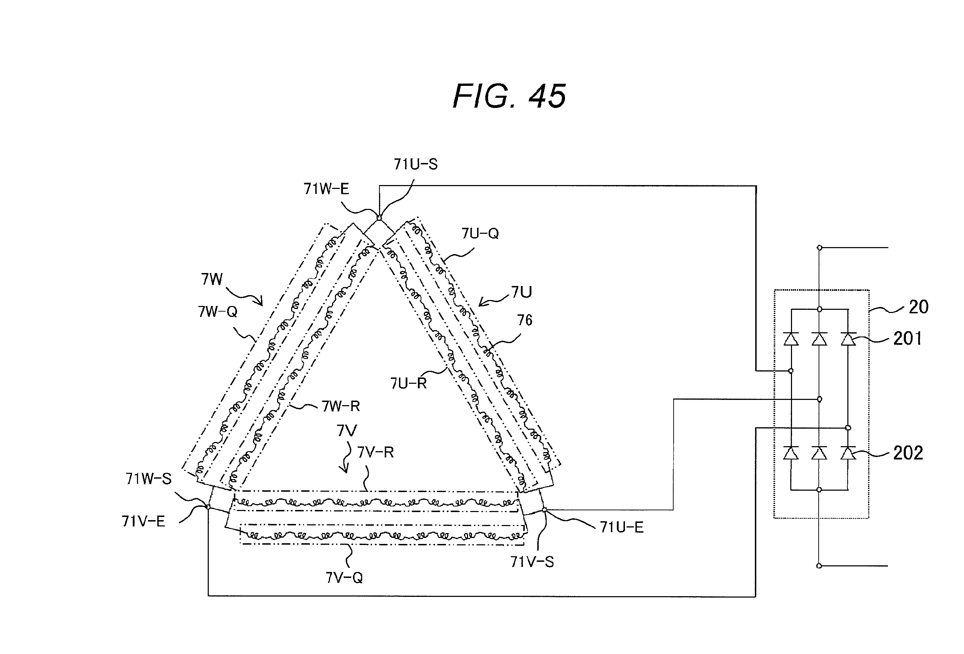

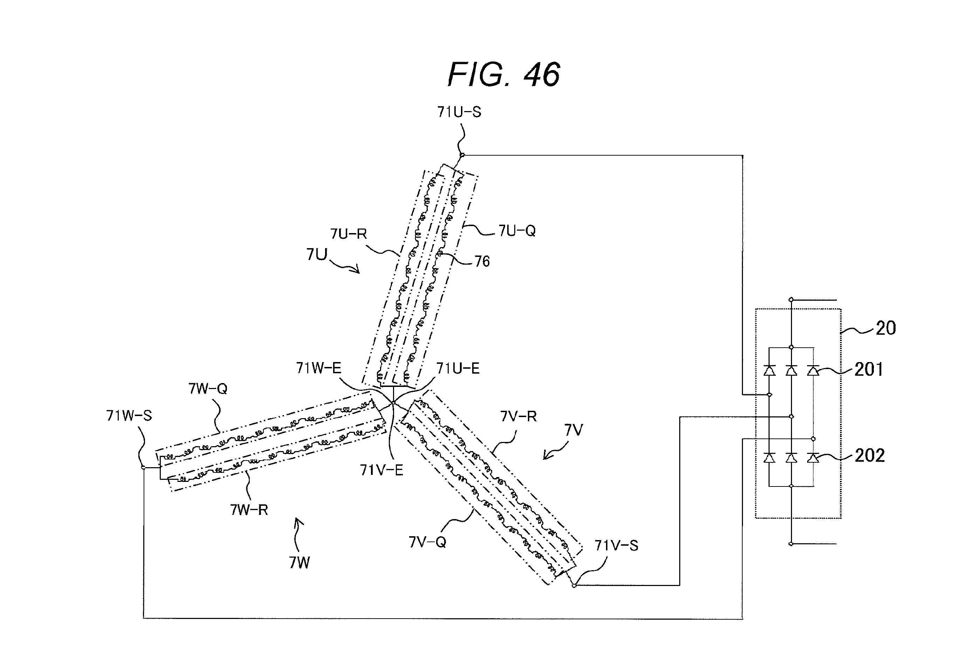

FIG. 42 illustrates a perspective view and a circuit diagram of a U-phase stator winding. FIG. 43 is a layout drawing of a stator winding of each phase viewed from the inner circumference side of a stator iron core in the stator. FIG. 44 is a layout drawing of coils of each phase inside slots of the stator winding. FIG. 45 is a diagram of a triangular connection of the stator windings of each phase. FIG. 46 is a diagram of a radial connection of the stator windings of each phase.

In this embodiment, compared to the above-described seventh embodiment, the winding pitch of toroid coils of the stator winding is enlarged from a 4/6 pitch to a 5/6 pitch, the connecting wire of the stator winding is decreased by half, and the coil resistance value is decreased.

As illustrated in FIG. 42, the U-phase winding of stator winding 7 is formed by a first U-phase winding 7U-Q and a second U-phase winding 7U-R. each one of the U-phase windings 7U-Q and 7U-R is configured in a form in which a plurality of toroid coils 76 of two types, which have a phase difference of an electrical angle of 30 degrees therebetween, wound and molded in a ring shape are connected alternately by using connecting wires 75e and 75g, and, in the case of 12 pole 6-phase winding, as in this embodiment, the number of toroid coils 76 is 12, and the toroid coils 76 are continuously formed.

In the U-phase winding 7U-Q, the first and second toroid coils 76 from the lead wire side 71 side are arranged so as to shift the phase by an electrical angle of 210 degrees and are connected using a connecting wire 75e disposed on the coil end portion 72a. In addition, the second and third toroid coils 76 are arranged so as to shift the phase by an electrical angle of 150 degrees. There is no connecting wire between the second and third toroid coils 76 and are continuously formed. These processes are alternately repeated up to the 12th toroid coil, and the toroid coils 76 are alternately arranged while arranging a phase of 30 degrees therebetween.

In the U-phase winding 7U-Q, the first toroid coil 76 is wound counterclockwise from the lead wire 71 toward the connection point 73, next, the second toroid coil is wound clockwise, and subsequently, similarly, winding is performed such that the winding directions are sequentially alternated.

In the U-phase winding 7U-R, the first and second toroid coils 76 from the lead wire side 71 side are arranged so as to shift the phase by an electrical angle of 150 degrees. There is no connecting wire between the first toroid coil 76 and the second toroid coil 76 and are continuously formed. In addition, the second and third toroid coils 76 are arranged so as to shift the phase by an electrical angle of 210 degrees and are connected using a connecting wire 75g disposed on the coil end portion 72b side. These processes are alternately repeated up to the 12th toroid coil, and the toroid coils 76 are alternately arranged while arranging a phase of 30 degrees therebetween.

In the U-phase winding 7U-R, the first toroid coil 76 is wound counterclockwise from the lead wire 71 toward the connection point 73, next, the second toroid coil is wound clockwise, and subsequently, similarly, winding is performed such that the winding directions are sequentially alternated.

In addition, the number of slots of the stator iron core is 72. At this time, the front-side claw-shaped magnetic pole 11 of the rotator illustrated in FIG. 1 includes six claw portions, and the rear-side claw-shaped magnetic pole 12 include six claw portions. In other words, the rotator has 12 poles.

As illustrated in FIG. 42, the winding pitch of the toroid coil 76 is less than 180 degrees, which is less than the pitch of magnetic poles, to be fractional pitch winding. The winding pitch of the toroid coil 76 of this embodiment is a 5/6 pitch (an electrical angle of 150 degrees) corresponding to more than four slots.

The V-phase stator winding 7V and the W-phase stator winding 7W, similarly to the U-phase stator winding 7U, are divided into V-phase windings 7V-Q and 7V-R and W-phase windings 7W-Q and 7W-R.

FIG. 43 is a layout drawing of stator windings 7 of each phase viewed from the inner circumferential face of the stator iron core 6.

While FIG. 43 illustrates the coil arrangement of each phase, here, the stator winding 7 is configured by stator windings of three types of U, U, and V phases.

The stator windings 7 of each phase, as illustrated in FIG. 43, are inserted into the inside of the slots in order of the U-phase winding 7U-Q, the V-phase winding 7V-Q, and the W-phase winding 7W-Q and, next, are inserted into the inside of the slots in order of the W-phase winding 7W-R, the V-phase winding 7V-R, and the U-phase winding 7U-R, and, as illustrated in FIG. 44, the stator windings are sequentially inserted into the inside of the slots.

The arrangement of coils inside the slots in the stator winding 7, as illustrated in FIG. 44, is an arrangement of two layer windings divided into two in the radial direction. For example, when the U-phase stator winding 7U is focused, the U-phase winding 7U-Q is arranged in the outer layer, and the U-phase winding 7U-R is arranged in the inner layer. As above, the stator windings of each phase are arranged to be distributed uniformly in the outer layer and the inner layer, and, by connecting the divided stator windings 7 of each phase in series, the inductance of each phase is equalized, whereby the power generation currents are balanced.

Here, for example, a distance from the center of the rotator to the center position of the inner layer in the coil radial direction is assumed to be R0, and, with the center position of the inner layer in the coil radial direction being used as a reference, the center position of the outer layer in the coil radial direction is assumed to be R0+R.

In the U-phase winding 7U-Q of the U-phase stator winding 7U, within a range corresponding to 12 slots illustrated in FIG. 44, a 3/2 toroid coils are inserted into the outer layer, and a 1/2 toroid coil is inserted into the inner layer, accordingly, the position in the radial direction is represented as 4R0 + 3R, and, in the U-phase winding 7U-R, within the range of 12 slots illustrated in FIG. 44, a 1/2 toroid coil is inserted into the outer layer, and a 3/2 toroid coil is inserted into the inner layer, and accordingly, the position in the radial direction is represented as 4R0 + R.

Accordingly, as a whole, the U-phase stator winding 7U can be represented as 8R0 + 4R (= 4R0 + 3R + 4R0 + R) by adding the U-phase winding 7U-Q and the U-phase winding 7U-R.

In the V-phase stator winding 7V, within the range corresponding to 12 slots illustrated in FIG. 44, one toroid coil of the V-phase winding 7V-Q is inserted into the outer layer, one toroid coil thereof is inserted into the inner layer, and accordingly, the position in the radial direction is represented as 4R0 + 2R, and, within the range corresponding to 12 slots illustrated in FIG. 44, one toroid coil of the V-phase winding 7V-R is inserted into the outer layer, one toroid coil thereof is inserted into the inner layer, and accordingly, the position in the radial direction is represented as 4R0 + 2R.

Accordingly, as a whole, the V-phase stator winding 7V can be represented as 8R0 + 4R (= 4R0 + 2R + 4R0 + 2R) by adding the V-phase winding 7V-Q and the V-phase winding 7V-R.

In the W-phase stator winding 7W, within the range corresponding to 12 slots illustrated in FIG. 44, one toroid coil of the W-phase winding 7W-Q is inserted into the outer layer, one toroid coil thereof is inserted into the inner layer, and accordingly, the position in the radial direction is represented as 4R0 + 2R, and, within the range corresponding to 12 slots illustrated in FIG. 44, one toroid coil of the W-phase winding 7W-R is inserted into the outer layer, one toroid coil thereof is inserted into the inner layer, and accordingly, the position in the radial direction is represented as 4R0 + 2R.

Accordingly, as a whole, the W-phase stator winding 7W can be represented as 8R0 + 4R (= 4R0 + 2R + 4R0 + 2R) by adding the W-phase winding 7W-Q and the W-phase winding 7W-R.

As a result of adding the radial distances of coils of each phase arranged inside the slots within the range corresponding to 12 slots, the radial distances of the stator windings of the U, V, and W phases are the same as 8R0+4R to have the same value.

As described above, the inductance of each one of the stator windings of the U, V, and W phases arranged in the slots is the same, whereby the unbalance of the inductance for each stator winding of each phase does not occur.

As above, by balancing the inductance of each phase, power generation currents are the same for each phase, the heating values of the stator windings and diodes are balanced, and accordingly, an increase in the temperature of the coils and the diodes can be suppressed, and an increase in the magnetic sound can be reduced by suppressing an increase in the magnetic exciting force, whereby the quality and the characteristics can be improved.

Here, the relation of connections of each phase coil will be described with reference to FIGS. 45 and 46.

In connecting the stator windings 7 of each phase, as illustrated in FIG. 45, in the U-phase stator winding 7U, the U-phase winding 7U-Q and the U-phase winding 7U-R are connected in parallel, and, in the V-phase stator winding 7V, the V-phase winding 7V-Q and the V-phase winding 7V-R are connected in parallel, and, in the W-phase stator winding 7W, the W-phase winding 7W-Q and the W-phase winding 7W-R are connected in parallel.

Next, the lead wire 71U-S of the U-phase stator winding 7U and the lead wire 71W-E of the W-phase stator winding 7W are connected, similarly, the lead wires 71U-E and 71V-S are connected, and the lead wires 71V-E and 71W-S are connected. Then, as a hexagonal connection, three connection points (a connection point between the lead wires 71U-S and 71W-E, a connection point between the lead wires 71U-E and 71V-S, and a connection point between the lead wires 71V-E and 71W-S) are connected to the rectifier 20.

The above-described connection is equivalent to a delta connection of three-phase windings in terms of the configuration and is a form of a stator winding in which a toroid coil 76 having a phase difference of an electrical angle of 30 degrees is present inside the stator windings of each phase.

In addition, as illustrated in FIG. 45, in the U-phase stator winding 7U, the U-phase windings 7U-Q and 7U-R are connected in parallel, and, in the V-phase stator winding 7V, the V-phase windings 7V-Q and 7V-R are connected in parallel, and, in the W-phase stator winding 7W, the W-phase windings 7W-Q and 7W-R are connected in parallel.

Next, the lead wire 71U-E of the U-phase stator winding 7U, the lead wire 71V-E of the V-phase stator winding 7V, and the lead wire 71W-E of the W-phase stator winding 7W are connected as a neutral point, and the lead wires 71U-S, 71V-S, and 71W-S are connected to the rectifier 20 so as to form a radial connection with the neutral point being used as a reference. The above-described connection is equivalent to a star connection of three-phase windings in the configuration and is a form of the stator windings in which a toroid coil 76 having a phase difference of an electrical angle of 30 degrees is present inside the stator winding of each phase.

As described above, according to this embodiment, the leakage inductance is equivalent for each phase, and the inductance of each phase is equalized, whereby the power generation currents of each phase are balanced.

In addition, in the form in which the number of slots of each phase for each pole is two, the stator windings are formed by continuously connecting toroid coils 76 of two types having a phase shift of an electrical angle of 30 degrees therebetween inside the stator windings of each phase, and accordingly, the configuration of the rectifier 20 can be achieved by a minimal number of six diodes that is equivalent to that of the three-phase windings. In addition, compared to the first and second embodiments described above, a connection is not made inside each phase, and accordingly, a configuration without welding can be achieved, whereby the productivity is high, and loss due to bonding can be reduced.

Furthermore, in the above-described third embodiment, although there is an interference from the toroid coil 76 when a stator winding is inserted into the inside of a slot, in this embodiment, an arrangement is made in which the toroid coils 76 do not interfere, and accordingly, the insertion of the stator winding can be performed well, whereby the productivity can be improved.

In addition, the length of the stator winding 7 is a half of that of the third to fifth embodiments described above, whereby the space of facilities of the winding machine is small. Furthermore, since the number of connecting wires can be configured to be a half of that of the sixth embodiment, the coil resistance value is decreased, whereby high efficiency can be achieved.

Furthermore, since a form of the stator winding in which two types of phases having a phase difference of an electrical angle of 30 degrees therebetween is included inside each phase is employed, a harmonic component can be reduced, and the magnetic exciting force can be lowered than that of an ordinary three-phase winding, whereby a low noise level is achieved. In addition, by configuring the winding pitch to be a 5/6 slot, a high winding coefficient is acquired, and accordingly, the induced voltage increases, whereby a high output can be acquired, particularly, for a low frequency. Accordingly, a rotating electric machine having high output and high efficiency is acquired, and the productivity is high, whereby the rotating electric machine having a low noise level can be realized at low cost.

In addition, in the above-described eighth embodiment, while a case has been described as an example in which the stator windings 7 are equally divided into a winding Q in which the connecting wires 75e of each phase are arranged on the coil end portion 72a side and a winding R in which the connecting wires 75g of each phase are arranged on the coil end portion 72b side, all the stator windings may be configured by only the windings Q or the windings R, and, also in such a case, the same advantages as those of this embodiment can be acquired.

### [Ninth Embodiment]

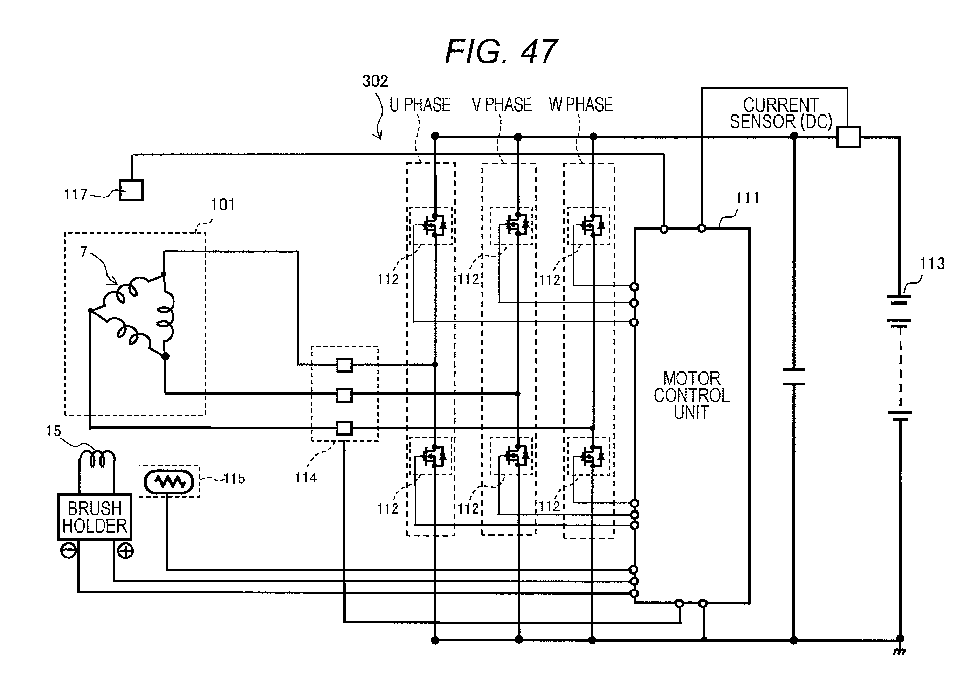

Next, the configuration of a rotating electric machine according to a ninth embodiment of the present invention will be described with reference to FIGS. 47 to 49.

In the first to eighth embodiments described above, while a vehicle AC power generator has been described as an example of the rotating electric machine, the rotating electric machine according to the present invention can be applied to a motor outputting torque, a motor/generator combining power generation and driving, or the like, and, particularly, the motor may be used as a stator of a drive motor of a hybrid vehicle or a motor for driving a motor-driven vehicle with four-wheel drive, a motor for driving a pump, or the like.

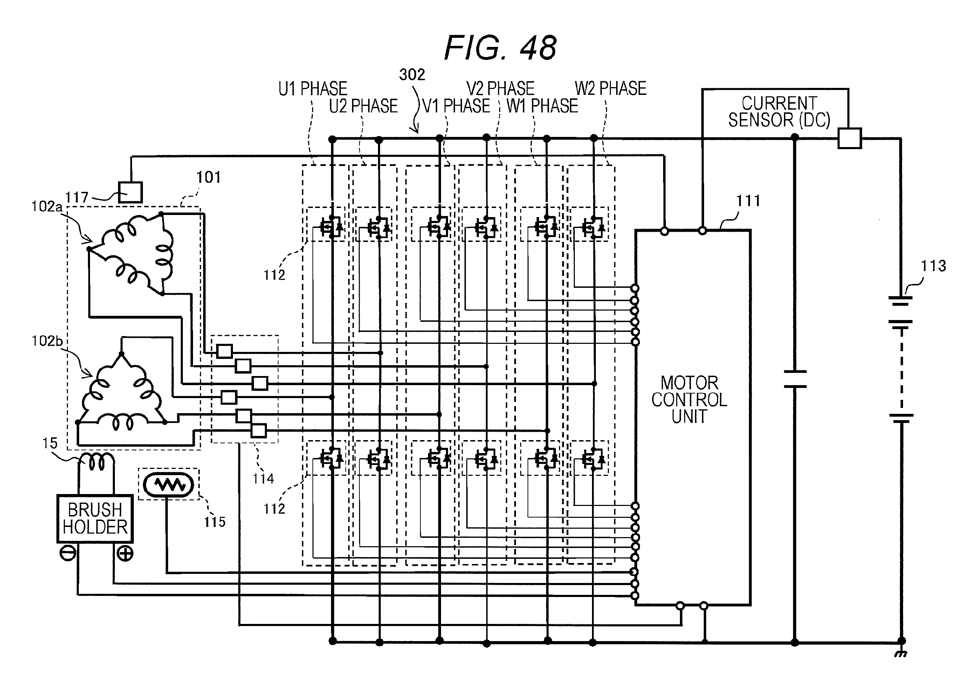

FIG. 47 is a circuit diagram that illustrates a conventional motor system of a motor in which a stator includes a single three-phase winding, FIG. 48 is a circuit diagram that illustrates a motor system of a motor in which a stator includes a first winding and a second winding, and FIG. 49 is a circuit diagram that illustrates a motor system including a stator according to the present invention.

The motor system 301 illustrated in FIG. 49 has a configuration in which a motor is driven by supplying a three-phase AC current to a stator 5 of a motor (not illustrated in the figure) from a power supply 113 by performing switching between switching devices (MOS-FETs or the like) 112 installed in each phase as inverters in accordance with a control signal transmitted from a motor control unit 111. In the motor system 301, a current sensor (AC) 114 that detects a current supplied to a stator winding 7 of the stator 5, a temperature sensor 115 that detects the temperature, and a rotation sensor 117 that detects the rotation of the motor are arranged, and signals of the sensors are configured to be supplied to the motor control unit 111.

In the case of the conventional system 302 illustrated in FIG. 47, the switching devices 112 corresponding to three phases, in other words, a total of six switching devices are necessary. As illustrated in FIG. 48, in the motor system 303 of the motor in which the stator 102 includes a first winding 102a and a second winding 102b, the switching devices 112 corresponding to six phases, in other words, a total of 12 switching devices are necessary. Accordingly, in the motor system 303 illustrated in FIG. 48, the number of the switching devices 112 doubles, the price becomes high, and the control becomes complicated.

In contrast to this, according to the motor system 301 according to this embodiment, since the stator winding 7 of the stator 5 has a configuration acquired by connecting phases U1, U2, V1, V2, W1, and W2 having mutually-different phases in series, as illustrated in FIG. 49, a total of six switching devices 112 are sufficient, and, the number of switching devices can be decreased to be a 1/2 of that of the system illustrated in FIG. 48, whereby voltage control using the motor control unit 111 can be simplified.

In addition, the numbers of the current sensors (AC) 114, the rotation sensors 117, and the temperature sensors 115 can be decreased. In addition, although there are multiple wires of the current sensors (AC) 114, the rotation sensors 117, and the temperature sensor 115, the wires are represented as one wire for the simplification in FIGS. 47 to 49.

According to the motor system 301 illustrated in FIG. 49, while the stator winding 7 of the motor includes windings of six phases having mutually-different electrical angles, the number of the output terminals of the stator winding is configured to be three, and accordingly, control can be performed by using an inverter and a driving system used for a conventional three-phase winding illustrated in FIG. 47, and a rotating electric machine having a low noise level can be realized by changing only the motor. In addition, according to this embodiment, the leakage inductance is equivalent for each phase, and the inductance of each phase is equalized, whereby the currents of each phase are balanced. Accordingly, a motor having high output and high efficiency can be acquired. In addition, by connecting phases having mutually-different electrical angles in series, a harmonic component can be decreased, and accordingly, a magnetic exciting force can be decreased to be less than that of an ordinary three-phase winding. Therefore, the generation of a magnetic sound according to the magnetic exciting force can be suppressed, and accordingly, a motor having a low noise level can be realized.

The present invention is not limited to the above-described embodiments, and the embodiments may be variously changed within a range not departing from the concept of the present invention. For example, each embodiment described above is described in detail for easy understanding of the present invention, and the invention is not necessarily limited to a case where all the described configurations are included. In addition, a part of the configuration of a specific embodiment may be replaced with the configuration of another embodiment, and the configuration of an embodiment may be added to the configuration of another embodiment. Furthermore, for a part of the configuration of each embodiment, another configuration may be added, eliminated or replaced. Reference Signs List

- 1: pulley
- 2: shaft
- 3: front bearing
- 4: rotator
- 5: stator
- 6: stator iron core
- 7: stator winding
- 71: lead wire
- 72a: coil end on lead wire side
- 72b: coil end on side opposite to lead wire side
- 73: lead wire
- 75: connecting wire
- 76: toroid coil
- 7U: U-phased stator winding
- 7V: V-phased stator winding
- 7W: W-phased stator winding
- 8: insulating sheet
- 9: slot wedge
- 10: rear bearing
- 11: front-side claw magnetic pole
- 12: rear-side claw magnetic pole
- 13: field magnetic winding
- 14: slip ring
- 15: brush
- 16: front fan
- 17: rear fan
- 18: front bracket
- 19: rear bracket
- 20: rectifier
- 201: rectifier device
- 202: rectifier device
- 21: diode connection terminal
- 22: rear cover
- 23: vehicle AC power generator

## Claims

1. A rotating electric machine comprising:
a stator; and
a rotator that is supported to be rotatable through a gap on an inner circumference side of the stator,
wherein the stator includes a ring-shaped stator iron core having a plurality of slots open toward an inner circumferential face and a stator winding wound onto the plurality of slots with a slot pitch shorter than a pitch of magnetic poles through an insulating sheet, and
wherein the stator winding is arranged to be divided into at least two for each phase inside the slots so as to balance inductance, and at least two phases stator windings having mutually-different electrical angles are connected in series.

2. The rotating electric machine according to claim 1, wherein the stator windings of each phase are equally divided and inserted in a radial direction or a rotation direction inside the slots and are arranged such that sums of distances from a center of the stator iron core are the same for each phase, and the stator windings of at least two phases having mutually-different electrical angles are equivalently connected in series.

3. The rotating electric machine according to claim 2, wherein the stator windings of at least two phases having mutually-different electricity are connected in series, and the stator windings are formed as three-phase windings that are combined such that electrical angles equally have a phase difference of 120 degrees.

4. The rotating electric machine according to claim 3, wherein the stator has a configuration in which the number of the slots of each phase for each pole is two or more, and
the stator winding includes a plurality of toroid coils that are wound with a slot pitch shorter than the pitch of the magnetic poles and are connected using a connecting wire.

5. The rotating electric machine according to claim 4, wherein the stator windings of each phase, in which an arrangement pitch of the toroid coils is arranged with a pitch that is twice the pitch of the magnetic poles, and the number of the toroid coils is equally divided to be a 1/2 of the number of the poles, are inserted into the slots which are shifted from each other by the pitch of the magnetic poles and are connected in series or in parallel so as to be combined.

6. The rotating electric machine according to claim 4,
wherein six stator windings of phases having mutually-different electrical angles are included, and
the stator windings of two phases shifted from each other by a 1/6-slot of the pitch of the magnetic poles are connected in series.

7. The rotating electric machine according to claim 4, wherein six stator windings of phases having mutually-different electrical angles are included, and
the stator windings of two phases having electrical angles shifted from each other by 30 degrees are connected in series.

8. The rotating electric machine according to claim 4, wherein the stator winding includes six stator windings of first, second, third, fourth, fifth, and sixth phases having mutually-different electrical angles,
wherein the stator winding of each phase is formed by a first stator winding and a second stator winding,
the toroid coils are wound using fractional pitch winding in which the toroid coils are inserted respectively into the slots across a plurality of teeth of the stator iron core with an interval narrower than the pitch of the magnetic poles of the rotator and are arranged with an arrangement pitch that is the same as the pitch of the magnetic poles,
in the plurality of the slots, the stator windings of four layers, which are different from each other, divided into four in a radial direction are arranged, the stator windings of the first and second phases are arranged to have a phase shifted by 1/6 of the pitch of the magnetic poles, the stator windings of the second and third phases are arranged to have a phase shifted by 1/6 of the pitch of the magnetic poles, the stator windings of the third and fourth phases are arranged to have a phase shifted by 1/6 of the pitch of the magnetic poles, the stator windings of the fourth and fifth phases are arranged to have a phase shifted by 1/6 of the pitch of the magnetic poles, the stator windings of the fifth and sixth phases are arranged to have a phase shifted by 1/6 of the pitch of the magnetic poles, and the first stator winding and the second stator winding are arranged in the same phase,
the first stator winding of the first phase and the first stator winding of the second phase are arranged in a fourth outermost layer to an innermost layer of the slots,
the first stator winding of the third phase and the first stator winding of the fourth phase are arranged in a third layer that is positioned third from the outermost layer and the innermost layer of the slots,
the first stator winding of the fifth phase and the first stator winding of the sixth phase are arranged in the third layer of the slots,
the second stator winding of the fifth phase and the second stator winding of the sixth phase are arranged in a second layer that is positioned second from the innermost layer of the slots,
the second stator winding of the third phase and the second stator winding of the fourth phase are arranged in the second layer and the innermost layer of the slots,
the second stator winding of the first phase and the second stator winding of the second phase are arranged in the innermost layer of the slots,
the stator windings of the first and second phases are connected in series,
the stator windings of the third and fourth phases are connected in series, and
the stator windings of the fifth and sixth phases are connected in series.

9. The rotating electric machine according to claim 4, wherein the stator winding includes six stator windings of first, second, third, fourth, fifth, and sixth phases having mutually-different electrical angles,
the stator winding of each phase is formed by a first stator winding and a second stator winding,
the toroid coils are wound using fractional pitch winding in which the toroid coils are inserted respectively into the slots across a plurality of teeth of the stator iron core with an interval narrower than the pitch of the magnetic poles of the rotator and are arranged with an arrangement pitch that is twice the pitch of the magnetic poles,
the first stator winding and the second stator winding are arranged in the plurality of the slots with a phase shifted by the pitch of the magnetic poles,
in the plurality of the slots, the stator windings of two layers, which are different from each other, divided into two in a radial direction are arranged, the stator windings of the first and second phases are arranged to have a phase shifted by 1/6 of the pitch of the magnetic poles, the stator windings of the second and third phases are arranged to have a phase shifted by 1/6 of the pitch of the magnetic poles, the stator windings of the third and fourth phases are arranged to have a phase shifted by 1/6 of the pitch of the magnetic poles, the stator windings of the fourth and fifth phases are arranged to have a phase shifted by 1/6 of the pitch of the magnetic poles, and the stator windings of the fifth and sixth phases are arranged to have a phase shifted by 1/6 of the pitch of the magnetic poles,
the first stator winding of the first phase, the first stator winding of the second phase, the first stator winding of the third phase, and the first stator winding of the fourth phase are arranged in an outer layer of the slots,
the first and second stator windings of the fifth phase and the first and second stator windings of the sixth phase are arranged in the outer layer and an inner layer of the slots,
the second stator winding of the first phase, the second stator winding of the second phase, the second stator winding of the third phase, and the second stator winding of the fourth phase are arranged in the inner layer of the slots,
the stator windings of the first and second phases are connected in series,
the stator windings of the third and fourth phases are connected in series, and
the stator windings of the fifth and sixth phases are connected in series.

10. The rotating electric machine according to claim 4, wherein the stator windings of each phase include stator windings of first, second, and third phases,
the stator windings of the first and second phases are arranged to have a phase shifted by 1/3 of the pitch of the magnetic poles, the stator windings of the second and third phases are arranged to have a phase shifted by 1/3 of the pitch of the magnetic poles, and the stator windings of the third and fourth phases are arranged to have a phase shifted by 1/3 of the pitch of the magnetic poles,
each one of the stator windings of the first to third phases is formed by a first stator winding and a second stator winding, and each one of the first stator winding and the second stator winding is configured by continuously connecting the plurality of toroid coils using a connecting wire,
the number of the toroid coils is equally divided into a first toroid coil group and a second toroid coil group,
in the first toroid coil group and the second toroid coil group, the toroid coils are arranged with a pitch that is twice the pitch of the magnetic poles,
the first toroid coil group and the second toroid coil group are arranged to be shifted from each other by a 13-slot pitch and are continuously connected using a connecting wire,
the toroid coils are wound using fractional pitch winding in which the toroid coils are inserted respectively into the slots across a plurality of teeth of the stator iron core with an interval narrower than the pitch of the magnetic poles of the rotator,
in the plurality of the slots, the stator windings of two layers, which are different from each other, divided into two in a radial direction are arranged, and the first stator winding and the second stator winding are arranged to have phases separated by the pitch of the magnetic poles,
the first stator winding of the first phase and the first stator winding of the second phase are arranged in an outer layer of the slots,
the first stator winding of the third phase and the second stator winding of the third phase are arranged in the outer layer and an inner layer of the slots, and the second stator winding of the first phase and the second stator winding of the second phase are arranged in the inner layer of the slots, and
the first stator winding and the second stator winding of the stator winding of each phase are connected in parallel.

11. The rotating electric machine according to claim 10, wherein the stator winding of each phase is arranged such that a 7-slot pitch is shifted between the first toroid coil group and the second toroid coil group.

12. The rotating electric machine according to claim 10, wherein, in the stator winding of each phase, a connecting wire joining the toroid coils of the first toroid coil group is arranged on one side of the stator iron core in an axial direction,
a connecting wire joining the toroid coils of the second toroid coil group is arranged on the other side of the stator iron core in the axil direction, and
the first toroid coil group and the second toroid coil group are arranged so as to be shifted from each other by a 7-slot pitch.

13. The rotating electric machine according to claim 10, wherein, in the first toroid coil group, the toroid coils are arranged inside the slots of the stator iron core with a pitch distance that is twice the pitch of the magnetic poles, and the toroid coils are continuously connected using a connecting wire, and
in the second toroid coil group, after the first toroid coil group is arranged, a first toroid coil of the second toroid coil group is arranged by being continuously shifted by a 7-slot pitch in a direction of the first toroid coil of the first toroid coil group, and, subsequently, the toroid coils are arranged with a pitch that is twice the pitch of the magnetic poles and are located between each of the toroid coils of the first toroid coil group.

14. The rotating electric machine according to claim 4, wherein the stator windings of each phase include stator windings of first, second, and third phases,
the stator windings of the first and second phases are arranged to have a phase shifted by 1/3 of the pitch of the magnetic poles,
the stator windings of the second and third phases are arranged to have a phase shifted by 1/3 of the pitch of the magnetic poles
the stator windings of the third and fourth phases are arranged to have a phase shifted by 1/3 of the pitch of the magnetic poles,
each one of the stator windings of the first to third phases is formed by a first stator winding and a second stator winding,
the toroid coils are wound using fractional pitch winding in which the toroid coils are inserted respectively into the slots across a plurality of teeth of the stator iron core with an interval narrower than the pitch of the magnetic poles of the rotator,
the first stator winding and the second stator winding are respectively configured by continuously connecting the plurality of toroid coils using a connecting wire,
in the stator winding of each phase, the toroid coils corresponding to the number of the magnetic poles are arranged by alternately repeating an arrangement in which the toroid coils are shifted by a 7-slot pitch and an arrangement in which the toroid coils are shifted by a 5-slot pitch,
in the plurality of the slots, the stator windings of two layers, which are different from each other, divided into two in a radial direction are arranged,
the first stator winding of the first phase and the first stator winding of the second phase are arranged in an outer layer of the slots, the first stator winding of the third phase and the second stator winding of the third phase are arranged in the outer layer and an inner layer of the slots, and the second stator winding of the first phase and the second stator winding of the second phase are arranged in the inner layer of the slots, and
the first stator winding and the second stator winding of each phase are connected in parallel.

15. The rotating electric machine according to claim 4, wherein the connecting wire is arranged to be equally divided into two in a coil end portion side of the toroid coils located on one side of the stator iron core in the axial direction and a coil end portion side of the toroid coils located on the other side of the stator iron core in the axial direction.

16. The rotating electric machine according to claim 4, wherein the connecting wire is arranged in either one side of the stator iron core in the axial direction or the other side of the stator iron core in the axial direction.

17. The rotating electric machine according to claim 1, wherein the toroid coils are wound with a winding pitch that is a 4/6-slot pitch of the pitch of the magnetic poles.

18. The rotating electric machine according to claim 1, wherein the toroid coils are wound with a winding pitch that is a 5/6-slot pitch of the pitch of the magnetic poles.
